# EUROPEAN PATENT SPECIFICATION

(11) **EP 3 165 742 B1**
(45) Date of publication and mention of the grant of the patent: **26.05.2021**
(21) Application number: 15814094.7
(22) Date of filing: 03.07.2015
(51) Int. Cl.: B60K 13/04

(54) **VEHICLE AND SINGLE-CYLINDER FOUR-STROKE ENGINE UNIT**
FAHRZEUG UND EINZYLINDRIGE VIERTAKTMOTOREINHEIT
VÉHICULE ET UNITÉ DE MOTEUR À QUATRE TEMPS MONOCYLINDRE

(30) Priority: 04.07.2014 JP 2014138363
(43) Date of publication of application: 10.05.2017
(73) Proprietor: Yamaha Hatsudoki Kabushiki Kaisha, Iwata-shi, Shizuoka 438-8501 (JP)
(72) Inventor: NISHIGAKI, Masato, Iwata-shi Shizuoka 438-8501 (JP); ARAKI, Yuji, Iwata-shi Shizuoka 438-8501 (JP); ISHIZAWA,Kazuhiro, Iwata-shi Shizuoka 438-8501 (JP); WAKIMURA, Makoto, Iwata-shi Shizuoka 438-8501 (JP)
(74) Representative: Zimmermann, Tankred Klaus
(86) International application number: PCT/JP2015/069359
(87) International publication number: WO 2016/002960

(56) References cited:
- WO-A1-2011/096291
- DE-A1-102006 003 116
- JP-A- 2005 163 618
- JP-A- 2006 097 605
- JP-A- 2006 152 806
- JP-A- 2006 207 571
- JP-A- 2007 187 004
- JP-A- 2008 223 644
- JP-A- 2009 073 308
- JP-A- 2009 226 988

## Description

### [Technical Field]

The present invention relates to a vehicle and a single-cylinder four-stroke engine unit.

### [Background Art]

A vehicle on which a single-cylinder four-stroke engine unit is mounted is known. The single-cylinder four-stroke engine unit includes a catalyst and an oxygen detector. The catalyst is configured to purify exhaust gas exhausted from a combustion chamber of an engine main body. The oxygen detector is configured to detect the oxygen density in the exhaust gas exhausted from the combustion chamber. Combustion control is performed based on a signal from the oxygen detector. To be more specific, a fuel injection amount, an ignition timing, and the like are controlled based on a signal from the oxygen detector. As the combustion control is performed based on a signal from the oxygen detector, purification of the exhaust gas by the catalyst can be facilitated.

In regard to the single-cylinder four-stroke engine unit, providing the oxygen detector at a cylinder head is proposed (see e.g., Patent Literature 1).

### [Citation List]

### [Patent Literatures]

[Patent Literature 1] Japanese Unexamined Patent Publication No. 2012-102662

### [Summary of Invention]

### [Technical Problem]

According to Patent Literature 1, the oxygen detector is provided at the cylinder head in order to improve the detection accuracy of the oxygen detector. The oxygen detector is able to detect the oxygen density when the temperature of a detecting element is equal to or higher than an activation temperature. The oxygen detector is provided in the cylinder head. The detecting element of the oxygen detector is therefore exposed to hot exhaust gas immediately after it is exhausted from the combustion chamber. Due to this, the oxygen detector is rapidly activated when the engine starts. The detection accuracy of the oxygen detector is therefore improved.

The detection accuracy of the oxygen detector is improved by providing the oxygen detector at the cylinder head. With this arrangement, however, the accuracy of combustion control is insufficient. To improve the accuracy of combustion control, more stable detection of the oxygen density in the exhaust gas is desired.

Further vehicles on which an engine unit is mounted are described, e.g., ir JP 2006152806 A, JP 2009 226988 A, JP 2009 073308 A,. WO 2011/096291 A1, JP 2006 207571 A1, DE 10 2006 003 116 A1, JP 2008 223644 A, and JP 2005 163618 A.

An object of the present invention is to provide a vehicle on which a single-cylinder four-stroke engine unit capable of more stably detecting the oxygen density in exhaust gas is mounted, and to provide the said single-cylinder four-stroke engine unit.

### [Solution to Problem]

As a result of analysis of exhaust gas exhausted from a combustion chamber, the following has been found. The exhaust gas immediately after being exhausted from the combustion chamber includes gaseous unburned fuel and oxygen. The exhaust gas moves along an exhaust path while the unburned fuel is being oxidized. As the oxidation advances, the oxygen density in the exhaust gas decreases.

In a multi-cylinder four-stroke engine unit, exhaust gas is exhausted from multiple combustion chambers at different timings. The flows of the exhaust gas exhausted from different combustion chambers may be mixed with one another or collide with one another in an exhaust path. On account of the mixture or collision of the exhaust gas, the flow speed of the exhaust gas is reduced. Furthermore, mixing of unburned fuel with oxygen is facilitated. As a result, the oxidation of the unburned fuel is facilitated. In the meanwhile, in a single-cylinder four-stroke engine unit, exhaust gas is intermittently exhausted from a single combustion chamber. The mixture or collision of the exhaust gas is therefore less likely to occur. For this reason, as compared to the multi-cylinder four-stroke engine unit, a conventional single-cylinder four-stroke engine unit is disadvantageous in that non-oxidized unburned fuel is likely to reach a downstream part of the exhaust path.

At a part of the exhaust path where the oxidation is less advanced, the oxygen density in the exhaust gas is unstable. The inventors of the present application have found that the oxygen density in the exhaust gas is more stably detected when the positions of a catalyst and an oxygen detector are modified.

A vehicle according to claim 1 is provided for.

The single-cylinder four-stroke engine unit mounted on the vehicle of the present teaching includes the engine main body including the crankcase member and the cylinder member, the single-combustion-chamber exhaust passage member, the single-combustion-chamber main catalyst, and the single-combustion-chamber upstream oxygen detector. One combustion chamber is formed in the cylinder member. Furthermore, the single-combustion-chamber cylinder exhaust passage member, in which the exhaust gas exhausted from the one combustion chamber, is formed in the cylinder member. The single-combustion-chamber exhaust passage member includes the discharge port facing the atmosphere. The single-combustion-chamber exhaust passage member allows the exhaust gas to flow from the downstream end of the single-combustion-chamber cylinder exhaust passage member to the discharge port. The single-combustion-chamber main catalyst is provided in the single-combustion-chamber cylinder exhaust passage member or the single-combustion-chamber exhaust passage member. Hereinafter, a front-rear direction and a left-right direction are the front-rear direction and the left-right direction of the vehicle. The crankcase member includes the crankshaft which extends in the left-right direction. The combustion chamber is provided at least partially frontward of the central axis of the crankshaft. The discharge port of the single-combustion-chamber exhaust passage member is positioned rearward of the central axis of the crankshaft. A part of the single-combustion-chamber exhaust passage member is provided to pass a location above or below the central axis of the crankshaft. At least a part of the single-combustion-chamber main catalyst is positioned frontward of the central axis of the crankshaft. The single-combustion-chamber main catalyst is therefore positioned to be relatively close to the combustion chamber.

The single-cylinder four-stroke engine unit has an exhaust path extending from one combustion chamber to the discharge port. The single-combustion-chamber main catalyst purifies the exhaust gas exhausted from the combustion chamber most in the exhaust path. The single-combustion-chamber main catalyst therefore functions as resistance against the flow of the exhaust gas. Due to this, the flow speed of the exhaust gas is reduced upstream of the single-combustion-chamber main catalyst. Therefore the flow speed of the exhaust gas is reduced at a position of the exhaust path close to the combustion chamber.

The pressure in the exhaust path pulsates due to the exhaust gas intermittently being exhausted from the combustion chamber. The pulsation of the pressure indicates that the pressure varies periodically. The single-combustion-chamber main catalyst is provided in the exhaust path. Due to this, the pressure pulsation is deflected by the single-combustion-chamber main catalyst. Therefore the exhaust gas exhausted from the combustion chamber collides with the deflected wave, upstream of the single-combustion-chamber main catalyst. This collision facilitates unburned fuel to be mixed with oxygen in the exhaust gas. As such, mixing of unburned fuel with oxygen in the exhaust gas is facilitated at a position close to the combustion chamber in the exhaust path. Furthermore, the collision further reduces the flow speed of the exhaust gas upstream of the single-combustion-chamber main catalyst. The flow speed of the exhaust gas is therefore further reduced at a position close to the combustion chamber in the exhaust path.

As described above, as compared to the multi-cylinder four-stroke engine unit, a conventional single-cylinder four-stroke engine unit is disadvantageous in that non-oxidized unburned fuel is likely to reach a downstream part of the exhaust path. In this connection, according to the present teaching, unburned fuel and oxygen in the exhaust gas are likely to be mixed with each other at a position close to the combustion chamber in the exhaust path. In addition to this, the flow speed of the exhaust gas is reduced at the position close to the combustion chamber in the exhaust path. As a result, the oxidation of the unburned fuel is facilitated at a position close to the combustion chamber in the exhaust path.

In addition to the above, the single-combustion-chamber upstream oxygen detector is provided upstream of the single-combustion-chamber main catalyst in the single-combustion-chamber cylinder exhaust passage member or the single-combustion-chamber exhaust passage member. The path length from the one combustion chamber to the single-combustion-chamber upstream oxygen detector is longer than the path length from the single-combustion-chamber upstream oxygen detector to the upstream end of the single-combustion-chamber main catalyst. The upstream end of the single-combustion-chamber main catalyst is positioned frontward of the central axis of the crankshaft. Due to this, the single-combustion-chamber upstream oxygen detector is provided to be away from the combustion chamber in the path from the combustion chamber to the single-combustion-chamber main catalyst. As described above, according to the present teaching, the oxidation of the unburned fuel is facilitated at the position close to the combustion chamber in the exhaust path. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be stably detected.

In the vehicle of the present teaching, preferably, the cylinder member has a cylinder hole in which a piston is provided, and when the vehicle is viewed in the left-right direction, the single-combustion-chamber main catalyst is provided at least partially in front in the front-rear direction of a linear line which is orthogonal to the central axis of the cylinder hole and orthogonal to the central axis of the crankshaft.

The combustion chamber is positioned at least partially frontward of the central axis of the crankshaft. The central axis of the cylinder hole extends upward, frontward and upward, or frontward from the crankshaft. It is assumed that a linear line which is orthogonal to the central axis of the cylinder hole and orthogonal to the central axis of the crankshaft is a linear line L. The linear line L extends frontward, frontward and downward, or downward from the crankshaft. When viewed in the left-right direction, the single-combustion-chamber main catalyst is provided at least partially in front of the linear line L. The single-combustion-chamber main catalyst is therefore positioned to be closer to the combustion chamber. The oxidation of the unburned fuel is therefore facilitated at a position closer to the combustion chamber in the exhaust path. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be more stably detected.

In the vehicle of the present teaching, preferably, the cylinder member has a cylinder hole in which a piston is provided so that the central axis of the cylinder hole extends in an up-down direction, and when the vehicle is viewed in the left-right direction, the single-combustion-chamber main catalyst is provided at least partially in front of the central axis of the cylinder hole in the front-rear direction.

According to this arrangement, the central axis of the cylinder hole extends in the up-down direction. When viewed in the left-right direction, the single-combustion-chamber main catalyst is provided at least partially in front of the central axis of the cylinder hole. It is therefore possible to provide the single-combustion-chamber main catalyst at a position closer to the combustion chamber. The oxidation of the unburned fuel is therefore facilitated at a position close to the combustion chamber in the exhaust path. A detection target by the single-combustion-chamber upstream oxygen detector is therefore the exhaust gas in which the oxidation has advanced. In other words, a detection target by the single-combustion-chamber upstream oxygen detector is the exhaust gas with more stable oxygen density. The oxygen density in the exhaust gas can therefore be stably detected.

In the vehicle of the present teaching, preferably, the single-combustion-chamber main catalyst is provided so that a path length from the one combustion chamber to an upstream end of the single-combustion-chamber main catalyst is shorter than a path length from a downstream end of the single-combustion-chamber main catalyst to the discharge port.

According to this arrangement, the path length from the one combustion chamber to the upstream end of the single-combustion-chamber main catalyst is shorter than the path length from the downstream end of the single-combustion-chamber main catalyst to the discharge port. It is therefore possible to provide the single-combustion-chamber main catalyst at a position closer to the combustion chamber. The oxidation of the unburned fuel is therefore facilitated at a position closer to the combustion chamber in the exhaust path. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be more stably detected.

In the vehicle of the present teaching, preferably, the single-combustion-chamber exhaust passage member includes an exhaust pipe which is connected with a downstream end of the single-combustion-chamber cylinder exhaust passage member of the engine main body and a silencer which is connected with the exhaust pipe, into which the exhaust gas discharged from a downstream end of the exhaust pipe flows, the silencer being configured to reduce the volume of sound generated by the exhaust gas, and the single-combustion-chamber main catalyst is provided so that a path length from the one combustion chamber to the upstream end of the single-combustion-chamber main catalyst is shorter than a path length from the downstream end of the single-combustion-chamber main catalyst to the downstream end of the exhaust pipe.

According to this arrangement, the single-combustion-chamber exhaust passage member includes the exhaust pipe and the silencer. The exhaust pipe is connected with the downstream end of the single-combustion-chamber cylinder exhaust passage member. The exhaust gas exhausted from the downstream end of the exhaust pipe flows into the silencer. The path length from the one combustion chamber to the upstream end of the single-combustion-chamber main catalyst is shorter than the downstream end of the single-combustion-chamber main catalyst to the downstream end of the exhaust pipe. The single-combustion-chamber main catalyst is therefore positioned to be closer to the combustion chamber. The oxidation of the unburned fuel is therefore facilitated at a position closer to the combustion chamber in the exhaust path. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be more stably detected.

In the vehicle of the present teaching, preferably, the single-combustion-chamber exhaust passage member includes an exhaust pipe which is connected with a downstream end of the single-combustion-chamber cylinder exhaust passage member of the engine main body and a silencer which is connected with the exhaust pipe, into which the exhaust gas discharged from a downstream end of the exhaust pipe flows, the silencer being configured to reduce the volume of sound generated by the exhaust gas, and the single-combustion-chamber main catalyst is provided in the exhaust pipe.

According to this arrangement, the single-combustion-chamber exhaust passage member includes the exhaust pipe and the silencer. The exhaust pipe is connected with the downstream end of the single-combustion-chamber cylinder exhaust passage member. The exhaust gas exhausted from the downstream end of the exhaust pipe flows into the silencer. The single-combustion-chamber main catalyst is provided inside the exhaust pipe. Due to this, as compared to cases where the single-combustion-chamber main catalyst is provided downstream of the exhaust pipe, the single-combustion-chamber main catalyst is provided to be close to the combustion chamber. The oxidation of the unburned fuel is therefore facilitated at a position closer to the combustion chamber in the exhaust path. A detection target by the single-combustion-chamber upstream oxygen detector is therefore the exhaust gas in which the oxidation has advanced. In other words, a detection target by the single-combustion-chamber upstream oxygen detector is the exhaust gas with more stable oxygen density. The oxygen density in the exhaust gas can therefore be stably detected.

In the vehicle of the present teaching, preferably, the single-combustion-chamber exhaust passage member includes an exhaust pipe which is connected with a downstream end of the single-combustion-chamber cylinder exhaust passage member of the engine main body and a silencer which is connected with the exhaust pipe, into which the exhaust gas discharged from a downstream end of the exhaust pipe flows, the silencer being configured to reduce the volume of sound generated by the exhaust gas, and the single-combustion-chamber upstream oxygen detector is provided in the exhaust pipe.

According to this arrangement, the single-combustion-chamber exhaust passage member includes the exhaust pipe and the silencer. The exhaust pipe is connected with the downstream end of the single-combustion-chamber cylinder exhaust passage member. The exhaust gas exhausted from the downstream end of the exhaust pipe flows into the silencer. The single-combustion-chamber upstream oxygen detector is provided on the exhaust pipe. For this reason, as compared to cases where the single-combustion-chamber upstream oxygen detector is provided on the single-combustion-chamber cylinder exhaust passage member, the single-combustion-chamber upstream oxygen detector is far from the combustion chamber. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be stably detected.

In the vehicle of the present teaching, preferably, a passage member including the single-combustion-chamber cylinder exhaust passage member of the cylinder member and the single-combustion-chamber exhaust passage member includes a catalyst-provided passage member in which the single-combustion-chamber main catalyst is provided and an upstream passage member connected with an upstream end of the catalyst-provided passage member, and in at least a part of the upstream passage member, a cross-sectional area of the upstream passage member cut along a direction orthogonal to the flow direction of the exhaust gas is smaller than a cross-sectional area of the catalyst-provided passage member cut along the direction orthogonal to the flow direction of the exhaust gas.

According to this arrangement, the passage member including the single-combustion-chamber cylinder exhaust passage member and the single-combustion-chamber exhaust passage member includes the catalyst-provided passage member and the upstream passage member. The single-combustion-chamber main catalyst is provided in the catalyst-provided passage member. The upstream passage member is connected with the upstream end of the catalyst-provided passage member. It is assumed that the cross-sectional area of the catalyst-provided passage member cut along the direction orthogonal to the flow direction of the exhaust gas is Sa. In at least a part of the upstream passage member, the cross-sectional area of the upstream passage member cut along the direction orthogonal to the flow direction of the exhaust gas is smaller than the area Sa. Because of this arrangement, the cross-sectional area of the exhaust path changes upstream of the single-combustion-chamber main catalyst. This provides a change in the flow of the exhaust gas. The mixture of unburned fuel with oxygen is therefore facilitated. With this, the oxidation of the unburned fuel is facilitated upstream of the single-combustion-chamber main catalyst. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be more stably detected.

In the vehicle of the present teaching, preferably, the single-combustion-chamber main catalyst is provided in the single-combustion-chamber exhaust passage member, and at least a part of the single-combustion-chamber exhaust passage member, which is upstream in the flow direction of the single-combustion-chamber main catalyst, is formed of a multi-walled pipe which includes an inner pipe and at least one outer pipe covering the inner pipe.

According to this arrangement, at least a part of the single-combustion-chamber exhaust passage member, which is upstream of the single-combustion-chamber main catalyst, is formed of a double-walled pipe. The double-walled pipe includes an inner pipe and an outer pipe covering the inner pipe. The double-walled pipe restrains the decrease in the temperature of the exhaust gas. The temperature of the single-combustion-chamber upstream oxygen detector is therefore rapidly increased to the activation temperature when starting the engine. The oxygen density in the exhaust gas can therefore be stably detected.

In the vehicle of the present teaching, preferably, the single-combustion-chamber exhaust passage member includes a catalyst-provided passage member in which the single-combustion-chamber main catalyst is provided, and the single-cylinder four-stroke engine unit includes a catalyst protector which at least partially covers an outer surface of the catalyst-provided passage member.

According to this arrangement, the single-combustion-chamber exhaust passage member includes the catalyst-provided passage member. The single-combustion-chamber main catalyst is provided in the catalyst-provided passage member. The outer surface of the catalyst-provided passage member is at least partially covered with the catalyst protector. The catalyst protector protects the catalyst-provided passage member and the single-combustion-chamber main catalyst. Furthermore, the catalyst protector improves the appearance.

In the vehicle of the present teaching, preferably, the single-cylinder four-stroke engine unit includes a single-combustion-chamber upstream sub-catalyst which is provided upstream in the flow direction of the single-combustion-chamber main catalyst in the single-combustion-chamber cylinder exhaust passage member or the single-combustion-chamber exhaust passage member, the single-combustion-chamber upstream sub-catalyst being configured to purify the exhaust gas.

According to this arrangement, the single-combustion-chamber upstream sub-catalyst is provided in the single-combustion-chamber cylinder exhaust passage member or the single-combustion-chamber exhaust passage member. The single-combustion-chamber upstream sub-catalyst is provided upstream of the single-combustion-chamber main catalyst. The single-combustion-chamber upstream sub-catalyst purifies the exhaust gas. However, in the single-combustion-chamber upstream sub-catalyst, the degree of contribution to the purification of the exhaust gas exhausted from one combustion chamber in the exhaust path is lower than that of the single-combustion-chamber main catalyst. The single-combustion-chamber upstream sub-catalyst may or may not have a porous structure. The single-combustion-chamber upstream sub-catalyst which does not have the porous structure may be arranged such that catalytic materials are directly adhered to the inner wall of the single-combustion-chamber exhaust passage member, for example. Alternatively, the single-combustion-chamber upstream sub-catalyst which does not have the porous structure may be formed of a hollow cylindrical base provided along the inner wall of the single-combustion-chamber exhaust passage member and catalytic materials adhered to the base.

The following will describe the resulting effects when the single-combustion-chamber upstream sub-catalyst does not have a porous structure. In this case, the single-combustion-chamber upstream sub-catalyst does not greatly resist the flow of the exhaust gas as compared to the single-combustion-chamber main catalyst. Furthermore, deflection of pressure pulsation of the exhaust gas is not effectively generated by the single-combustion-chamber upstream sub-catalyst as compared to the single-combustion-chamber main catalyst. Therefore the single-combustion-chamber upstream sub-catalyst does not greatly influence the flow of the exhaust gas. The outcome achieved by the positions of the single-combustion-chamber main catalyst and the single-combustion-chamber upstream oxygen detector is therefore not effected.

The following will describe the resulting effects when the single-combustion-chamber upstream sub-catalyst has a porous structure. The single-combustion-chamber upstream sub-catalyst having a porous structure functions as a resistance against the flow of the exhaust gas. It is therefore possible to reduce the flow speed of the exhaust gas upstream of the single-combustion-chamber upstream sub-catalyst. Furthermore, the single-combustion-chamber upstream sub-catalyst having a porous structure generates deflection of pressure pulsation. Due to this, the exhaust gas exhausted from the combustion chamber collides with this deflected wave, upstream of the single-combustion-chamber upstream sub-catalyst. This facilitates mixing of unburned fuel with oxygen in the exhaust gas, upstream of the single-combustion-chamber upstream sub-catalyst. Furthermore, the collision further reduces the flow speed of the exhaust gas upstream of the single-combustion-chamber upstream sub-catalyst.

Therefore, mixing of unburned fuel with oxygen in the exhaust gas is facilitated upstream of the single-combustion-chamber main catalyst. Furthermore, the flow speed of the exhaust gas is further reduced upstream of the single-combustion-chamber main catalyst.

A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be more stably detected.

In the vehicle of the present teaching, preferably, the single-combustion-chamber upstream oxygen detector is provided upstream in the flow direction of the single-combustion-chamber upstream sub-catalyst.

The single-combustion-chamber upstream oxygen detector is provided upstream of the single-combustion-chamber upstream sub-catalyst. When the single-combustion-chamber upstream sub-catalyst has a porous structure, as described above, mixing of unburned fuel with oxygen in the exhaust gas is facilitated upstream of the single-combustion-chamber upstream sub-catalyst. Furthermore, the flow speed of the exhaust gas is reduced upstream of the single-combustion-chamber upstream sub-catalyst. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be more stably detected.

In the vehicle of the present teaching, preferably, the single-cylinder four-stroke engine unit includes a single-combustion-chamber downstream sub-catalyst which is provided downstream in the flow direction of the single-combustion-chamber main catalyst in the single-combustion-chamber cylinder exhaust passage member or the single-combustion-chamber exhaust passage member, the single-combustion-chamber upstream sub-catalyst being configured to purify the exhaust gas.

According to this arrangement, the single-combustion-chamber downstream sub-catalyst is provided in the single-combustion-chamber cylinder exhaust passage member or the single-combustion-chamber exhaust passage member. The single-combustion-chamber downstream sub-catalyst is provided downstream of the single-combustion-chamber main catalyst. The single-combustion-chamber downstream sub-catalyst purifies the exhaust gas. However, in the single-combustion-chamber downstream sub-catalyst, the degree of contribution to the purification of the exhaust gas exhausted from one combustion chamber in the exhaust path is lower than that of the single-combustion-chamber main catalyst. The single-combustion-chamber downstream sub-catalyst may or may not have a porous structure. The single-combustion-chamber downstream sub-catalyst which does not have the porous structure may be arranged such that catalytic materials are directly adhered to the inner wall of the single-combustion-chamber exhaust passage member, for example. Alternatively, for example, the single-combustion-chamber downstream sub-catalyst which does not have the porous structure may be formed of a hollow cylindrical base provided along the inner wall of the single-combustion-chamber exhaust passage member and catalytic materials adhered to the base.

The following will describe the resulting effects when the single-combustion-chamber downstream sub-catalyst does not have a porous structure. In this case, the single-combustion-chamber downstream sub-catalyst does not greatly resist the flow of the exhaust gas as compared to the single-combustion-chamber main catalyst. Furthermore, deflection of pressure pulsation of the exhaust gas is not effectively generated by the single-combustion-chamber downstream sub-catalyst as compared to the single-combustion-chamber main catalyst. Therefore the single-combustion-chamber downstream sub-catalyst does not greatly influence the flow of the exhaust gas. The outcome achieved by the positions of the single-combustion-chamber main catalyst and the single-combustion-chamber upstream oxygen detector is therefore not effected.

The following will describe the resulting effects when the single-combustion-chamber downstream sub-catalyst has a porous structure. The single-combustion-chamber downstream sub-catalyst having a porous structure functions as a resistance against the flow of the exhaust gas. It is therefore possible to reduce the flow speed of the exhaust gas upstream of the single-combustion-chamber downstream sub-catalyst. Furthermore, the single-combustion-chamber downstream sub-catalyst having a porous structure generates deflection of pressure pulsation. Due to this, the exhaust gas exhausted from the combustion chamber collides with this deflected wave, upstream of the single-combustion-chamber downstream sub-catalyst. This facilitates mixing of unburned fuel with oxygen in the exhaust gas, upstream of the single-combustion-chamber downstream sub-catalyst. Furthermore, the collision further reduces the flow speed of the exhaust gas upstream of the single-combustion-chamber downstream sub-catalyst.

The single-combustion-chamber upstream oxygen detector is provided upstream of the single-combustion-chamber downstream sub-catalyst. A detection target by the single-combustion-chamber upstream oxygen detector is therefore the exhaust gas in which the oxidation has further advanced. In other words, a detection target by the single-combustion-chamber upstream oxygen detector is the exhaust gas with more stable oxygen density. The oxygen density in the exhaust gas can therefore be more stably detected.

In the vehicle of the present teaching, preferably, the single-cylinder four-stroke engine unit includes a single-combustion-chamber downstream oxygen detector which is provided downstream in the flow direction of the single-combustion-chamber main catalyst and upstream in the flow direction of the single-combustion-chamber downstream sub-catalyst, and the controller is configured to process a signal from the single-combustion-chamber downstream oxygen detector.

In the vehicle of the present teaching, preferably, the single-cylinder four-stroke engine unit includes a single-combustion-chamber downstream oxygen detector which is provided downstream in the flow direction of the single-combustion-chamber downstream sub-catalyst, and the controller is configured to process a signal from the single-combustion-chamber downstream oxygen detector.

In the vehicle of the present teaching, preferably, the single-cylinder four-stroke engine unit includes a single-combustion-chamber downstream oxygen detector which is provided downstream in the flow direction of the single-combustion-chamber main catalyst in the single-combustion-chamber cylinder exhaust passage member or the single-combustion-chamber exhaust passage member, and the controller is configured to process a signal from the single-combustion-chamber downstream oxygen detector.

In the vehicle of the present teaching, preferably, the controller is configured to determine the purification capability of the single-combustion-chamber main catalyst based on the signal from the single-combustion-chamber downstream oxygen detector, and a notification unit is configured to perform a notification when the controller determines that the purification capability of the single-combustion-chamber main catalyst has been lowered to a predetermined level.

In the vehicle of the present teaching, preferably, the single-cylinder four-stroke engine unit includes a fuel supplier which is configured to supply fuel to the one combustion chamber, and the controller is configured to control the amount of fuel supplied to the one combustion chamber by the fuel supplier based on a signal from the single-combustion-chamber upstream oxygen detector and a signal from the single-combustion-chamber downstream oxygen detector.

According to this arrangement, the single-cylinder four-stroke engine unit includes the fuel supplier which is configured to supply fuel to the combustion chamber. Furthermore, the controller controls the amount of fuel supplied to the combustion chamber based on the signal from the single-combustion-chamber upstream oxygen detector and the signal from the single-combustion-chamber downstream oxygen detector. The single-combustion-chamber upstream oxygen detector is able to stably detect the oxygen density in the exhaust gas. Therefore the control of the fuel amount is more precisely carried out.

A single-cylinder four-stroke engine unit of the present teaching is the single-cylinder four-stroke engine unit mounted on the above-described vehicle of the present teaching, including: an engine main body including a crankcase member and a cylinder member, the crankcase member including a crankshaft extending in a left-right direction of the vehicle, and the cylinder member including one combustion chamber which is provided at least partially frontward of a central axis of the crankshaft in a front-rear direction of the vehicle and a single-combustion-chamber cylinder exhaust passage member in which exhaust gas exhausted from the one combustion chamber flows; a single-combustion-chamber exhaust passage member, the single-combustion-chamber exhaust passage member including a discharge port which is provided rearward of the central axis of the crankshaft in the front-rear direction of the vehicle exposed to the atmosphere, the single-combustion-chamber exhaust passage member allowing the exhaust gas to flow from a downstream end of the single-combustion-chamber cylinder exhaust passage member to the discharge port, and the single-combustion-chamber exhaust passage member being provided partially above or below the central axis of the crankshaft; a single-combustion-chamber mail catalyst, the single-combustion-chamber main catalyst being provided inside the single-combustion-chamber cylinder exhaust passage member or inside the single-combustion-chamber exhaust passage member, the single-combustion-chamber main catalyst being provided at least partially in front of the central axis of the crankshaft in the front-rear direction of the vehicle, and the single-combustion-chamber main catalyst being configured to purify the exhaust gas exhausted from the one combustion chamber most in an exhaust path extending from the one combustion chamber to the discharge port; a single-combustion-chamber upstream oxygen detector, the single-combustion-chamber upstream oxygen detector being provided upstream of the single-combustion-chamber main catalyst in a flow direction of the exhaust gas in the single-combustion-chamber cylinder exhaust passage member or the single-combustion-chamber exhaust passage member, the single-combustion-chamber upstream oxygen detector being provided so that a path length from the one combustion chamber to the single-combustion-chamber upstream oxygen detector is longer than a path length from the single-combustion-chamber upstream oxygen detector to an upstream end of the single-combustion-chamber main catalyst, the upstream end being positioned frontward in the front-rear direction of the central axis of the crankshaft, and the single-combustion-chamber upstream oxygen detector being configured to detect oxygen density in the exhaust gas; and a controller configured to process a signal from the single-combustion-chamber upstream oxygen detector.

According to this arrangement, effects similar to the above-described vehicle of the present teaching are achieved.

### [Advantageous Effects]

The present teaching makes it possible to more stably detect the oxygen density in exhaust gas in a vehicle including a single-cylinder four-stroke engine unit.

### [Brief Description of Drawings]

[FIG. 1] FIG. 1 is a side view of a motorcycle related to Embodiment 1 of the present teaching.
[FIG. 2] FIG. 2 is a side view showing a state in which a vehicle body cover, etc. have been removed from the motorcycle of FIG. 1.
[FIG. 3] FIG. 3 is a bottom view of FIG. 2.
[FIG. 4] FIG. 4 is a control block diagram of the motorcycle of FIG. 1.
[FIG. 5] FIG. 5 is a schematic diagram of an engine main body and an exhaust system of the motorcycle of FIG. 1.
[FIG. 6] FIG. 6 is a side view of a motorcycle of Modification 1 of Embodiment 1.
[FIG. 7] FIG. 7 is a schematic diagram of an engine main body and an exhaust system of the motorcycle of FIG. 6.
[FIG. 8] FIG. 8 is a side view of a motorcycle of Embodiment 2 of the present teaching.
[FIG. 9] FIG. 9 is a bottom view of FIG. 8.
[FIG. 10] FIG. 10 is a side view showing a state in which a vehicle body cover, etc. have been removed from the motorcycle of FIG. 8.
[FIG. 11] FIG. 11 is a bottom view of FIG. 10.
[FIG. 12] FIG. 12 is a schematic diagram of an engine main body and an exhaust system of the motorcycle of FIG. 8.
[FIG. 13] FIG. 13 is a side view of a motorcycle of Embodiment 3 of the present teaching.
[FIG. 14] FIG. 14 is a bottom view of FIG. 13.
[FIG. 15] FIG. 15 is a side view showing a state in which a vehicle body cover, etc. have been removed from the motorcycle of FIG. 13.
[FIG. 16] FIG. 16 is a bottom view of FIG. 15.
[FIG. 17] FIG. 17 is a schematic diagram of an engine main body and an exhaust system of the motorcycle of FIG. 13.
[FIG. 18] FIG. 18 is a side view of a motorcycle of Embodiment 4 of the present teaching.
[FIG. 19] FIG. 19 is a bottom view of FIG. 18.
[FIG. 20] FIG. 20 is a side view showing a state in which a vehicle body cover, etc. have been removed from the motorcycle of FIG. 18.
[FIG. 21] FIG. 21 is a bottom view of FIG. 20.
[FIG. 22] FIG. 22 is a schematic diagram of an engine main body and an exhaust system of the motorcycle of FIG. 18.
[FIG. 23] FIG. 23 is a side view of a motorcycle related to another embodiment of the present teaching.
[FIG. 24] FIG. 24 is a schematic diagram of an engine main body and an exhaust system of the motorcycle of another embodiment of the present teaching.
[FIG. 25] FIG. 25 is a partial cross-section of an exhaust pipe used in the motorcycle of another embodiment of the present teaching.
[FIG. 26] FIG. 26 is a partial enlarged view of the side view of the motorcycle related to another embodiment of the present teaching.

### [Description of Embodiments]

The following will describe an embodiment of the present teaching with reference to figures. Described below is an example in which a vehicle of the present teaching is applied to a motorcycle. Hereinafter, frontward, rearward, leftward, and rightward indicate frontward, rearward, leftward, and rightward of a rider of the motorcycle. In this regard, it is assumed that the motorcycle is provided on a horizontal plane. The signs F, Re, L, and R in the figures indicate frontward, rearward, leftward, and rightward, respectively.

### (Embodiment 1)

### [Overall Structure]

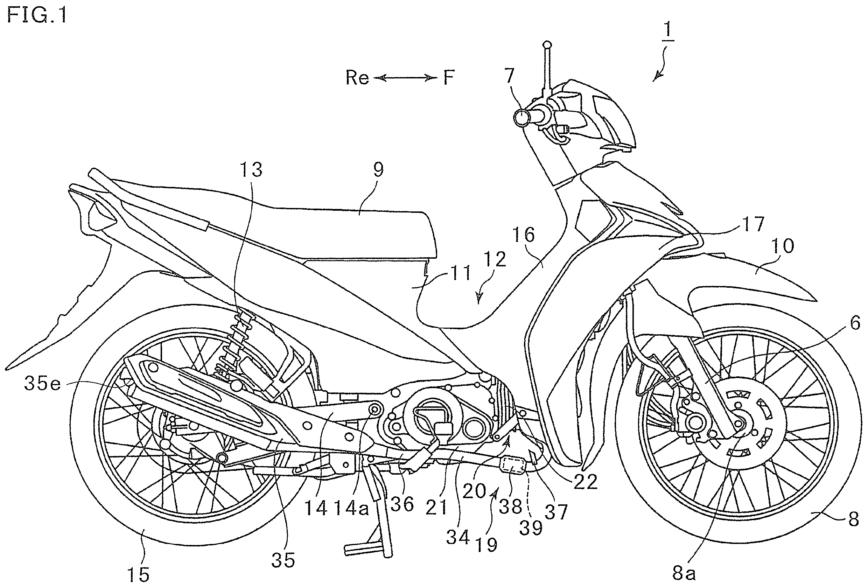

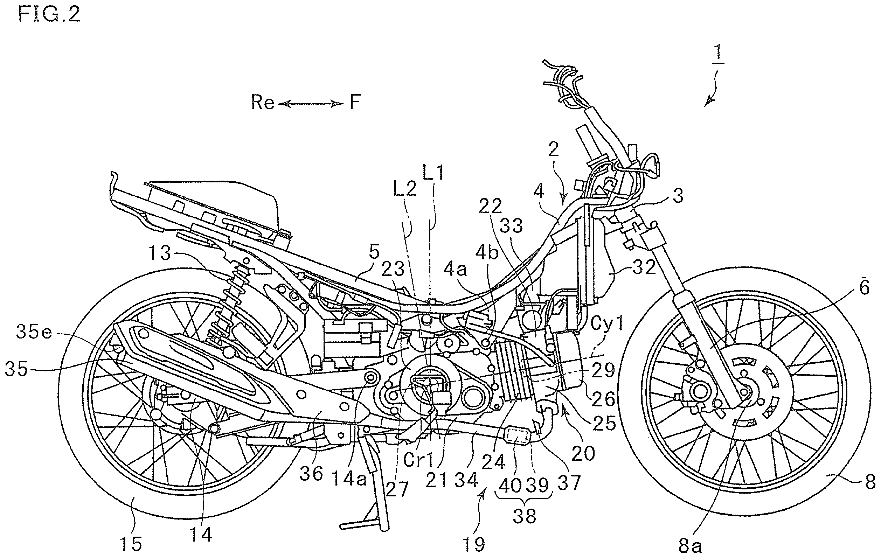

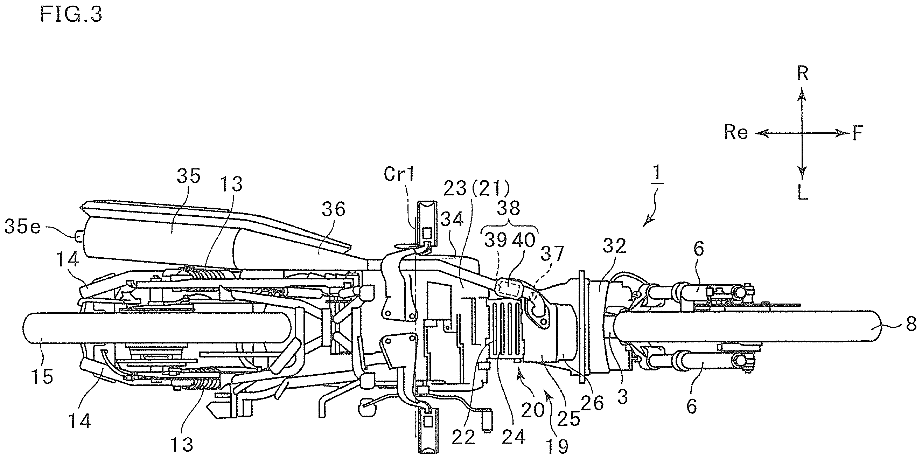

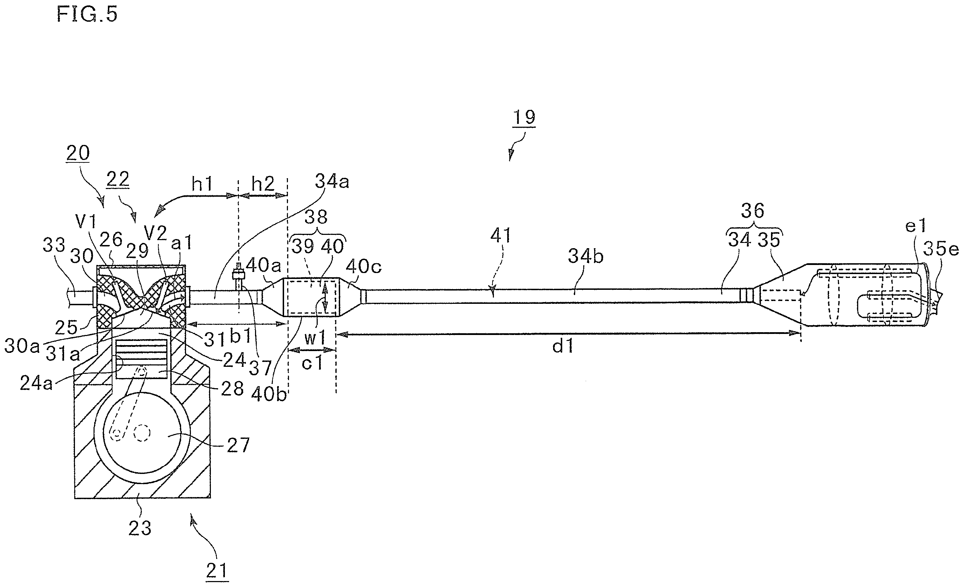

FIG. 1 is a side view of a motorcycle related to Embodiment 1 of the present teaching. FIG. 2 is a side view showing a state in which a vehicle body cover, etc. have been removed from the motorcycle of Embodiment 1. FIG. 3 is a bottom view showing the state in which the vehicle body cover, etc. have been removed from the motorcycle of Embodiment 1. FIG. 5 is a schematic diagram of an engine and an exhaust system of the motorcycle of Embodiment 1.

A vehicle of Embodiment 1 is a so-called underbone-type motorcycle 1. As shown in FIG. 2, the motorcycle 1 is provided with a vehicle body frame 2. The vehicle body frame 2 includes a head pipe 3, a main frame 4, and a seat rail 5. The main frame 4 extends rearward and downward from the head pipe 3. The seat rail 5 extends rearward and upward from an intermediate portion of the main frame 4.

A steering shaft is rotatably inserted into the head pipe 3. A handlebar 7 is provided at an upper part of the steering shaft (see FIG. 1). A display (not illustrated) is provided in the vicinity of the handlebar 7. The display is configured to display vehicle speed, engine rotation speed, warnings, and the like.

Paired left and right front forks 6 are supported at a lower part of the steering shaft. An axle shaft 8a is fixed to a lower end portion of each front fork 6. A front wheel 8 is rotatably attached to the axle shaft 8a. A fender 10 is provided above and behind the front wheel 8.

The seat rail 5 supports a seat 9 (see FIG. 1). As shown in FIG. 2, the seat rail 5 is connected to the upper end of paired left and right rear shock absorbers 13. The lower end of the rear shock absorbers 13 is supported by rear portions of paired left and right rear arms 14. Front portions of the rear arms 14 are connected with the vehicle body frame 2 via pivot shafts 14a. The rear arms 14 are swingable about the pivot shafts 14a in an up-down direction. A rear wheel 15 is supported by rear portions of the rear arms 14.

As shown in FIG. 2, an engine main body 20 is provided below the main frame 4. The engine main body 20 is supported by the vehicle body frame 2. To be specific, an upper portion of the engine main body 20 is fixed, by a bolt 4b, to a bracket 4a of the main frame 4. To be more specific, an upper front portion of a subsequently-described crankcase member 21 of the engine main body 20 is fixed to the bracket 4a. A rear portion of the engine main body 20 is also fixed to another bracket of the vehicle body frame 2. An air cleaner 32 is provided at a location which is below the main frame 4 and above the engine main body 20.

As shown in FIG. 1, the motorcycle 1 is provided with a vehicle body cover 11 which covers the vehicle body frame 2, etc. The vehicle body cover 11 includes a main cover 16 and a front cover 17. The front cover 17 is provided in front of the head pipe 3. The main cover 16 is provided behind the head pipe 3. The main cover 16 covers the main frame 4 and the seat rail 5. The main cover 16 and the front cover 17 covers left and right portions of a front portion of the engine main body 20. The front cover 17 covers left and right portions of the air cleaner 32.

The main frame 4 and the vehicle body cover 11 are low in height at portions between the seat 9 and the head pipe 3. For this reason, when viewed in a vehicle left-right direction, the underbone-type motorcycle 1 has a recess 12 at a location which is behind the head pipe 3, in front of the seat 9, and above the main frame 4. This recess 12 allows a rider to easily straddle the motorcycle 1.

The motorcycle 1 includes a single-cylinder four-stroke engine unit 19. The single-cylinder four-stroke engine unit 19 includes the engine main body 20, the air cleaner 32, an intake pipe 33, an exhaust pipe 34, a silencer 35, a main catalyst 39 (a single-combustion-chamber main catalyst), and an upstream oxygen detector 37 (a single-combustion-chamber upstream oxygen detector). As detailed later, the main catalyst 39 is provided in the exhaust pipe 34. The main catalyst 39 is configured to purify exhaust gas flowing in the exhaust pipe 34. In the exhaust pipe 34, the upstream oxygen detector 37 is provided upstream of the main catalyst 39. The upstream oxygen detector 37 is configured to detect the oxygen density in the exhaust gas flowing in the exhaust pipe 34.

The engine main body 20 is a single-cylinder four-stroke engine. As shown in FIG. 2 and FIG. 3, the engine main body 20 includes the crankcase member 21 and a cylinder member 22. The cylinder member 22 extends frontward from the crankcase member 21.

The crankcase member 21 includes a crankcase main body 23. The crankcase member 21 includes a crankshaft 27, a transmission mechanism, and the like which are housed in the crankcase main body 23. Hereinafter, the central axis Cr1 of the crankshaft 27 is referred to as a crankshaft axis Cr1. The crankshaft axis Cr1 extends in the left-right direction. Lubricating oil is stored in the crankcase main body 23. The oil is conveyed by an oil pump (not illustrated) and is circulated in the engine main body 20.

The cylinder member 22 includes a cylinder body 24, a cylinder head 25, a head cover 26, and components housed in them. As shown in FIG. 2, the cylinder body 24 is connected with a front portion of the crankcase main body 23. The cylinder head 25 is connected with a front portion of the cylinder body 24. The head cover 26 is connected with a front portion of the cylinder head 25.

As shown in FIG. 5, a cylinder hole 24a is made in the cylinder body 24. The cylinder hole 24a houses a piston 28 so that the piston 28 is able to reciprocate. The piston 28 is connected with the crankshaft 27 via a connecting rod. Hereinafter, the central axis Cy1 of the cylinder hole 24a is referred to as a cylinder axis Cy1. As shown in FIG. 2, the engine main body 20 is disposed so that the cylinder axis Cy1 extends in the front-rear direction (horizontal direction). To be more specific, the direction in which the cylinder axis Cy1 extends from the crankcase member 21 to the cylinder member 22 is frontward and upward. The angle of inclination of the cylinder axis Cy1 with respect to the horizontal direction is 0 degrees or greater and 45 degrees or less.

As shown in FIG. 5, one combustion chamber 29 is made in the cylinder member 22. The combustion chamber 29 is formed of an inner surface of the cylinder hole 24a of the cylinder body 24, the cylinder head 25, and the piston 28. In other words, a part of the combustion chamber 29 is formed by the inner surface of the cylinder hole 24a. A leading end portion of an ignition plug (not illustrated) is provided in the combustion chamber 29. The ignition plug ignites a mixture gas of fuel and air in the combustion chamber 29. As shown in FIG. 2, the combustion chamber 29 is positioned frontward of the crankshaft axis Cr1. In other words, a linear line which passes the crankshaft axis Cr1 and is parallel to the up-down direction is L1 so that when viewed in the left-right direction, the combustion chamber 29 is positioned in front of the linear line L1.

As shown in FIG. 5, a cylinder intake passage member 30 and a cylinder exhaust passage member 31 (a single-combustion-chamber cylinder exhaust passage member) are formed in the cylinder head 25. In this specification, the passage member is a structure forming a space (path) through which gas or the like passes. In the cylinder head 25, an intake port 30a and an exhaust port 31a are formed in a wall portion forming the combustion chamber 29. The cylinder intake passage member 30 extends from the intake port 30a to an inlet formed in the outer surface (upper surface) of the cylinder head 25. The cylinder exhaust passage member 31 extends from the exhaust port 31a to an outlet formed in the outer surface (lower surface) of the cylinder head 25. Air passes through the inside of the cylinder intake passage member 30 and is then supplied to the combustion chamber 29. Exhaust gas exhausted from the combustion chamber 29 passes through the cylinder exhaust passage member 31.

An intake valve V1 is provided in the cylinder intake passage member 30. An exhaust valve V2 is provided in the cylinder exhaust passage member 31. The intake valve V1 and the exhaust valve V2 are activated by a valve operating mechanism (not illustrated) which is linked with the crankshaft 27. The intake port 30a is opened and closed by the movement of the intake valve V1. The exhaust port 31a is opened and closed by the movement of the exhaust valve V2. The intake pipe 33 is connected an end portion (inlet) of the cylinder intake passage member 30. The exhaust pipe 34 is connected an end portion (outlet) of the cylinder exhaust passage member 31. The path length of the cylinder exhaust passage member 31 is referred to as a1.

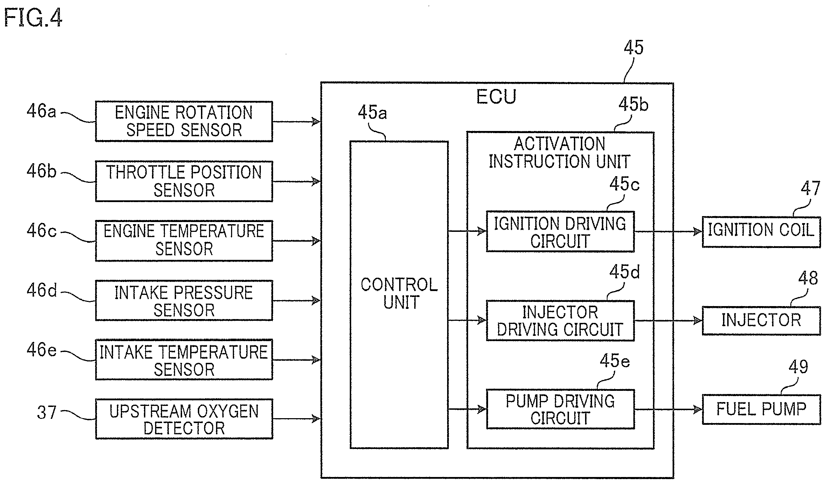

An injector 48 (see FIG. 4) is provided in the cylinder intake passage member 30 or the intake pipe 33. The injector 48 is provided to supply fuel to the combustion chamber 29. To be more specific, the injector 48 injects fuel in the cylinder intake passage member 30 or the intake pipe 33. The injector 48 may be provided to inject fuel in the combustion chamber 29. A throttle valve (not illustrated) is provided in the intake pipe 33.

As shown in FIG. 2, when viewed in the left-right direction, the intake pipe 33 extends upward from the upper surface of the cylinder head 25. The intake pipe 33 is connected with the air cleaner 32. The air cleaner 32 is configured to purify the air supplied to the engine main body 20. The air purified while passing through the air cleaner 32 is supplied to the engine main body 20 via the intake pipe 33.

The structure of the exhaust system will be detailed later.

Subsequently, control of the single-cylinder four-stroke engine unit 19 will be described. FIG. 4 is a control block diagram of the motorcycle of Embodiment 1.

As shown in FIG. 4, the single-cylinder four-stroke engine unit 19 includes an engine rotation speed sensor 46a, a throttle position sensor 46b, an engine temperature sensor 46c, an intake pressure sensor 46d, and an intake temperature sensor 46e. The engine rotation speed sensor 46a detects the rotation speed of the crankshaft 27, i.e., the engine rotation speed. The throttle position sensor 46b detects the opening degree of a throttle valve (not illustrated) (hereinafter, throttle opening degree). The engine temperature sensor 46c detects the temperature of the engine main body. The intake pressure sensor 46d detects the pressure (intake pressure) in the intake pipe 33. The intake temperature sensor 46e detects the temperature (intake temperature) in the intake pipe 33.

The single-cylinder four-stroke engine unit 19 includes an electronic control unit (ECU) 45 which is configured to control the engine main body 20. The electronic control unit 45 is equivalent to a controller of the present teaching. The electronic control unit 45 is connected to sensors such as the engine rotation speed sensor 46a, the engine temperature sensor 46c, the throttle position sensor 46b, the intake pressure sensor 46d, the intake temperature sensor 46e, and a vehicle speed sensor. The electronic control unit 45 is further connected to an ignition coil 47, the injector 48, a fuel pump 49, a display (not illustrated), and the like. The electronic control unit 45 includes a control unit 45a and an activation instruction unit 45b. The activation instruction unit 45b includes an ignition driving circuit 45c, an injector driving circuit 45d, and a pump driving circuit 45e.

Upon receiving a signal from the control unit 45a, the ignition driving circuit 45c, the injector driving circuit 45d, and the pump driving circuit 45e drive the ignition coil 47, the injector 48, and the fuel pump 49, respectively. As the ignition coil 47 is driven, spark discharge occurs at the ignition plug and the mixture gas is ignited. The fuel pump 49 is connected with the injector 48 via a fuel hose. As the fuel pump 49 is driven, fuel in a fuel tank (not illustrated) is pressure-fed to the injector 48.

The control unit 45a can be a microcomputer, for example. Based on a signal from the upstream oxygen detector 37, a signal from the engine rotation speed sensor 46a or the like, the control unit 45a controls the ignition driving circuit 45c, the injector driving circuit 45d, and the pump driving circuit 45e. The control unit 45a controls an ignition timing by controlling the ignition driving circuit 45c. The control unit 45a controls a fuel injection amount by controlling the injector driving circuit 45d and the pump driving circuit 45e.

To improve the purification efficiency of the main catalyst 39 and the combustion efficiency, the air-fuel ratio of the air-fuel mixture in the combustion chamber 29 is preferably equal to the theoretical air-fuel ratio (stoichiometry). The control unit 45a increases or decreases the fuel injection amount according to need.

The following describes an example of control of the fuel injection amount (combustion control) by the control unit 45a.

To begin with, the control unit 45a calculates a basic fuel injection amount based on signals from the engine rotation speed sensor 46a, the throttle position sensor 46b, the engine temperature sensor 46c, and the intake pressure sensor 46d. To be more specific, an intake air amount is calculated by using a map in which a throttle opening degree and an engine rotation speed are associated with an intake air amount and a map in which an intake pressure and an engine rotation speed are associated with an intake air amount. Based on the intake air amount calculated from the maps, the basic fuel injection amount with which a target air-fuel ratio is achieved is determined. When the throttle opening degree is small, the map in which an intake pressure and an engine rotation speed are associated with an intake air amount is used. When the throttle opening degree is great, the map in which a throttle opening degree and an engine rotation speed are associated with an intake air amount is used.

In addition to the above, based on a signal from the upstream oxygen detector 37, the control unit 45a calculates a feedback correction value for correcting the basic fuel injection amount. To be more specific, based on a signal from the upstream oxygen detector 37, it is determined whether the air-fuel mixture is lean or rich. The term "rich" indicates a state in which fuel is excessive as compared to the theoretical air-fuel ratio. The term "lean" indicates a state in which air is excessive as compared to the theoretical air-fuel ratio. When determining that the air-fuel mixture is lean, the control unit 45a calculates the feedback correction value so that the next fuel injection amount is increased. On the other hand, when determining that the air-fuel mixture is rich, the control unit 45a calculates the feedback correction value so that the next fuel injection amount is decreased.

In addition to the above, the control unit 45a calculates a correction value for correcting the basic fuel injection amount, based on the engine temperature, the outside temperature, the outside atmosphere, or the like. Furthermore, the control unit 45a calculates a correction value in accordance with transient characteristics at acceleration and deceleration.

The control unit 45a calculates the fuel injection amount based on the basic fuel injection amount and the correction values such as the feedback correction value. Based on the fuel injection amount calculated in this way, the fuel pump 49 and the injector 48 are driven. As such, the electronic control unit 45 (controller) processes a signal from the upstream oxygen detector 37. Furthermore, the electronic control unit 45 (controller) performs combustion control based on a signal from the upstream oxygen detector 37.

### [Structure of Exhaust System]

The following describes an exhaust system of the motorcycle 1 of Embodiment 1. In the description of the exhaust system in this specification, the term "upstream" indicates upstream in the direction in which exhaust gas flows. The term "downstream" indicates downstream in the direction in which exhaust gas flows. Furthermore, in the description of the exhaust system in this specification, the term "path direction" indicates the direction in which exhaust gas flows.

As described above, the single-cylinder four-stroke engine unit 19 includes the engine main body 20, the exhaust pipe 34, the silencer 35, the main catalyst 39, and the upstream oxygen detector 37. The exhaust passage member 36 (single-combustion-chamber exhaust passage member) is formed by the exhaust pipe 34 and the silencer 35. The silencer 35 is provided with a discharge port 35e which is exposed to the atmosphere. The exhaust passage member 36 allows the exhaust gas to flow from the downstream end of the cylinder exhaust passage member 31 to the discharge port 35e. The path from the combustion chamber 29 to the discharge port 35e is referred to as an exhaust path 41 (see FIG. 5). The exhaust path 41 is formed by the cylinder exhaust passage member 31 and the exhaust passage member 36. The exhaust path 41 is a space through which exhaust gas passes.

As shown in FIG. 5, the upstream end portion of the exhaust pipe 34 is connected with the cylinder exhaust passage member 31. The downstream end portion of the exhaust pipe 34 is connected with the silencer 35. A catalyst unit 38 is provided in the middle of the exhaust pipe 34. A part of the exhaust pipe 34, which is upstream of the catalyst unit 38, is referred to as an upstream exhaust pipe 34a. A part of the exhaust pipe 34, which is downstream of the catalyst unit 38, is referred to as a downstream exhaust pipe 34b. While FIG. 5 depicts the exhaust pipe 34 as a linear pipe for simplification, the exhaust pipe 34 is not a linear pipe.

As shown in FIG. 3, the exhaust pipe 34 is provided on the right side part of the motorcycle 1. As shown in FIG. 2, a part of the exhaust pipe 34 is positioned below the crankshaft axis Cr1. The exhaust pipe 34 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from a direction along the up-down direction to a direction along the front-rear direction. To be more specific, when viewed in the left-right direction, the bended portion changes the flow direction of the exhaust gas from downward to rearward and upward. When viewed in the left-right direction, the downstream bended portion changes the flow direction of the exhaust gas from rearward and upward to rearward. A part which is slightly downstream of the downstream bended portion is positioned below the crankshaft axis Cr1. The main catalyst 39 is provided between the two bended portions.

The exhaust gas exhausted from the downstream end of the exhaust pipe 34 flows into the silencer 35. The silencer 35 is connected with the exhaust pipe 34. The silencer 35 is configured to restrain pulsation in the exhaust gas. With this, the silencer 35 restrains the volume of the sound (exhaust sound) generated by the exhaust gas. Multiple expansion chambers and multiple pipes connecting the expansion chambers with one another are provided inside the silencer 35. The downstream end portion of the exhaust pipe 34 is provided inside an expansion chamber of the silencer 35. The discharge port 35e exposed to the atmosphere is provided at the downstream end of the silencer 35. As shown in FIG. 5, the path length of the exhaust path from the downstream end of the exhaust pipe 34 to the discharge port 35e is referred to as e1. The path length of the expansion chamber in the silencer 35 is the length of the path which connects the center of the inflow port of the expansion chamber to the center of the outflow port of the expansion chamber in the shortest distance. The exhaust gas having passed the silencer 35 is discharged to the atmosphere via the discharge port 35e. As shown in FIG. 2, the discharge port 35e is positioned rearward of the crankshaft axis Cr1.

The main catalyst 39 is provided inside the exhaust pipe 34 (exhaust passage member 36). The catalyst unit 38 includes a hollow cylindrical casing 40 and the main catalyst 39. The upstream end of the casing 40 is connected with the upstream exhaust pipe 34a. The downstream end of the casing 40 is connected with the downstream exhaust pipe 34b. The casing 40 forms a part of the exhaust pipe 34 (exhaust passage member 36). The main catalyst 39 is fixed to the inside of the casing 40. The exhaust gas is purified when passing through the main catalyst 39. All exhaust gas exhausted from the exhaust port 31a of the combustion chamber 29 passes through the main catalyst 39. The main catalyst 39 purifies the exhaust gas exhausted from the combustion chamber 29 most in the exhaust path 41.

The main catalyst 39 is a so-called three-way catalyst. The three-way catalyst removes three substances in exhaust gas, namely hydrocarbon, carbon monoxide, and nitrogen oxide, by oxidation or reduction. The three-way catalyst is a type of oxidation - reduction catalyst. The main catalyst 39 includes a base and catalytic materials attached to the surface of the base. The catalytic materials are formed of a carrier and noble metal. The carrier is provided between the noble metal and the base. The carrier supports the noble metal. This noble metal purifies the exhaust gas. Examples of noble metals include platinum, palladium, and rhodium which remove hydrocarbon, carbon monoxide, and nitrogen oxide, respectively.

The main catalyst 39 has a porous structure. The porous structure implies a structure in which many pores are formed cross-sectionly, vertical to the path direction of the exhaust path 41. An example of a porous structure is a honeycomb structure. In the main catalyst 39, pores which are sufficiently narrower than the width of the path in the upstream exhaust pipe 34a are formed.

The main catalyst 39 may be a metal-base catalyst or a ceramic-base catalyst. The metal-base catalyst is a catalyst in which the base is made of metal. The ceramic-base catalyst is a catalyst in which the base is made of ceramic. The base of the metal-base catalyst is formed, for example, by alternately stacking metal corrugated plates and metal flat plates and winding them. The base of the ceramic-base catalyst is, for example, a honeycomb structured body.

As shown in FIG. 5, the length of the main catalyst 39 in the path direction is referred to as c1. Furthermore, the maximum width of the main catalyst 39 in the direction vertical to the path direction is referred to as w1. The length c1 of the main catalyst 39 is longer than the maximum width w1 of the main catalyst 39. The cross-sectional shape of the main catalyst 39 in the direction orthogonal to the path direction is, for example, circular. The cross-sectional shape may be arranged such that the length in the up-down direction is longer than the length in the left-right direction.

As shown in FIG. 5, the casing 40 includes a catalyst-provided passage member 40b, an upstream passage member 40a, and a downstream passage member 40c. The main catalyst 39 is provided in the catalyst-provided passage member 40b. In the path direction, the upstream end and the downstream end of the catalyst-provided passage member 40b are respectively at the same positions as the upstream end and the downstream end of the main catalyst 39. The cross-sectional area of the catalyst-provided passage member 40b, cut along the direction orthogonal to the path direction, is substantially constant in the path direction. The upstream passage member 40a is connected with the upstream end of the catalyst-provided passage member 40b. The downstream passage member 40c is connected with the upstream end of the catalyst-provided passage member 40b.

The upstream passage member 40a is at least partially tapered. The tapered part increases its inner diameter toward the downstream side. The downstream passage member 40c is at least partially tapered. The tapered part decreases its inner diameter toward the downstream side. The cross-sectional area of the catalyst-provided passage member 40b, cut along the direction orthogonal to the path direction, is referred to as S1. In at least a part of the upstream passage member 40a, the cross-sectional area of the upstream passage member 40a, cut along the direction orthogonal to the path direction, is smaller than the area S1. The at least part of the upstream passage member 40a encompasses the upstream end of the upstream passage member 40a. In at least a part of the downstream passage member 40c, the cross-sectional area of the downstream passage member 40c, cut along the direction orthogonal to the path direction, is smaller than the area S1. The at least part of the downstream passage member 40c encompasses the downstream end of the downstream passage member 40c.

As shown in FIG. 2 and FIG. 3, the main catalyst 39 is provided frontward of the crankshaft axis Cr1. In other words, when viewed in the left-right direction, the main catalyst 39 is provided in front of the linear line L1. As described above, the linear line L1 is a linear line which passes the crankshaft axis Cr1 and is in parallel to the up-down direction. As a matter of course, the upstream end of the main catalyst 39 is provided frontward of the crankshaft axis Cr1. When viewed in the left-right direction, the main catalyst 39 is positioned in front of (below) the cylinder axis Cy1.

As shown in FIG. 2, it is assumed that the linear line which is orthogonal to the cylinder axis Cy1 and orthogonal to the crankshaft axis Cr1 is L2. When viewed in the left-right direction, the main catalyst 39 is in front of the linear line L2.

As shown in FIG. 5, the path length from the upstream end of the exhaust passage member 36 (exhaust pipe 34) to the upstream end of the main catalyst 39 is referred to as b1. The path length b1 is a path length of a passage member formed of the upstream exhaust pipe 34a and the upstream passage member 40a of the catalyst unit 38. In other words, the path length b1 is a path length from the downstream end of the cylinder exhaust passage member 31 to the upstream end of the main catalyst 39. Furthermore, the path length from the downstream end of the main catalyst 39 to the downstream end of the exhaust pipe 34 is referred to as d1. The path length d1 is the path length of a passage member formed of the downstream passage member 40c of the catalyst unit 38 and the downstream exhaust pipe 34b. The path length from the combustion chamber 29 to the upstream end of the main catalyst 39 is a1+b1. The path length from the downstream end of the main catalyst 39 to the discharge port 35e is d1 +e1.

The main catalyst 39 is provided so that the path length a1+b1 is shorter than the path length d1+e1. Furthermore, the main catalyst 39 is provided so that the path length a1+b1 is shorter than the path length d1. Furthermore, the main catalyst 39 is provided so that the path length b1 is shorter than the path length d1.

The upstream oxygen detector 37 is provided on the exhaust pipe 34 (exhaust passage member 36). The upstream oxygen detector 37 is provided upstream of the main catalyst 39. The upstream oxygen detector 37 is a sensor configured to detect the oxygen density in the exhaust gas. The upstream oxygen detector 37 may be an oxygen sensor configured to detect whether the oxygen density is higher than a predetermined value or not. Alternatively, the upstream oxygen detector 37 may be a sensor (e.g., an A/F sensor: Air Fuel ration sensor) configured to output a detection signal representing the oxygen density in steps or linearly. The upstream oxygen detector 37 is arranged such that one end portion (detecting portion) is provided inside the exhaust pipe 34 whereas the other end portion is provided outside the exhaust pipe 34. The detecting portion of the upstream oxygen detector 37 is able to detect the oxygen density when it is heated to a high temperature and activated. A detection result of the upstream oxygen detector 37 is output to the electronic control unit 45.

As shown in FIG. 5, the path length from the combustion chamber 29 to the upstream oxygen detector 37 is referred to as h1. Furthermore, the path length from the upstream oxygen detector 37 to the upstream end of the main catalyst 39 is referred to as h2. The upstream oxygen detector 37 is provided so that the path length h1 is longer than the path length h2.

The structure of the motorcycle 1 of Embodiment 1 has been described. The motorcycle 1 of Embodiment 1 has the following characteristics.

As described above, the combustion chamber 29 is provided at least partially frontward of the crankshaft axis Cr1. The discharge port 35e of the exhaust passage member 36 is positioned rearward of the crankshaft axis Cr1. The exhaust passage member 36 is provided to partially pass a space above the crankshaft axis Cr1. In the single-cylinder four-stroke engine unit 19 structured in this way, the main catalyst 39 is positioned at least partially frontward of the crankshaft axis Cr1. The main catalyst 39 is therefore positioned to be relatively close to the combustion chamber 29.

The main catalyst 39 purifies the exhaust gas exhausted from one combustion chamber 29 most in the exhaust path 41. The main catalyst 39 therefore functions as resistance against the flow of the exhaust gas. Due to this, the flow speed of the exhaust gas is reduced upstream of the main catalyst 39. Therefore, the flow speed of the exhaust gas is reduced at a position of the exhaust path 41 close to the combustion chamber 29.

The pressure in the exhaust path 41 pulsates due to the exhaust gas intermittently exhausted from the combustion chamber 29. The pulsation of the pressure indicates that the pressure varies periodically. The main catalyst 39 is provided in the exhaust path 41. Due to this, the pressure pulsation is deflected by the main catalyst 39. Due to this, the exhaust gas exhausted from the combustion chamber 29 collides with the deflected wave, upstream of the main catalyst 39. This collision facilitates unburned fuel to be mixed with oxygen in the exhaust gas. As such, mixing of unburned fuel with oxygen in the exhaust gas is facilitated at a position close to the combustion chamber 29 in the exhaust path 41. Furthermore, the collision further reduces the flow speed of the exhaust gas upstream of the main catalyst 39. The flow speed of the exhaust gas is therefore further reduced at a position close to the combustion chamber 29 in the exhaust path 41.

Subsequently, the exhaust gas exhausted from the combustion chamber 29 will be explained. The exhaust gas, immediately after being exhausted from the combustion chamber 29, includes gaseous unburned fuel and oxygen. The exhaust gas moves in the exhaust path 41 while the unburned fuel is being oxidized. As the oxidation advances, the oxygen density in the exhaust gas decreases.

In a multi-cylinder four-stroke engine unit, exhaust gas is exhausted from multiple combustion chambers at different timings. The flows of the exhaust gas exhausted from different combustion chambers may be mixed with one another or collide with one another in an exhaust path. Due to the mixture or collision of the exhaust gas, the flow speed of the exhaust gas is reduced. Furthermore, mixing of unburned fuel with oxygen is facilitated. As a result, the oxidation of the unburned fuel is facilitated. In the meanwhile, in a single-cylinder four-stroke engine unit, exhaust gas is intermittently exhausted from a single combustion chamber. The mixture or collision of the exhaust gas is therefore less likely to occur. For this reason, as compared to the multi-cylinder four-stroke engine unit, a conventional single-cylinder four-stroke engine unit is disadvantageous in that non-oxidized unburned fuel is likely to reach a downstream part of the exhaust path.

In this connection, in the present embodiment, unburned fuel and oxygen in the exhaust gas are likely to be mixed with each other at a position close to the combustion chamber 29 in the exhaust path 41. In addition to this, the flow speed of the exhaust gas is reduced at the position close to the combustion chamber 29 in the exhaust path 41. As a result, the oxidation of the unburned fuel is facilitated at the position close to the combustion chamber 29 in the exhaust path 41.

In the exhaust passage member 36, the upstream oxygen detector 37 is provided upstream of the main catalyst 39. The path length (h1) from one combustion chamber 29 to the upstream oxygen detector 37 is longer than the path length (h2) from the upstream oxygen detector 37 to the upstream end of the main catalyst 39. The upstream end of the main catalyst 39 is positioned frontward of the crankshaft axis Cr1. Due to this, the position of upstream oxygen detector 37 is far from the combustion chamber 29, on the path from the combustion chamber 29 to the main catalyst 39. As described above, in the present embodiment, the oxidation of the unburned fuel is facilitated at a position close to the combustion chamber 29 in the exhaust path 41. A detection target by the upstream oxygen detector 37 is therefore the exhaust gas in which the oxidation has advanced. In other words, a detection target by the upstream oxygen detector 37 is the exhaust gas with stable oxygen density. The oxygen density in the exhaust gas can therefore be stably detected.

The linear line L2 is a linear line which is orthogonal to the cylinder axis Cy1 and orthogonal to the crankshaft axis Cr1. The linear line L2 extends downward from the crankshaft 27. When viewed in the left-right direction, at least a part of the main catalyst 39 is located in front of the linear line L2. The main catalyst 39 is therefore positioned to be closer to the combustion chamber 29. The oxidation of the unburned fuel is therefore facilitated at a position closer to the combustion chamber 29 in the exhaust path 41. A detection target by the upstream oxygen detector 37 is therefore the exhaust gas in which the oxidation has further advanced. In other words, a detection target by the upstream oxygen detector 37 is the exhaust gas with more stable oxygen density. The oxygen density in the exhaust gas can therefore be more stably detected.

The path length (a1+b1) from one combustion chamber 29 to the upstream end of the main catalyst 39 is shorter than the path length (d1+e1) from the downstream end of the main catalyst 39 to the discharge port 35e. It is therefore possible to provide the main catalyst 39 at a position closer to the combustion chamber 29. The oxidation of the unburned fuel is therefore facilitated at a position closer to the combustion chamber 29 in the exhaust path 41. A detection target by the upstream oxygen detector 37 is therefore the exhaust gas in which the oxidation has further advanced. In other words, a detection target by the upstream oxygen detector 37 is the exhaust gas with more stable oxygen density. The oxygen density in the exhaust gas can therefore be more stably detected.

The path length (a1+b1) from one combustion chamber 29 to the upstream end of the main catalyst 39 is shorter than the path length (d1) from the downstream end of the main catalyst 39 to the downstream end of the exhaust pipe 34. The main catalyst 39 is therefore positioned to be closer to the combustion chamber 29. The oxidation of the unburned fuel is therefore facilitated at a position closer to the combustion chamber 29 in the exhaust path 41. A detection target by the upstream oxygen detector 37 is therefore the exhaust gas in which the oxidation has further advanced. In other words, a detection target by the upstream oxygen detector 37 is the exhaust gas with more stable oxygen density. The oxygen density in the exhaust gas can therefore be more stably detected.

The main catalyst 39 is provided inside the exhaust pipe 34. The main catalyst 39 is therefore provided at a position close to the combustion chamber 29 as compared to cases where the main catalyst 39 is provided downstream of the exhaust pipe 34. The oxidation of the unburned fuel is therefore facilitated at a position closer to the combustion chamber 29 in the exhaust path 41. A detection target by the upstream oxygen detector 37 is therefore the exhaust gas in which the oxidation has advanced. In other words, a detection target by the upstream oxygen detector 37 is the exhaust gas with stable oxygen density. The oxygen density in the exhaust gas can therefore be stably detected.

The upstream oxygen detector 37 is provided on the exhaust pipe 34. The upstream oxygen detector 37 is therefore provided at a position far from the combustion chamber 29 as compared to cases where the upstream oxygen detector 37 is provided on the cylinder exhaust passage member 31. A detection target by the upstream oxygen detector 37 is therefore the exhaust gas in which the oxidation has further advanced. In other words, a detection target by the upstream oxygen detector 37 is the exhaust gas with more stable oxygen density. The oxygen density in the exhaust gas can therefore be stably detected.

In at least a part of the upstream passage member 40a, the cross-sectional area of the upstream passage member 40a, cut along the direction orthogonal to the flow direction of the exhaust gas, is smaller than the area S1. The area S1 is a cross-sectional area of the catalyst-provided passage member 40b cut along the direction orthogonal to the flow direction of the exhaust gas. Because of this arrangement, the cross-sectional area of the exhaust path 41 changes upstream of the main catalyst 39. This provides a change in the flow of the exhaust gas. The mixture of unburned fuel with oxygen is therefore facilitated. With this, the oxidation of the unburned fuel is facilitated upstream of the main catalyst 39. A detection target by the upstream oxygen detector 37 is therefore the exhaust gas in which the oxidation has further advanced. In other words, a detection target by the upstream oxygen detector 37 is the exhaust gas with more stable oxygen density. The oxygen density in the exhaust gas can therefore be more stably detected.

In addition to the above, because the main catalyst 39 is provided so as to be close to the combustion chamber, the length of the path in which the upstream oxygen detector 37 can be provided is short. The main catalyst 39 and the upstream oxygen detector 37 are therefore provided to be relatively close to each other. The oxygen density detected by the upstream oxygen detector 37 is therefore similar to the oxygen density of the exhaust gas flowing into the main catalyst 39. Therefore the combustion control based on a signal from the upstream oxygen detector 37 is more precisely carried out.

### (Modification 1 of Embodiment 1)

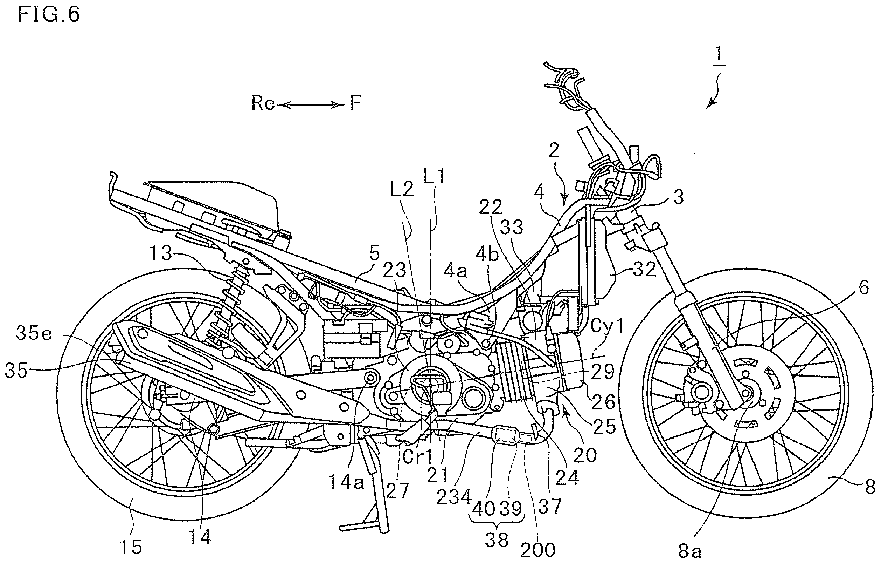

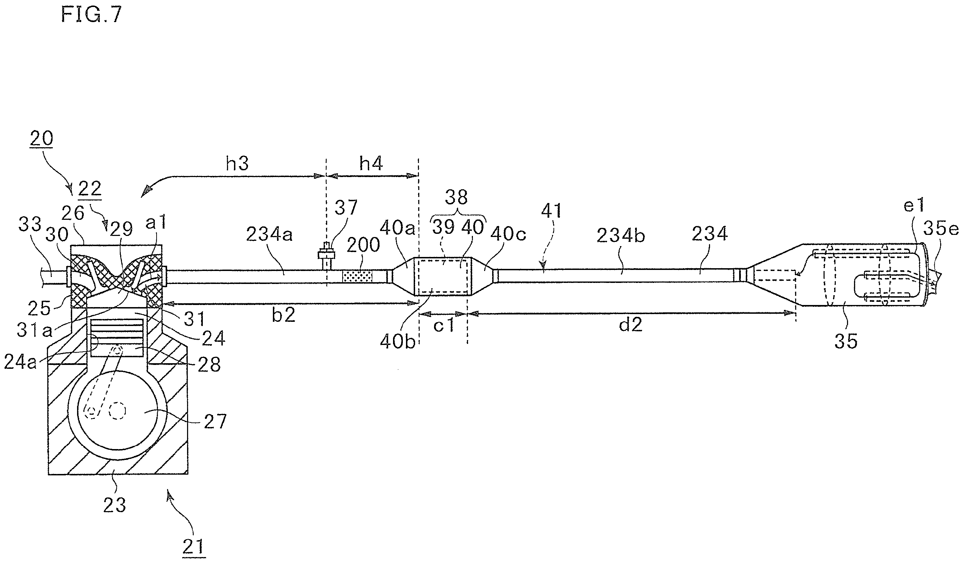

FIG. 6 is a side view of a motorcycle of Modification 1 of Embodiment 1. FIG. 7 is a schematic diagram of an engine main body and an exhaust system of Modification 1 of Embodiment 1. In Modification 1, items identical with those in Embodiment 1 are indicated by the same reference numerals and detailed descriptions thereof are omitted.

As shown in FIG. 6 and FIG. 7, an upstream sub-catalyst 200 (a single-combustion-chamber upstream sub-catalyst), the main catalyst 39, and the upstream oxygen detector 37 are provided in an exhaust pipe 234. Being similar to the exhaust pipe 34 of Embodiment 1, the exhaust pipe 234 is connected to the cylinder exhaust passage member 31 (see FIG. 7) and the silencer 35. The catalyst unit 38 is provided in the middle of the exhaust pipe 234. As shown in FIG. 7, a part of the exhaust pipe 234, which is upstream of the catalyst unit 38, is referred to as an upstream exhaust pipe 234a. A part of the exhaust pipe 234, which is downstream of the catalyst unit 38, is referred to as a downstream exhaust pipe 234b. While FIG. 7 depicts the exhaust pipe 234 as a linear pipe for simplification, the exhaust pipe 234 is not a linear pipe.

The upstream sub-catalyst 200 is provided upstream of the main catalyst 39. The upstream sub-catalyst 200 is provided in the upstream exhaust pipe 234a (exhaust pipe 234). The upstream sub-catalyst 200 may be formed solely of catalytic materials attached to an inner wall of the exhaust pipe 234. In such a case, the base to which the catalytic materials of the upstream sub-catalyst 200 are attached is the inner wall of the exhaust pipe 234. The upstream sub-catalyst 200 may include a base which is provided on the inner side of the exhaust pipe 234. In such a case, the upstream sub-catalyst 200 is formed of the base and the catalytic materials. The base of the upstream sub-catalyst 200 is, for example, plate-shaped. The plate-shaped base may be S-shaped, circular in shape, or C-shaped in cross-section in the direction orthogonal to the path direction. Regardless of whether the upstream sub-catalyst 200 includes the base or not, the upstream sub-catalyst 200 does not have a porous structure. For this reason, deflection of pressure pulsation of the exhaust gas is not as effectively generated by the upstream sub-catalyst 200 when compared to the main catalyst 39. Furthermore, the upstream sub-catalyst 200 does not greatly resist the flow of the exhaust gas as compared to the main catalyst 39.

The main catalyst 39 purifies the exhaust gas exhausted from the combustion chamber 29 most in the exhaust path 41. In other words, the main catalyst 39 purifies more of the exhaust gas exhausted from the combustion chamber 29 in the exhaust path 41 than the upstream sub-catalyst 200. That is, the degree of contribution to the purification by the upstream sub-catalyst 200 of the exhaust gas is lower than that of the main catalyst 39.

The degree of contribution to the purification by the main catalyst 39 and the upstream sub-catalyst 200 may be measured by the following method. In the explanation of the measuring method, concerning the main catalyst 39 and the upstream sub-catalyst 200, a catalyst acting upstream is termed a front catalyst whereas a catalyst acting downstream is termed a rear catalyst. In Modification 1, the upstream sub-catalyst 200 is the front catalyst whereas the main catalyst 39 is the rear catalyst.

The engine unit of Modification 1 is driven, and in a warm-up state, the density of harmful substances in the exhaust gas exhausted from the discharge port 35e is measured. The method of measuring the exhaust gas is in compliance with European regulations. In the warm-up state, the main catalyst 39 and the upstream sub-catalyst 200 are hot and activated. The main catalyst 39 and the upstream sub-catalyst 200 can therefore sufficiently perform their purification functions in this warm-up state.

Subsequently, the rear catalyst of the engine unit used in the experiment is detached, and only the base of the rear catalyst is attached. The engine unit in this state is assumed to be measurement engine unit A. In a manner similar to above, the density of harmful substances in the exhaust gas exhausted from the discharge port 35e in a warm-up state is measured.

Furthermore, the front catalyst of the measurement engine unit A is detached, and only the base of the front catalyst is attached. The engine unit in this state is assumed to be measurement engine unit B. In a manner similar to above, the density of harmful substances in the exhaust gas exhausted from the discharge port 35e in a warm-up state is measured. In the case where the upstream sub-catalyst 200 (front catalyst) is arranged such that catalytic materials are directly attached to the inner wall of the exhaust pipe 234, the exhaust pipe 234 is equivalent to the base. Attaching only the base of an upstream sub-catalyst 200, instead of attaching the above-described upstream sub-catalyst 200, is equivalent to not attaching catalytic materials to the inner wall of the exhaust pipe 234.

The measurement engine unit A includes the front catalyst and does not include the rear catalyst. The measurement engine unit B includes neither the front catalyst nor the rear catalyst. Due to this, the degree of contribution to the purification by the front catalyst (upstream sub-catalyst 200) is calculated as a difference between a measurement result from the measurement engine unit A and a measurement result from the measurement engine unit B. Furthermore, the degree of contribution to the purification by the rear catalyst (main catalyst 39) is calculated as a difference between a measurement result from the measurement engine unit A and a measurement result from the engine unit of Modification 1.

The purification capability of the upstream sub-catalyst 200 may be higher than or lower than that of the main catalyst 39. When the purification capability of the upstream sub-catalyst 200 is lower than the purification capability of the main catalyst 39, the purification rate of the exhaust gas when only the upstream sub-catalyst 200 is provided is lower than the purification rate of the exhaust gas when only the main catalyst 39 is provided.

As shown in FIG. 6, the main catalyst 39 is provided frontward of the crankshaft axis Cr1. When viewed in the left-right direction, the main catalyst 39 is in front of the linear line L2. The definition of the linear line L2 is identical to the definition in Embodiment 1. That is to say, the linear line L2 is a linear line which is orthogonal to the cylinder axis Cy1 and orthogonal to the crankshaft axis Cr1.

As shown in FIG. 7, the path length from the upstream end of the exhaust pipe 234 to the upstream end of the main catalyst 39 is referred to as b2. The path length from the downstream end of the main catalyst 39 to the downstream end of the exhaust pipe 234 is referred to as d2. The path length from the combustion chamber 29 to the upstream end of the main catalyst 39 is a1+b2. The path length from the downstream end of the main catalyst 39 to the discharge port 35e is d2+e1.

Being similar to Embodiment 1, the main catalyst 39 is provided so that the path length a1+b2 is shorter than the path length d2+e1. Furthermore, being similar to Embodiment 1, the main catalyst 39 is provided so that the path length a1+b2 is shorter than the path length d2. Furthermore, being similar to Embodiment 1, the main catalyst 39 is provided so that the path length b2 is shorter than the path length d2.

The upstream oxygen detector 37 is provided on the exhaust pipe 234. The upstream oxygen detector 37 is provided upstream of the upstream sub-catalyst 200. The path length from the combustion chamber 29 to the upstream oxygen detector 37 is referred to as h3. The path length from the upstream oxygen detector 37 to the upstream end of the main catalyst 39 is referred to as h4. Being similar to Embodiment 1, the upstream oxygen detector 37 is provided so that the path length h3 is longer than the path length h4.

In the Modification 1, the upstream sub-catalyst 200 is provided upstream of the main catalyst 39. The upstream sub-catalyst 200 does not have a porous structure. For this reason, the upstream sub-catalyst 200 does not greatly resist the flow of the exhaust gas as compared to the main catalyst 39. Furthermore, deflection of the pressure pulsation of the exhaust gas is not effectively generated by the upstream sub-catalyst 200 as compared to the main catalyst 39. Therefore the upstream sub-catalyst 200 does not greatly influence the flow of the exhaust gas. The outcome achieved by the positions of the main catalyst 39 and the upstream oxygen detector 37 is therefore not effected.

### (Embodiment 2)

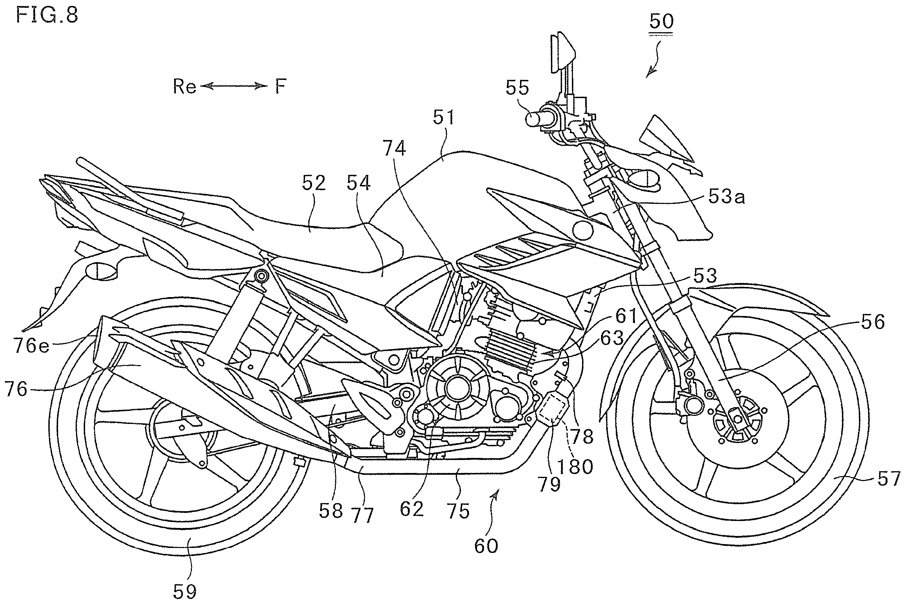

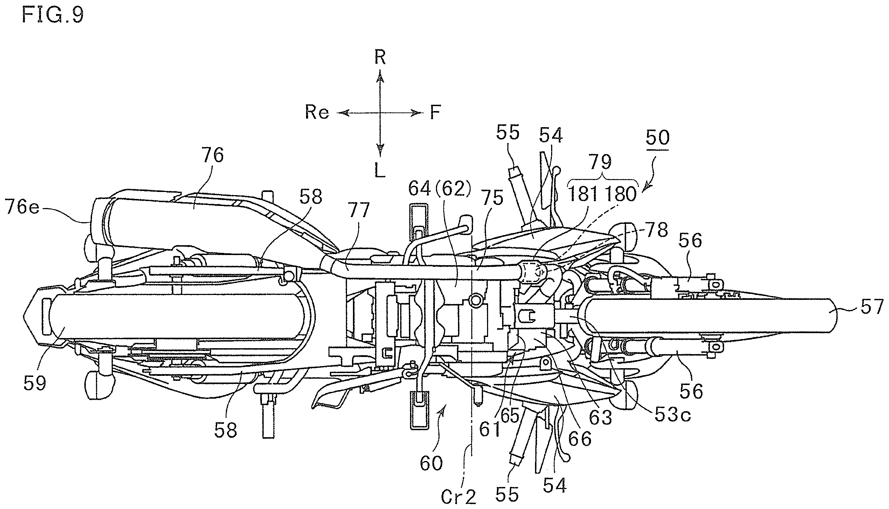

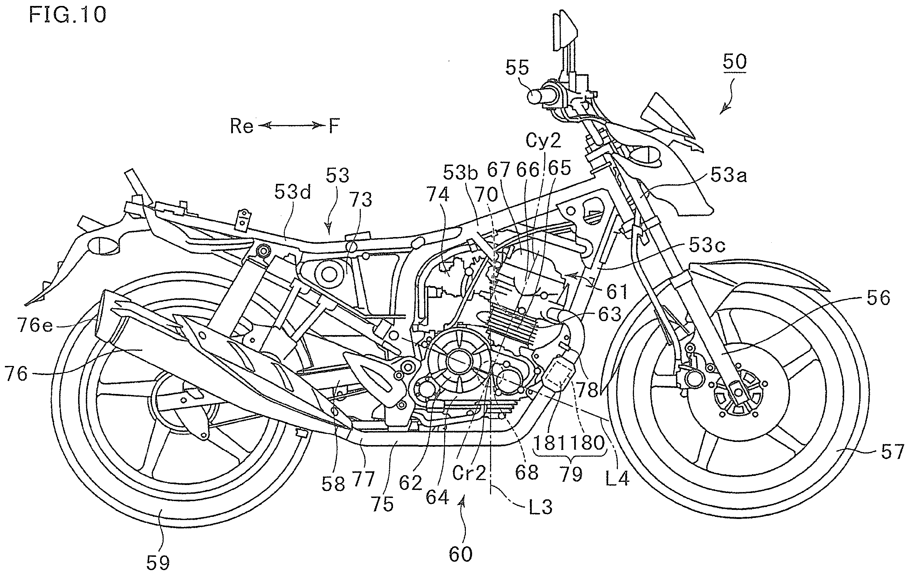

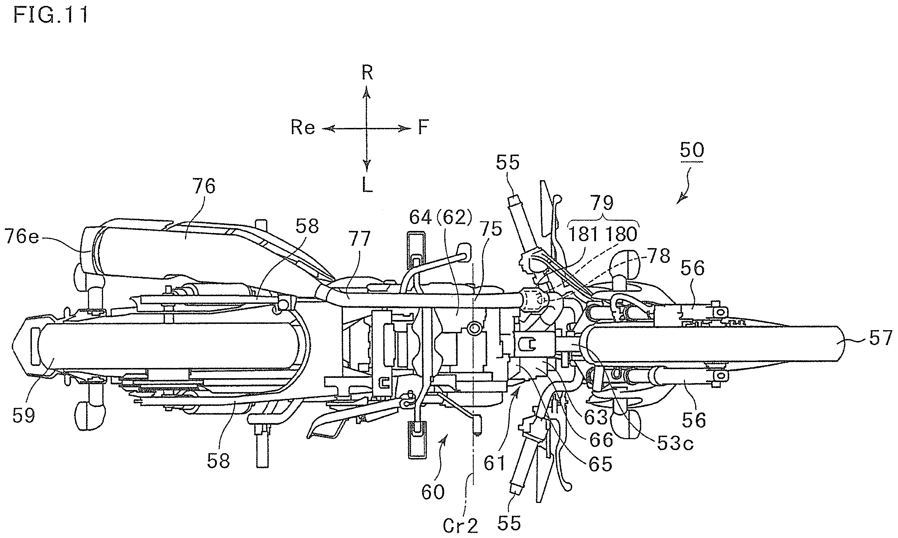

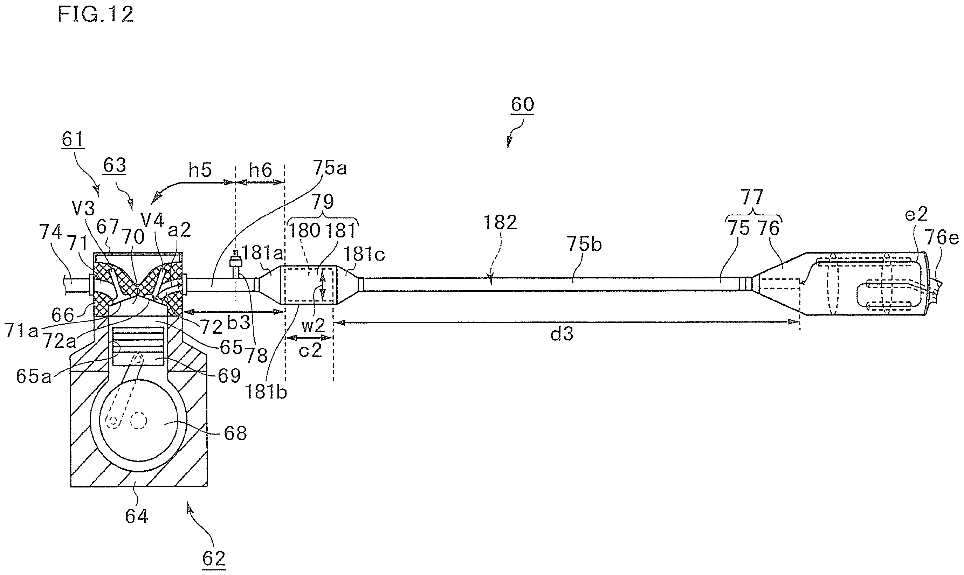

FIG. 8 is a side view of a motorcycle of Embodiment 2 of the present teaching. FIG. 9 is a bottom view of the motorcycle of Embodiment 2. FIG. 10 is a side view showing a state in which a vehicle body cover, etc. have been removed from the motorcycle of Embodiment 2. FIG. 11 is a bottom view showing the state in which the vehicle body cover, etc. have been removed from the motorcycle of Embodiment 2. FIG. 12 is a schematic diagram of an engine and an exhaust system of the motorcycle of Embodiment 2.

A vehicle of Embodiment 2 is a so-called street-type motorcycle 50. As shown in FIG. 10, the motorcycle 50 is provided with a vehicle body frame 53. The vehicle body frame 53 includes a head pipe 53a, an upper main frame 53b, a lower main frame 53c, and a seat frame 53d. From an end on the head pipe 53a side to the other end, the upper main frame 53b extends rearward and downward and is then curved downward and extends downward. The lower main frame 53c is positioned below the upper main frame 53b. The lower main frame 53c extends rearward and downward from the head pipe 53a. The seat frame 53d extends downward from an intermediate part of the upper main frame 53b.

A steering shaft is rotatably inserted into the head pipe 53a. A handlebar 55 is provided at an upper part of the steering shaft. A display (not illustrated) is provided in the vicinity of the handlebar 55. The display is configured to display vehicle speed, engine rotation speed, warnings, and the like.

The upper and lower end portions of the steering shaft are connected with paired left and right front forks 56 via brackets. The lower end portions of the front forks 56 support a front wheel 57 in a rotatable manner.

Front end portions of paired left and right rear arms 58 are swingably supported by a rear portion of the vehicle body frame 53. Rear end portions of the rear arms 58 support a rear wheel 59 in a rotatable manner.

The upper main frame 53b supports a fuel tank 51 (see FIG. 8). The seat frame 53d supports a seat 52 (see FIG. 8). The vehicle body frame 53 supports an engine main body 61. The vehicle body frame 53 supports an air cleaner 73 (see FIG. 10). As shown in FIG. 10, when viewed in the left-right direction, an upper part of the engine main body 61 is provided between the upper main frame 53b and the lower main frame 53c. The air cleaner 73 is provided behind the engine main body 61.

As shown in FIG. 8, the motorcycle 50 is provided with a vehicle body cover 54 which covers the vehicle body frame 53 and the like. The vehicle body cover 54 covers an upper part of the engine main body 61 and the air cleaner 73.

The motorcycle 50 includes a single-cylinder four-stroke engine unit 60. The single-cylinder four-stroke engine unit 60 includes the engine main body 61, the air cleaner 73 (see FIG. 10), an intake pipe 74, an exhaust pipe 75, a silencer 76, a main catalyst 180 (a single-combustion-chamber main catalyst), and an upstream oxygen detector 78 (a single-combustion-chamber upstream oxygen detector). The single-cylinder four-stroke engine unit 60 further includes an electronic control unit which is similar to the electronic control unit 45 of Embodiment 1. The electronic control unit controls the engine main body 61.

The engine main body 61 is a single-cylinder four-stroke engine. As shown in FIG. 10, the engine main body 61 includes a crankcase member 62 and a cylinder member 63. The cylinder member 63 extends frontward and upward from the crankcase member 62.

The crankcase member 62 includes a crankcase main body 64. The crankcase member 62 includes a crankshaft 68, a transmission mechanism, and the like which are housed in the crankcase main body 64. The central axis (crankshaft axis) Cr2 of the crankshaft 68 extends in the left-right direction. Lubricating oil is stored in the crankcase main body 64. The oil is conveyed by an oil pump (not illustrated) and is circulated in the engine main body 61.

The cylinder member 63 includes a cylinder body 65, a cylinder head 66, a head cover 67, and components housed in the members 65 to 67. As shown in FIG. 10, the cylinder body 65 is connected with an upper part of the crankcase main body 64. The cylinder head 66 is connected with an upper part of the cylinder body 65. The head cover 67 is connected with an upper part of the cylinder head 66.

As shown in FIG. 12, a cylinder hole 65a is made in the cylinder body 65. The cylinder hole 65a houses a piston 69 so that the piston 69 is able to reciprocate. The piston 69 is connected with the crankshaft 68 via a connecting rod. Hereinafter, the central axis Cy2 of the cylinder hole 65a is referred to as a cylinder axis Cy2. As shown in FIG. 10, the engine main body 61 is disposed so that the cylinder axis Cy2 extends in the vertical direction. To be more specific, the direction in which the cylinder axis Cy2 extends from the crankcase member 62 to the cylinder member 63 is frontward and upward. The angle of inclination of the cylinder axis Cy2 with respect to the horizontal direction is 45 degree or greater and 90 degrees or less.

As shown in FIG. 12, one combustion chamber 70 is formed in the cylinder member 63. The combustion chamber 70 is formed of an inner surface of the cylinder hole 65a of the cylinder body 65, the cylinder head 66, and the piston 69. As shown in FIG. 10, the combustion chamber 70 is positioned frontward of the crankshaft axis Cr2. In other words, it is assumed that a linear line which passes the crankshaft axis Cr2 and is in parallel to the up-down direction is L3. When viewed in the left-right direction, the combustion chamber 70 is positioned in front of the linear line L3.

As shown in FIG. 12, a cylinder intake passage member 71 and a cylinder exhaust passage member 72 (a single-combustion-chamber cylinder exhaust passage member) are formed in the cylinder head 66. In the cylinder head 66, an intake port 71a and an exhaust port 72a are formed in a wall portion forming the combustion chamber 70. The cylinder intake passage member 71 extends from the intake port 71a to an inlet formed in the outer surface (rear surface) of the cylinder head 66. The cylinder exhaust passage member 72 extends from the exhaust port 72a to an outlet formed in the outer surface (front surface) of the cylinder head 66. Air passes through the inside of the cylinder intake passage member 71 and is then supplied to the combustion chamber 70. Exhaust gas exhausted from the combustion chamber 70 passes through the cylinder exhaust passage member 72.

An intake valve V3 is provided in the cylinder intake passage member 71. An exhaust valve V4 is provided in the cylinder exhaust passage member 72. The intake port 71a is opened and closed by the movement of the intake valve V3. The exhaust port 72a is opened and closed by the movement of the exhaust valve V4. An intake pipe 74 is connected to an end portion (inlet) of the cylinder intake passage member 71. An exhaust pipe 75 is connected to an end portion (outlet) of the cylinder exhaust passage member 72. The path length of the cylinder exhaust passage member 72 is referred to as a2.

The single-cylinder four-stroke engine unit 60 includes an ignition plug, a valve operating mechanism, an injector, and a throttle valve in the same manner as the engine main body 20 of Embodiment 1. Furthermore, in the same manner as Embodiment 1, the single-cylinder four-stroke engine unit 60 includes sensors such as an engine rotation speed sensor and a throttle position sensor.

As described above, the single-cylinder four-stroke engine unit 60 includes the engine main body 61, the exhaust pipe 75, the silencer 76, the main catalyst 180, and the upstream oxygen detector 78. The exhaust passage member 77 (a single-combustion-chamber exhaust passage member) is formed of the exhaust pipe 75 and the silencer 76. The silencer 76 is provided with a discharge port 76e which is exposed to the atmosphere. The exhaust passage member 77 allows the exhaust gas to flow from the downstream end of the cylinder exhaust passage member 72 to the discharge port 76e. The path from the combustion chamber 70 to the discharge port 76e is referred to as an exhaust path 182 (see FIG. 12). The exhaust path 182 is formed of the cylinder exhaust passage member 72 and the exhaust passage member 77. The exhaust path 182 is a space through which exhaust gas passes.

As shown in FIG. 12, the upstream end portion of the exhaust pipe 75 is connected with the cylinder exhaust passage member 72. The downstream end portion of the exhaust pipe 75 is connected with the silencer 76. A catalyst unit 79 is provided in the middle of the exhaust pipe 75. A part of the exhaust pipe 75, which is upstream of the catalyst unit 79, is referred to as an upstream exhaust pipe 75a. A part of the exhaust pipe 75, which is downstream of the catalyst unit 79, is referred to as a downstream exhaust pipe 75b. While FIG. 12 depicts the exhaust pipe 75 as a linear pipe for simplification, the exhaust pipe 75 is not a linear pipe.

As shown in FIG. 9 and FIG. 11, most of the exhaust pipe 75 is provided on the right side of the motorcycle 50. As shown in FIG. 10, a part of the exhaust pipe 75 is positioned below the crankshaft axis Cr2. The exhaust pipe 75 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from a direction along the front-rear direction to a direction along the up-down direction. To be more specific, when viewed in the left-right direction, the upstream bended portion changes the flow direction of the exhaust gas from frontward and downward to rearward and downward. When viewed in the left-right direction, the downstream bended portion changes the flow direction of the exhaust gas from a direction along the up-down direction to a direction along the front-rear direction. To be more specific, when viewed in the left-right direction, the downstream bended portion changes the flow direction of the exhaust gas from rearward and downward to rearward. A part of the exhaust pipe, which is downstream of the downstream bended portion, is positioned below the crankshaft axis Cr2. The main catalyst 180 is provided between the two bended portions.

The exhaust gas exhausted from the downstream end of the exhaust pipe 75 flows into the silencer 76. The silencer 76 is connected with the exhaust pipe 75. The silencer 76 is configured to restrain pulsation in the exhaust gas. With this, the silencer 76 restrains the volume of the sound (exhaust sound) generated by the exhaust gas. Multiple expansion chambers and multiple pipes connecting the expansion chambers with one another are provided inside the silencer 76. The downstream end portion of the exhaust pipe 75 is provided inside an expansion chamber of the silencer 76. The discharge port 76e exposed to the atmosphere is provided at the downstream end of the silencer 76. As shown in FIG. 12, the path length of the exhaust path from the downstream end of the exhaust pipe 75 to the discharge port 76e is referred to as e2. The exhaust gas having passed the silencer 76 is discharged into the atmosphere via the discharge port 76e. As shown in FIG. 10, the discharge port 76e is positioned rearward of the crankshaft axis Cr2.

The main catalyst 180 is provided inside the exhaust pipe 75 (exhaust passage member 77). The catalyst unit 79 includes a hollow cylindrical casing 181 and the main catalyst 180. The upstream end of the casing 181 is connected with the upstream exhaust pipe 75a. The downstream end of the casing 181 is connected with the downstream exhaust pipe 75b. The casing 181 forms a part of the exhaust pipe 75 (exhaust passage member 77). The main catalyst 180 is fixed to the inside of the casing 181. The exhaust gas is purified when passing through the main catalyst 180. All exhaust gas exhausted from the exhaust port 72a of the combustion chamber 70 passes through the main catalyst 180. The main catalyst 180 purifies the exhaust gas exhausted from the combustion chamber 70 most in the exhaust path 182.

The materials of the main catalyst 180 are identical to those of the main catalyst 39 of Embodiment 1. The main catalyst 180 has a porous structure. In the main catalyst 180, pores which are sufficiently narrower than the width of the path in the upstream exhaust pipe 75a are formed. As shown in FIG. 12, the length of the main catalyst 180 in the path direction is referred to as c2. Furthermore, the maximum width of the main catalyst 180 in the direction orthogonal to the path direction is referred to as w2. The length c2 of the main catalyst 180 is longer than the maximum width w2 of the main catalyst 180.

As shown in FIG. 12, the casing 181 includes a catalyst-provided passage member 181b, an upstream passage member 181a, and a downstream passage member 181c. The main catalyst 180 is provided in the catalyst-provided passage member 181b. In the path direction, the upstream end and the downstream end of the catalyst-provided passage member 181b are respectively in the same positions as the upstream end and the downstream end of the main catalyst 180. The cross-sectional area of the catalyst-provided passage member 181b cut along the direction orthogonal to the path direction is substantially constant. The upstream passage member 181a is connected with the upstream end of the catalyst-provided passage member 181b. The downstream passage member 181c is connected with the upstream end of the catalyst-provided passage member 181b.

The upstream passage member 181a is at least partially tapered. The tapered part increases its inner diameter toward the downstream side. The downstream passage member 181c is at least partially tapered. The tapered part decreases its inner diameter toward the downstream side. The cross-sectional area of the catalyst-provided passage member 181b cut along the direction orthogonal to the path direction is referred to as S2. In at least a part of the upstream passage member 181a, the cross-sectional area of the upstream passage member 181a cut along the direction orthogonal to the path direction is smaller than the area S2. The at least part of the upstream passage member 181a encompasses the upstream end of the upstream passage member 181a. In at least a part of the downstream passage member 181c, the cross-sectional area of the downstream passage member 181c cut along the direction orthogonal to the path direction is smaller than the area S2. The at least part of the downstream passage member 181c encompasses the downstream end of the downstream passage member 181c.

As shown in FIG. 10, the main catalyst 180 is provided frontward of the crankshaft axis Cr2. In other words, when viewed in the left-right direction, the main catalyst 180 is provided in front of the linear line L3. As described above, the linear line L3 is a linear line which passes the crankshaft axis Cr2 and is in parallel to the up-down direction. As a matter of course, the upstream end of the main catalyst 180 is provided frontward of the crankshaft axis Cr2. When viewed in the left-right direction, the main catalyst 180 is positioned in front of the cylinder axis Cy2.

As shown in FIG. 10, assume that a linear line which is orthogonal to the cylinder axis Cy2 and orthogonal to the crankshaft axis Cr2 is L4. When viewed in the left-right direction, the main catalyst 180 is positioned in front of the linear line L4.

As shown in FIG. 12, the path length from the upstream end of the exhaust passage member 77 (exhaust pipe 75) to the upstream end of the main catalyst 180 is referred to as b3. The path length b3 is a path length of a passage member formed of the upstream exhaust pipe 75a and the upstream passage member 181a of the catalyst unit 79. In other words, the path length b3 is a path length from the downstream end of the cylinder exhaust passage member 72 to the upstream end of the main catalyst 180. Furthermore, the path length from the downstream end of the main catalyst 180 to the downstream end of the exhaust pipe 75 is referred to as d3. The path length d3 is the path length of a passage member formed of the downstream passage member 181c of the catalyst unit 79 and the downstream exhaust pipe 75b. The path length from the combustion chamber 70 to the upstream end of the main catalyst 180 is a2+b3. The path length from the downstream end of the main catalyst 180 to the discharge port 76e is d3+e2.

The main catalyst 180 is provided so that the path length a2+b3 is shorter than the path length d3+e2. Furthermore, the main catalyst 180 is provided so that the path length a2+b3 is shorter than the path length d3. Furthermore, the main catalyst 180 is provided so that the path length b3 is shorter than the path length d3.

The upstream oxygen detector 78 is provided on the exhaust pipe 75 (exhaust passage member 77). The upstream oxygen detector 78 is provided upstream of the main catalyst 180. The upstream oxygen detector 78 is a sensor configured to detect the oxygen density in the exhaust gas. The structure of the upstream oxygen detector 78 is identical with that of the upstream oxygen detector of Embodiment 1.

As shown in FIG. 12, the path length from the combustion chamber 70 to the upstream oxygen detector 78 is referred to as h5. Furthermore, the path length from the upstream oxygen detector 78 to the upstream end of the main catalyst 180 is referred to as h6. The upstream oxygen detector 78 is provided so that the path length h5 is longer than the path length h6.

As described above, the motorcycle 50 of Embodiment 2 is structured such that the main catalyst 180 is provided frontward of the crankshaft axis Cr2. Apart from the above, the arrangements of the components are similar to those in the motorcycle 1 of Embodiment 1. The arrangements similar to those in Embodiment 1 exert effects similar to the effects described in Embodiment 1.

In Embodiment 2, the cylinder axis Cy2 extends in the up-down direction. The cylinder axis Cy2 passes the crankshaft axis Cr2. When viewed in the left-right direction, at least a part of the main catalyst 180 is provided in front of the cylinder axis Cy2. It is therefore possible to provide the main catalyst 180 at a position closer to the combustion chamber 70. As a result, the oxidation of the unburned fuel is facilitated at a position close to the combustion chamber 70 in the exhaust path 182. A detection target by the upstream oxygen detector 78 is therefore the exhaust gas in which the oxidation has advanced. In other words, a detection target by the upstream oxygen detector 78 is the exhaust gas with stable oxygen density. The oxygen density in the exhaust gas can therefore be stably detected.

The structure of the exhaust system of Modification 1 described above may be employed in the motorcycle 50 of Embodiment 2. Effects similar to those in Modification 1 are obtained in such a case.

### (Embodiment 3)

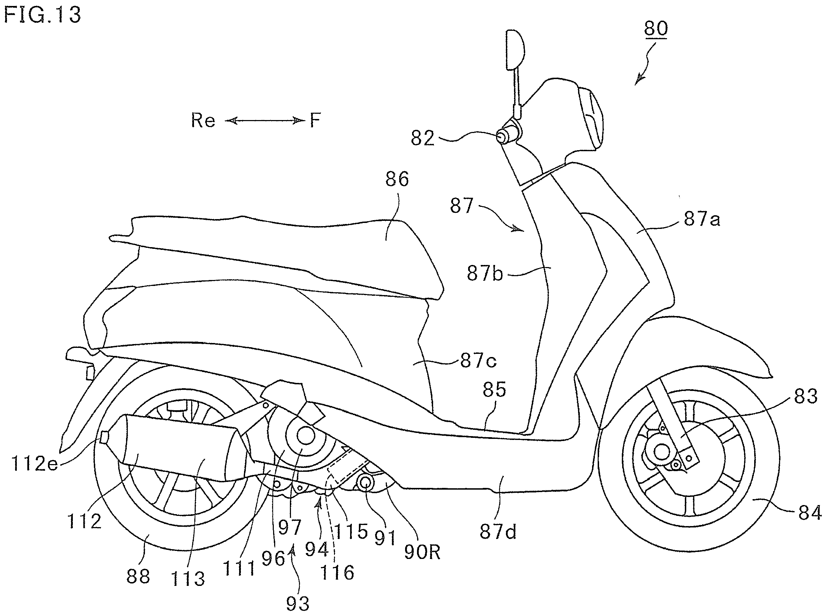

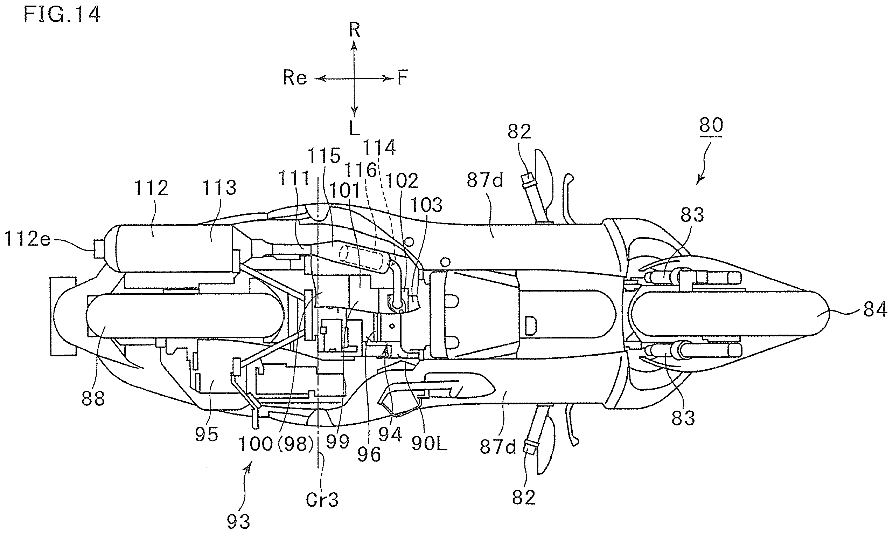

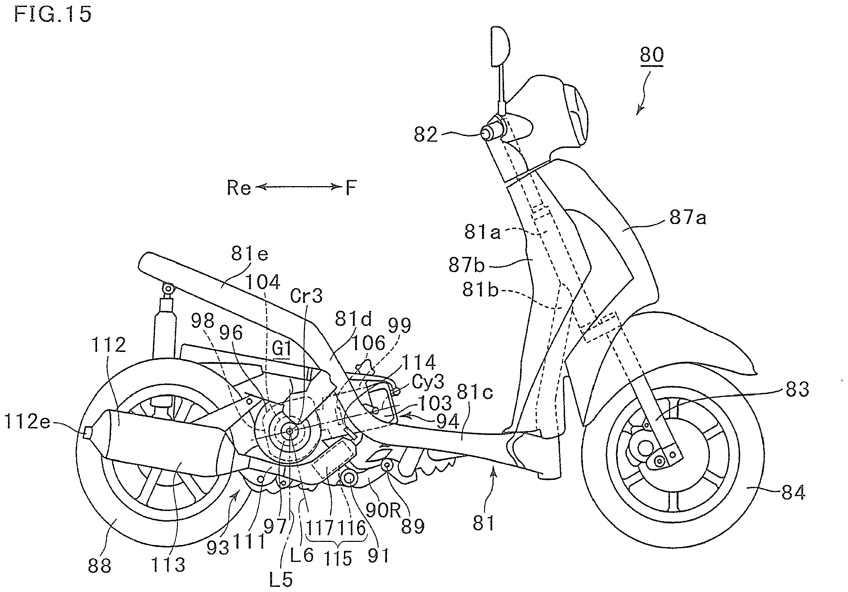

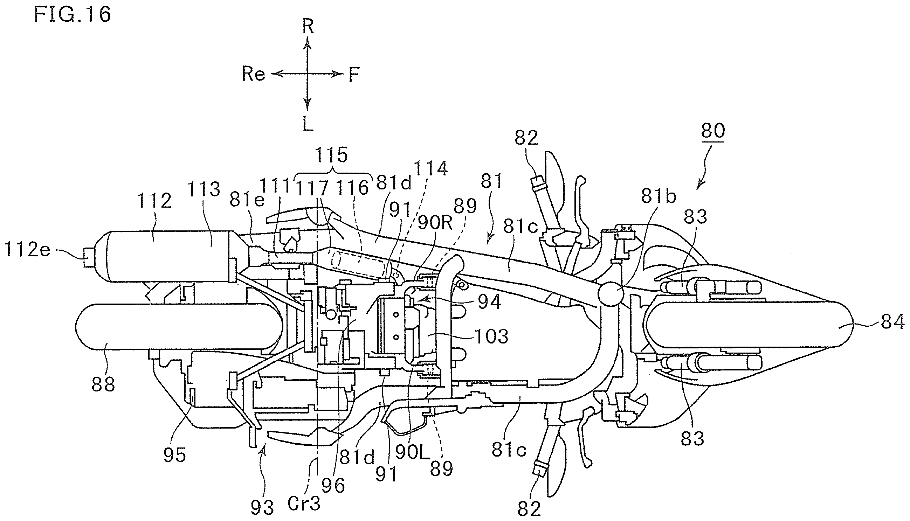

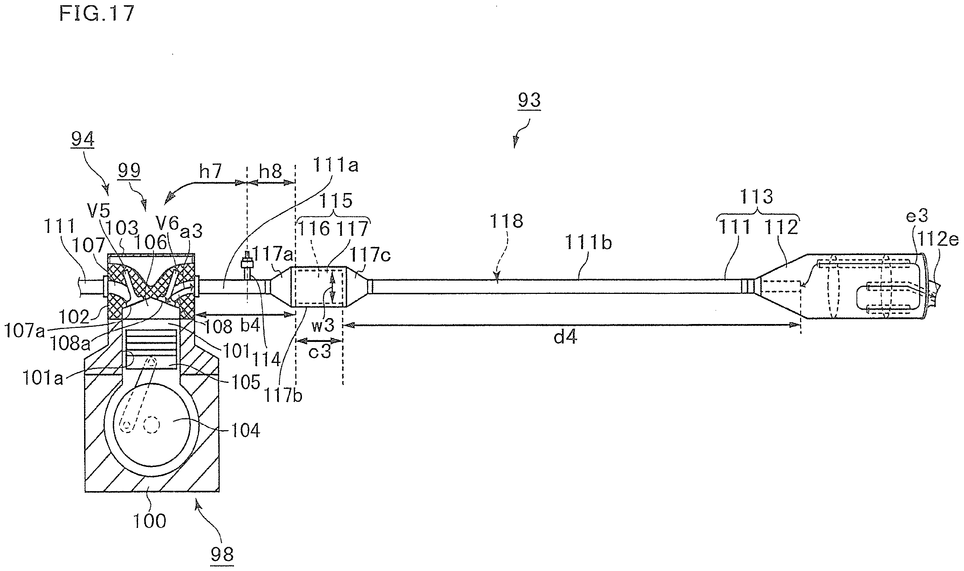

FIG. 13 is a side view of a motorcycle of Embodiment 3 of the present teaching. FIG. 14 is a bottom view of the motorcycle of Embodiment 3. FIG. 15 is a side view showing a state in which a vehicle body cover, etc. have been removed from the motorcycle of Embodiment 3. FIG. 16 is a bottom view showing the state in which the vehicle body cover, etc. have been removed from the motorcycle of Embodiment 3. FIG. 17 is a schematic diagram of an engine and an exhaust system of the motorcycle of Embodiment 3.

A vehicle of Embodiment 3 is a so-called scooter-type motorcycle 80. As shown in FIG. 15, the motorcycle 80 is provided with a vehicle body frame 81. The vehicle body frame 81 includes a head pipe 81a, a main frame 81b, paired left and right side frames 81c, paired left and right rear frames 81d, and paired left and right seat frames 81e. The main frame 81b extends rearward and downward from the head pipe 81a. The paired left and right side frames 81c extend substantially horizontally rearward from a lower end portion of the main frame 81b. The paired left and right rear frame 81d extend rearward and upward from lower end portions of the side frames 81c. The paired left and right seat frames 81e extend horizontally rearward from rear end portions of the rear frames 81d.

A steering shaft is rotatably inserted into the head pipe 81a. A handlebar 82 is provided at an upper part of the steering shaft. A display (not illustrated) is provided in the vicinity of the handlebar 82. The display is configured to display vehicle speed, engine rotation speed, warnings, and the like.

Paired left and right front forks 83 are supported at a lower part of the steering shaft. The lower end portions of the front forks 83 support a front wheel 84 in a rotatable manner.

Afoot board 85 (see FIG. 13) is attached to the paired left and right side frames 81c. A rider seated on a subsequently-described seat 86 places his/her feet on this foot board 85.

The seat frames 81e support the seat 86 (see FIG. 13). In the vehicle front-rear direction, the seat 86 extends from an intermediate part to a rear end part of the vehicle body frame 81.

A space G1 (see FIG. 15) is formed below the seat 86. A storage box (not illustrated) is provided in this space G1. The storage box is an open-top box. The seat 86 functions as a lid for opening and closing the upper opening of the storage box. The storage box is provided between the left and right seat frames 81e. The storage box is supported by the rear frames 81d and the seat frames 81e.

As shown in FIG. 13, the motorcycle 80 is provided with a vehicle body cover 87 which covers the vehicle body frame 81 and the like. The vehicle body cover 87 includes a front cover 87a, a leg shield 87b, a main cover 87c, and an under cover 87d. The front cover 87a is provided in front of the head pipe 81a. The leg shield 87b is provided behind the head pipe 81a. The front cover 87a and the leg shield 87b covers the head pipe 81a and the main frame 81b. The main cover 87c extends upward from a rear portion of the foot board 85. The main cover 87c covers the storage box substantially entirely. The under cover 87d is provided below the front cover 87a, the leg shield 87b, and the main cover 87c. The under cover 87d covers an upper front part of a subsequently-described engine main body 94 from the front, left, and right.

A unit-swinging single-cylinder four-stroke engine unit 93 is attached to the vehicle body frame 81. The single-cylinder four-stroke engine unit 93 includes the engine main body 94 and a power transmission unit 95 (see FIG. 14 and FIG. 16). The power transmission unit 95 is connected to a rear portion of the engine main body 94. The power transmission unit 95 is provided to the left of the engine main body 94. The power transmission unit 95 houses a transmission. The power transmission unit 95 supports a rear wheel 88 in a rotatable manner.

The engine main body 94 and the power transmission unit 95 are configured to be integrally swingable with respect to the vehicle body frame 81. To be more specific, as shown in FIG. 15 and FIG. 16, a right link component 90R and a left link component 90L are connected with left and right end portions of a lower part of the engine main body 94. The right link component 90R and the left link component 90L extend frontward from the engine main body 94. The leading end portions of the right link component 90R and the left link component 90L are rotatably connected with the vehicle body frame 81 via pivot shafts 89. Furthermore, the right link component 90R and the left link component 90L are rotatably connected with the engine main body 94 via pivot shafts 91 (see FIG. 15). It is noted that FIG. 14 does not show some parts such as a subsequently-described shroud 96 of the right link component 90R and the engine main body 94.

The single-cylinder four-stroke engine unit 93 includes the engine main body 94, the power transmission unit 95, an air cleaner (not illustrated), an intake pipe 110 (see FIG. 17), an exhaust pipe 111, a silencer 112, a main catalyst 116 (a single-combustion-chamber main catalyst), and an upstream oxygen detector 114 (a single-combustion-chamber upstream oxygen detector). The single-cylinder four-stroke engine unit 93 further includes an electronic control unit which is similar to the electronic control unit 45 of Embodiment 1. The electronic control unit controls the engine main body 94.

The engine main body 94 is a single-cylinder four-stroke engine. The engine main body 94 is a forced air-cooled engine. The engine main body 94 includes the shroud 96, a fan 97, a crankcase member 98, and a cylinder member 99.

The cylinder member 99 extends frontward from the crankcase member 98. The shroud 96 covers the whole circumference of a rear portion of the cylinder member 99. To be more specific, the shroud 96 covers the whole circumference of the entire subsequently-described cylinder body 101 and the entire subsequently-described cylinder head 102. However, the circumference of the exhaust pipe 111 connected with the cylinder head 102 is not covered. The shroud 96 covers the right part of the crankcase member 98.

The fan 97 is provided between the shroud 96 and the crankcase member 98. An inflow port for air intake is formed at a part of the shroud 96 opposite the fan 97. The fan 97 generates an air flow for cooling the engine main body 94. To be more specific, air is introduced into the shroud 96 by the rotation of the fan 97. As this air flow collides with the engine main body 94, the crankcase member 98 and the cylinder member 99 are cooled.

The crankcase member 98 includes a crankcase main body 100 and a crankshaft 104 or the like housed in the crankcase main body 100. The central axis (crankshaft axis) Cr3 of the crankshaft 104 extends in the left-right direction. The fan 97 is integrally and rotatably connected with a right end portion of the crankshaft 104. The fan 97 is driven by the rotation of the crankshaft 104. Lubricating oil is stored in the crankcase main body 100. The oil is conveyed by an oil pump (not illustrated) and is circulated in the engine main body 94.

The cylinder member 99 includes a cylinder body 101, a cylinder head 102, a head cover 103, and components housed in the members 101 to 103. As shown in FIG. 14, the cylinder body 101 is connected with a front portion of the crankcase main body 100. The cylinder head 102 is connected with a front portion of the cylinder body 101. The head cover 103 is connected with a front portion of the cylinder head 102.

As shown in FIG. 17, a cylinder hole 101a is made in the cylinder body 101. The cylinder hole 101a houses a piston 105 so that the piston 105 is able to reciprocate. The piston 105 is connected with the crankshaft 104 via a connecting rod. Hereinafter, the central axis Cy3 of the cylinder hole 101a is referred to as a cylinder axis Cy3. As shown in FIG. 15, the engine main body 94 is disposed so that the cylinder axis Cy3 extends in the front-rear direction. To be more specific, the direction in which the cylinder axis Cy3 extends from the crankcase member 98 to the cylinder member 99 is frontward and upward. The angle of inclination of the cylinder axis Cy3 with respect to the horizontal direction is 0 degrees or greater and 45 degrees or less.

As shown in FIG. 17, one combustion chamber 106 is formed in the cylinder member 99. The combustion chamber 106 is formed by an inner surface of the cylinder hole 101a of the cylinder body 101, the cylinder head 102, and the piston 105. As shown in FIG. 15, the combustion chamber 106 is positioned frontward of the crankshaft axis Cr3. In other words, a linear line which passes the crankshaft axis Cr3 and is parallel to the up-down direction is L5 so that when viewed in the left-right direction, the combustion chamber 106 is positioned in front of the linear line L5.

As shown in FIG. 17, a cylinder intake passage member 107 and a cylinder exhaust passage member 108 (a single-combustion-chamber cylinder exhaust passage member) are formed in the cylinder head 102. In the cylinder head 102, an intake port 107a and an exhaust port 108a are formed in a wall portion forming the combustion chamber 106. The cylinder intake passage member 107 extends from the intake port 107a to an inlet formed in the outer surface (upper surface) of the cylinder head 102. The cylinder exhaust passage member 108 extends from the exhaust port 108a to an outlet formed in the outer surface (lower surface) of the cylinder head 102. Air passes through the inside of the cylinder intake passage member 107 and is then supplied to the combustion chamber 106. Exhaust gas exhausted from the combustion chamber 106 passes through the cylinder exhaust passage member 108.

An intake valve V5 is provided in the cylinder intake passage member 107. An exhaust valve V6 is provided in the cylinder exhaust passage member 108. The intake port 107a is opened and closed by movement of the intake valve V5. The exhaust port 108a is opened and closed by movement of the exhaust valve V6. An intake pipe 110 is connected with an end portion (inlet) of the cylinder intake passage member 107. An exhaust pipe 111 is connected with an end portion (outlet) of the cylinder exhaust passage member 108. The path length of the cylinder exhaust passage member 108 is referred to as a3.

As described above, FIG. 14 does not show some parts such as the right link component 90R and the shroud 96. With this arrangement, a connection part of the lower surface of the cylinder head 102 and the exhaust pipe 111 is viewable. As shown in FIG. 14 and FIG. 16, when viewed from below, an upstream end portion of the exhaust pipe 111 is positioned between the right link component 90R and the left link component 90L. However, as shown in FIG. 15, when viewed in the left-right direction, the exhaust pipe 111 passes above the right link component 90R and the left link component 90L. The exhaust pipe 111 therefore does not pass between the right link component 90R and the left link component 90L.

The single-cylinder four-stroke engine unit 93 includes an ignition plug, a valve operating mechanism, an injector, and a throttle valve in the same manner as the engine main body 20 of Embodiment 1. Furthermore, in the same manner as Embodiment 1, the single-cylinder four-stroke engine unit 93 includes sensors such as an engine rotation speed sensor and a throttle position sensor.

As described above, the single-cylinder four-stroke engine unit 93 includes the engine main body 94, the exhaust pipe 111, the silencer 112, the main catalyst 116, and the upstream oxygen detector 114. The exhaust passage member 113 (a single-combustion-chamber exhaust passage member) is formed of the exhaust pipe 111 and the silencer 112. The silencer 112 is provided with a discharge port 112e which is exposed to the atmosphere. The exhaust passage member 113 allows the exhaust gas to flow from the downstream end of the cylinder exhaust passage member 108 to the discharge port 112e. The path from the combustion chamber 106 to the discharge port 112e is referred to as an exhaust path 118 (see FIG. 17). The exhaust path 118 is formed of the cylinder exhaust passage member 108 and the exhaust passage member 113. The exhaust path 118 is a space through which exhaust gas passes.

As shown in FIG. 17, the upstream end portion of the exhaust pipe 111 is connected with the cylinder exhaust passage member 108. The downstream end portion of the exhaust pipe exhaust pipe 111 is connected with the silencer 112. A catalyst unit 115 is provided in the middle of the exhaust pipe 111. A part of the exhaust pipe 111, which is upstream of the catalyst unit 115, is referred to as an upstream exhaust pipe 111a. A part of the exhaust pipe 111, which is downstream of the catalyst unit 115, is referred to as a downstream exhaust pipe 111b. While FIG. 17 depicts the exhaust pipe 111 as a linear pipe for simplification, the exhaust pipe 111 is not a linear pipe.

As shown in FIG. 14, the exhaust pipe 111 is provided in the right side of the motorcycle 80. As shown in FIG. 15, a part of the exhaust pipe 111 is provided below the crankshaft axis Cr3. The exhaust pipe 111 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from downward to rearward and downward. When viewed in the left-right direction, the downstream bended portion changes the flow direction of the exhaust gas from downward and rearward to rearward and upward. A part which is downstream of the downstream bended portion is positioned below the crankshaft axis Cr3. The downstream end of the main catalyst 116 is provided at the downstream bended portion.

The exhaust gas exhausted from the downstream end of the exhaust pipe 111 flows into the silencer 112. The silencer 112 is connected with the exhaust pipe 111. The silencer 112 is configured to restrain pulsation in the exhaust gas. With this, the silencer 112 restrains the volume of the sound (exhaust sound) generated by the exhaust gas. Multiple expansion chambers and multiple pipes connecting the expansion chambers with one another are provided inside the silencer 112. The downstream end portion of the exhaust pipe exhaust pipe 111 is provided inside an expansion chamber of the silencer 112. The discharge port 112e exposed to the atmosphere is provided at the downstream end of the silencer 112. As shown in FIG. 17, the path length of the exhaust path from the downstream end of the exhaust pipe 111 to the discharge port 112e is referred to as e3. The exhaust gas having passed the silencer 112 is discharged to the atmosphere via the discharge port 112e. As shown in FIG. 15, the discharge port 112e is positioned rearward of the crankshaft axis Cr3.

The main catalyst 116 is provided inside the exhaust pipe 111 (exhaust passage member 113). The catalyst unit 115 includes a hollow cylindrical casing 117 and the main catalyst 116. The upstream end of the casing 117 is connected with the upstream exhaust pipe 111a. The downstream end of the casing 117 is connected with the downstream exhaust pipe 111b. The casing 117 forms a part of the exhaust pipe 111 (exhaust passage member 113). The main catalyst 116 is fixed to the inside of the casing 117. The exhaust gas is purified when passing through the main catalyst 116. All exhaust gas exhausted from the exhaust port 108a of the combustion chamber 106 passes through the main catalyst 116. The main catalyst 116 purifies the exhaust gas exhausted from the combustion chamber 106 most in the exhaust path 118.

The materials of the main catalyst 116 are identical with those of the main catalyst 39 of Embodiment 1. The main catalyst 116 has a porous structure. In the main catalyst 116, pores which are sufficiently narrower than the width of the path in the upstream exhaust pipe 111a are formed. As shown in FIG. 17, the length of the main catalyst 116 in the path direction is referred to as c3. Furthermore, the maximum width of the main catalyst 116 in the direction orthogonal to the path direction is referred to as w3. The length c3 of the main catalyst 116 is longer than the maximum width w3 of the main catalyst 116.

As shown in FIG. 17, the casing 117 includes a catalyst-provided passage member 117b, an upstream passage member 117a, and a downstream passage member 117c. The main catalyst 116 is provided in the catalyst-provided passage member 117b. In the path direction, the upstream end and the downstream end of the catalyst-provided passage member 117b are respectively at the same positions as the upstream end and the downstream end of the main catalyst 116. The cross-sectional area of the catalyst-provided passage member 117b cut along the direction orthogonal to the path direction is substantially constant. The upstream passage member 117a is connected with the upstream end of the catalyst-provided passage member 117b. The downstream passage member 117c is connected with the upstream end of the catalyst-provided passage member 117b.

The upstream passage member 117a is at least partially tapered. The tapered part increases its inner diameter toward the downstream side. The downstream passage member 117c is at least partially tapered. The tapered part decreases its inner diameter toward the downstream side. The cross-sectional area of the catalyst-provided passage member 117b cut along the direction orthogonal to the path direction is referred to as S3. The cross-sectional area of the upstream end of (at least a part of) the upstream passage member 117a cut along the direction orthogonal to the path direction is smaller than the area S3. In at least a part of the downstream passage member 117c, the cross-sectional area of the downstream passage member 117c cut along the direction orthogonal to the path direction is smaller than the area S3. The at least part of the downstream passage member 117c encompasses the downstream end of the downstream passage member 117c.

As shown in FIG. 15, at least a part of the main catalyst 116 is provided frontward of the crankshaft axis Cr3. In other words, when viewed in the left-right direction, the main catalyst 116 is provided in front of the linear line L5. As described above, the linear line L5 is a linear line which passes the crankshaft axis Cr3 and is in parallel to the up-down direction. As a matter of course, the upstream end of the main catalyst 116 is provided frontward of the crankshaft axis Cr3. When viewed in the left-right direction, the main catalyst 116 is positioned in front of (below) the cylinder axis Cy3.

As shown in FIG. 15, it is assumed that a linear line which is orthogonal to the cylinder axis Cy3 and orthogonal to the crankshaft axis Cr3 is L6. When viewed in the left-right direction, the main catalyst 116 is positioned in front of the linear line L6.

As shown in FIG. 17, the path length from the upstream end of the exhaust passage member 113 (exhaust pipe 111) to the upstream end of the main catalyst 116 is referred to as b4. The path length b4 is a path length of a passage member formed of the upstream exhaust pipe 111a and the upstream passage member 117a of the catalyst unit 115. In other words, the path length b4 is a path length from the downstream end of the cylinder exhaust passage member 108 to the upstream end of the main catalyst 116. Furthermore, the path length from the downstream end of the main catalyst 116 to the downstream end of the exhaust pipe 111 is referred to as d4. The path length d4 is the path length of a passage member formed of the downstream passage member 117c of the catalyst unit 115 and the downstream exhaust pipe 111b. The path length from the combustion chamber 106 to the upstream end of the main catalyst 116 is a3+b4. The path length from the downstream end of the main catalyst 116 to the discharge port 112e is d4+e3.

The main catalyst 116 is provided so that the path length a3+b4 is shorter than the path length d4+e3. The main catalyst 116 is provided so that the path length a3+b4 is shorter than the path length d4. Furthermore, the main catalyst 116 is provided so that the path length b4 is shorter than the path length d4.

The upstream oxygen detector 114 is provided on the exhaust pipe 111 (exhaust passage member 113). The upstream oxygen detector 114 is provided upstream of the main catalyst 116. The upstream oxygen detector 114 is a sensor configured to detect the oxygen density in the exhaust gas. The structure of the upstream oxygen detector 114 is identical with that of the upstream oxygen detector of Embodiment 1.

As shown in FIG. 17, the path length from the combustion chamber 106 to the upstream oxygen detector 114 is referred to as h7. Furthermore, the path length from the upstream oxygen detector 114 to the upstream end of the main catalyst 116 is referred to as h8. The upstream oxygen detector 114 is provided so that the path length h7 is longer than the path length h8.

As described above, the motorcycle 80 of Embodiment 3 is structured such that the main catalyst 116 is provided frontward of the crankshaft axis Cr3. Apart from the above, the arrangements of the components are similar to those in the motorcycle 1 of Embodiment 1. The arrangements similar to those in Embodiment 1 exert effects similar to the effects described in Embodiment 1.

The structure of the exhaust system of Modification 1 described above may be employed in the motorcycle 80 of Embodiment 3. Effects similar to those in Modification 1 are obtained in such a case.

### (Embodiment 4)

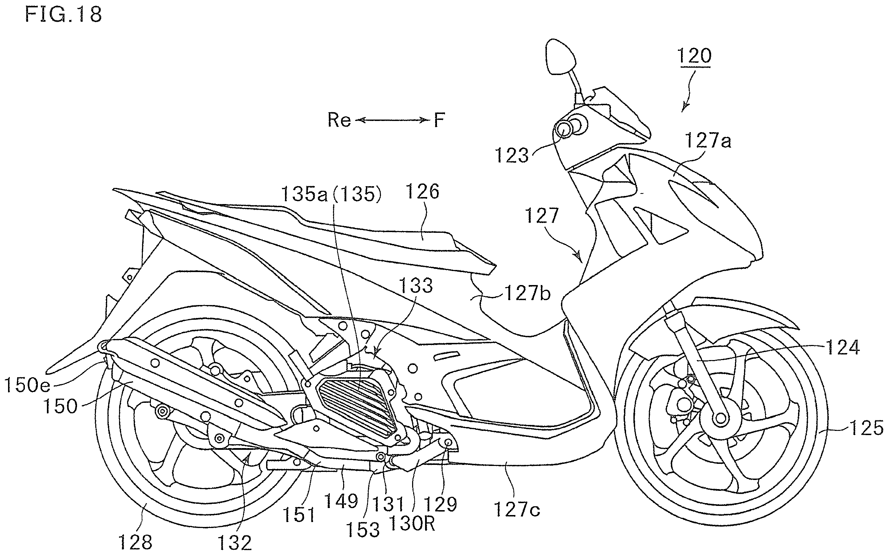

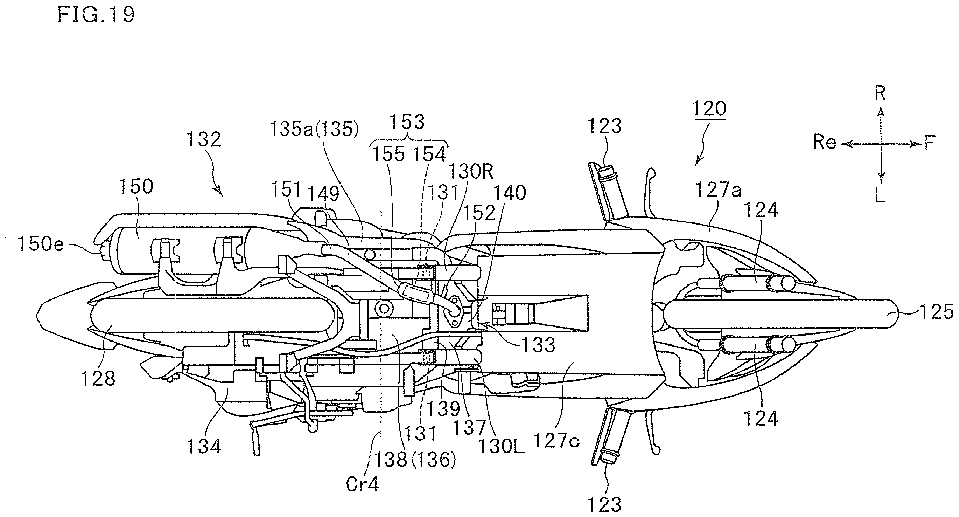

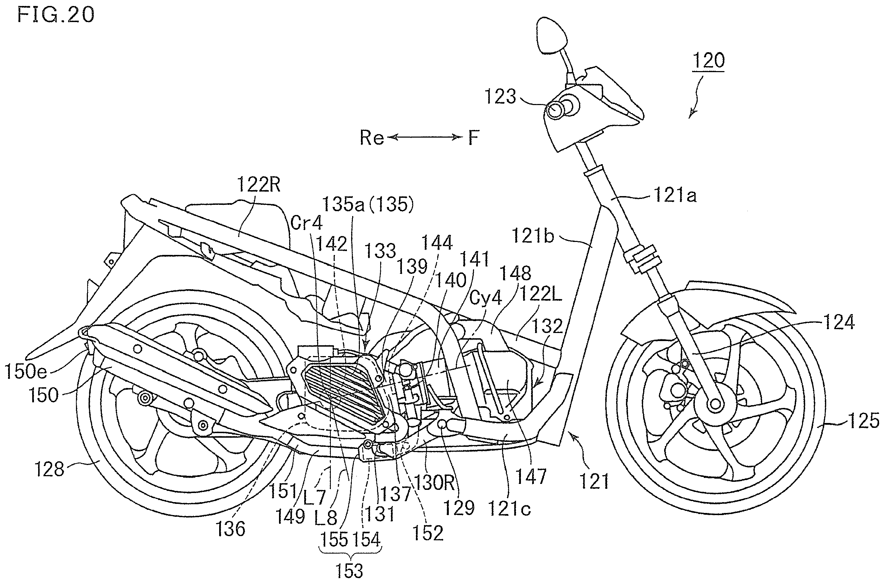

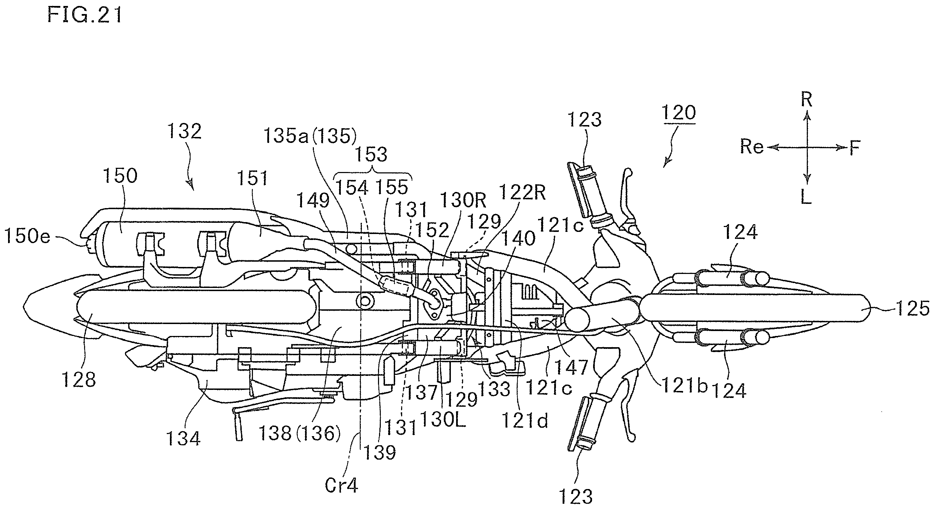

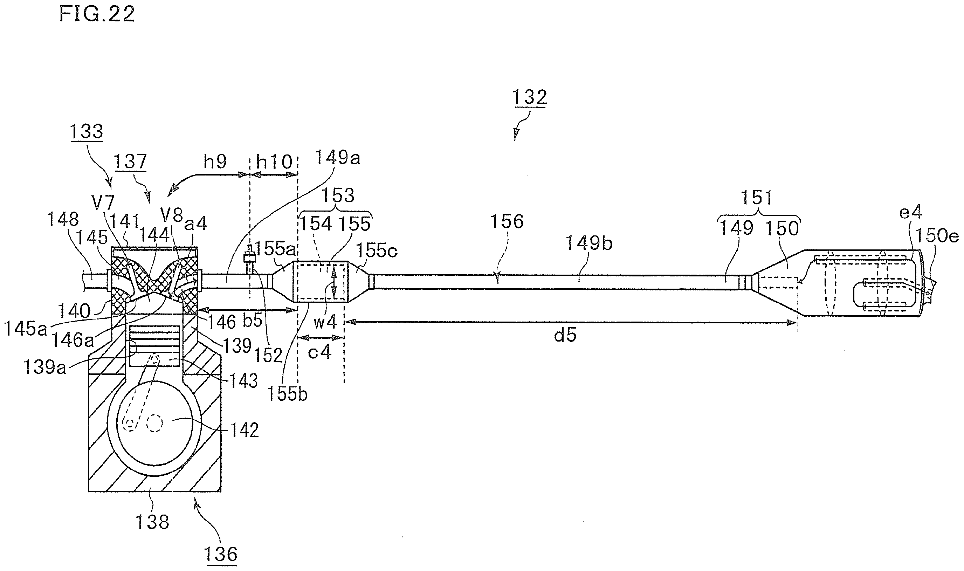

FIG. 18 is a side view of a motorcycle of Embodiment 4 of the present teaching. FIG. 19 is a bottom view of the motorcycle of Embodiment 4. FIG. 20 is a side view showing a state in which a vehicle body cover, etc. have been removed from the motorcycle of Embodiment 4. FIG. 21 is a bottom view showing the state in which the vehicle body cover, etc. have been removed from the motorcycle of Embodiment 4. FIG. 22 is a schematic diagram of an engine and an exhaust system of the motorcycle of Embodiment 4.

A vehicle of Embodiment 4 is a so-called sport-scooter-type motorcycle 120. As shown in FIG. 20, the motorcycle 120 is provided with a vehicle body frame 121. The vehicle body frame 121 includes a head pipe 121a, a main frame 121b, a right seat rail 122R, a left seat rail 122L, paired left and right under frames 121c, and a crosswise member 121d (see FIG. 21). The main frame 121b extends rearward and downward from the head pipe 121a. From ends at intermediate parts of the main frame 121b to the other ends, the under frames 121c extend rearward and downward and are then curved downward and extend downward in a substantially horizontal direction. As shown in FIG. 21, the crosswise member 121d is connected with the left and right under frames 121c. The crosswise member 121d extends in the left-right direction. As shown in FIG. 20, the left seat rail 122L extends rearward and upward from an intermediate portion of the main frame 121b. As shown in FIG. 21, the right seat rail 122R is connected with a right end portion of the crosswise member 121d. As shown in FIG. 20, from an end on the crosswise member 121d side to the other end, the right seat rail 122R extends upward and is then curved rearward. A rear portion of the right seat rail 122R extends substantially in parallel with the left seat rail 122L.

A steering shaft is rotatably inserted into the head pipe 121a. A handlebar 123 is provided at an upper part of the steering shaft. A display (not illustrated) is provided in the vicinity of the handlebar 123. The display is configured to display vehicle speed, engine rotation speed, warnings, and the like.

Paired left and right front forks 124 are supported at a lower part of the steering shaft. The lower end portions of the front forks 124 support a front wheel 125 in a rotatable manner.

The left and right seat rails 122L and 122R support a seat 126 (see FIG. 18).

As shown in FIG. 18, the motorcycle 120 is provided with a vehicle body cover 127 which covers the vehicle body frame 121 and the like. The vehicle body cover 127 includes a front cowling 127a, a main cover 127b, and an under cover 127c. The front cowling 127a covers the head pipe 121a and an upper part of the main frame 121b. The main cover 127b and the under cover 127c cover a lower part of the main frame 121b. The main cover 127b covers the right seat rail 122R and the left seat rail 122L. The under cover 127c covers the under frames 121c and the crosswise member 121d. The main cover 127b covers an air cleaner 147 (see FIG. 20) and a front portion of a later-described engine main body 133. The air cleaner 147 is provided in front of the engine main body 133.

A unit-swinging single-cylinder four-stroke engine unit 132 is attached to the vehicle body frame 121. The single-cylinder four-stroke engine unit 132 includes the engine main body 133 and a power transmission unit 134 (see FIG. 19 and FIG. 21). The power transmission unit 134 is connected to a rear portion of the engine main body 133. The power transmission unit 134 is provided leftward of the engine main body 133. The power transmission unit 134 houses a transmission. The power transmission unit 134 supports a rear wheel 128 in a rotatable manner.

The engine main body 133 and the power transmission unit 134 are configured to be integrally swingable with respect to the vehicle body frame 121. To be more specific, as shown in FIG. 20 and FIG. 21, a right link component 130R and a left link component 130L are connected with left and right end portions of a lower part of the engine main body 133. The right link component 130R and the left link component 130L extend frontward from the engine main body 133. The leading end portions of the right link component 130R and the left link component 130L are rotatably connected with the vehicle body frame 121 (the under frames 121c) via pivot shafts 129. Furthermore, the right link component 130R and the left link component 130L are rotatably connected with the engine main body 133 via pivot shafts 131.

The single-cylinder four-stroke engine unit 132 is a water-cooled engine. The single-cylinder four-stroke engine unit 132 includes the engine main body 133, a water cooler 135, the power transmission unit 134, the air cleaner 147 (see FIG. 20 and FIG. 21), an intake pipe 148 (see FIG. 20), an exhaust pipe 149, a silencer 150, a main catalyst 154 (a single-combustion-chamber main catalyst), and an upstream oxygen detector 152 (a single-combustion-chamber upstream oxygen detector). The single-cylinder four-stroke engine unit 132 further includes an electronic control unit which is similar to the electronic control unit 45 of Embodiment 1. The electronic control unit controls the engine main body 133.

The water cooler 135 includes a radiator (not illustrated), a water pump (not illustrated), a fan (not illustrated), and a cover member 135a. The fan is provided to the right of a rear portion of the engine main body 133. The radiator is provided to the right of the fan. The cover member 135a covers the radiator from the right. Furthermore, the cover member 135a covers the radiator and the fan from above, below, front, and rear.

The engine main body 133 is a single-cylinder four-stroke engine. As shown in FIG. 20, the engine main body 133 includes a crankcase member 136 and a cylinder member 137. The cylinder member 137 extends frontward from the crankcase member 136.

The crankcase member 136 includes a crankcase main body 138 and a crankshaft 142 or the like housed in the crankcase main body 138. The central axis (crankshaft axis) Cr4 of the crankshaft 142 extends in the left-right direction. Lubricating oil is stored in the crankcase main body 138. The oil is conveyed by an oil pump (not illustrated) and is circulated in the engine main body 133.

The fan of the water cooler 135 is connected with a right end portion of the crankshaft 142 to be rotatable in an integrated manner. The fan is driven by the rotation of the crankshaft 142. The fan generates an air flow for cooling the engine main body 133. To be more specific, air is introduced into the cover member 135a by the rotation of the fan. As heat exchange occurs between the introduced air and the coolant in the radiator, the coolant is cooled. The engine main body 133 is cooled by the cooled coolant.

The cylinder member 137 includes a cylinder body 139, a cylinder head 140, a head cover 141, and components housed in the members 139 to 141. As shown in FIG. 20 and FIG. 21, the cylinder body 139 is connected with a front portion of the crankcase main body 138. The cylinder head 140 is connected with a front portion of the cylinder body 139. As shown in FIG. 20, the head cover 141 is connected with a front portion of the cylinder head 140.

As shown in FIG. 22, a cylinder hole 139a is made in the cylinder body 139. The cylinder hole 139a houses a piston 143 so that the piston 143 is able to reciprocate. The piston 143 is connected with the crankshaft 142 via a connecting rod. Hereinafter, the central axis Cy4 of the cylinder hole 139a is referred to as a cylinder axis Cy4. As shown in FIG. 20, the engine main body 133 is disposed so that the cylinder axis Cy4 extends in the front-rear direction. To be more specific, the direction in which the cylinder axis Cy4 extends from the crankcase member 136 to the cylinder member 137 is frontward and upward. The angle of inclination of the cylinder axis Cy4 with respect to the horizontal direction is 0 degrees or greater and 45 degrees or less.

As shown in FIG. 22, one combustion chamber 144 is formed in the cylinder member 137. The combustion chamber 144 is formed of an inner surface of the cylinder hole 139a of the cylinder body 139, the cylinder head 140, and the piston 143. As shown in FIG. 20, the combustion chamber 144 is positioned frontward of the crankshaft axis Cr4. In other words, a linear line which passes the crankshaft axis Cr4 and is parallel to the up-down direction is L7 so that when viewed in the left-right direction, the combustion chamber 144 is positioned in front of the linear line L7.

As shown in FIG. 22, a cylinder intake passage member 145 and a cylinder exhaust passage member 146 (a single-combustion-chamber cylinder exhaust passage member) are formed in the cylinder head 140. In the cylinder head 140, an intake port 145a and an exhaust port 146a are formed in a wall portion forming the combustion chamber 144. The cylinder intake passage member 145 extends from the intake port 145a to an inlet formed in the outer surface (upper surface) of the cylinder head 140. The cylinder exhaust passage member 146 extends from the exhaust port 146a to an outlet formed in the outer surface (lower surface) of the cylinder head 140. Air passes through the inside of the cylinder intake passage member 145 and is then supplied to the combustion chamber 144. Exhaust gas exhausted from the combustion chamber 144 passes through the cylinder exhaust passage member 146.

An intake valve V7 is provided in the cylinder intake passage member 145. An exhaust valve V8 is provided in the cylinder exhaust passage member 146. The intake port 145a is opened and closed by movement of the intake valve V7. The exhaust port 146a is opened and closed by movement of the exhaust valve V8. An intake pipe 148 is connected with an end portion (inlet) of the cylinder intake passage member 145. An exhaust pipe 149 is connected with an end portion (outlet) of the cylinder exhaust passage member 146. The path length of the cylinder exhaust passage member 146 is referred to as a4.

As shown in FIG. 21, the exhaust pipe 149 is connected to the lower surface of the cylinder head 140. When viewed from below, an upstream end portion of the exhaust pipe 149 is positioned between the right link component 130R and the left link component 130L. Furthermore, as shown in FIG. 20, when viewed in the left-right direction, a part of the exhaust pipe 149 is overlapped with the right link component 130R and the left link component 130L. The exhaust pipe 149 therefore passes between the right link component 130R and the left link component 130L.

The single-cylinder four-stroke engine unit 132 includes an ignition plug, a valve operating mechanism, an injector, and a throttle valve in the same manner as Embodiment 1. Furthermore, in the same manner as Embodiment 1, the single-cylinder four-stroke engine unit 132 includes sensors such as an engine rotation speed sensor and a throttle position sensor.

As described above, the single-cylinder four-stroke engine unit 132 includes the engine main body 133, the exhaust pipe 149, the silencer 150, the main catalyst 154, and the upstream oxygen detector 152. The exhaust pipe 149 and the silencer 150 constitute an exhaust passage member 151 (a single-combustion-chamber exhaust passage member). The silencer 150 is provided with a discharge port 150e which is exposed to the atmosphere. The exhaust passage member 151 allows the exhaust gas to flow from the downstream end of the cylinder exhaust passage member 146 to the discharge port 150e. The path from the combustion chamber 144 to the discharge port 150e is referred to as an exhaust path 156 (see FIG. 22). The exhaust path 156 is formed of the cylinder exhaust passage member 146 and the exhaust passage member 151. The exhaust path 156 is a space through which exhaust gas passes.

As shown in FIG. 22, the upstream end portion of the exhaust pipe 149 is connected with the cylinder exhaust passage member 146. The downstream end portion of the exhaust pipe exhaust pipe exhaust pipe 149 is connected with the silencer 150. A catalyst unit 153 is provided in the middle of the exhaust pipe 149. A part of the exhaust pipe 149, which is upstream of the catalyst unit 153, is referred to as an upstream exhaust pipe 149a. A part of the exhaust pipe 149, which is downstream of the catalyst unit 153, is referred to as a downstream exhaust pipe 149b. While FIG. 22 depicts the exhaust pipe 149 as a linear pipe for simplification, the exhaust pipe 149 is not a linear pipe.

As shown in FIG. 19 and FIG. 21, most of the exhaust pipe 149 is provided in the right side of the motorcycle 120. An upstream end portion of the exhaust pipe 149 is positioned at a substantially central part in the left-right direction of the motorcycle 120. As shown in FIG. 20, a part of the exhaust pipe 149 is positioned below the crankshaft axis Cr4. The exhaust pipe 149 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from a direction along the up-down direction to a direction along the front-rear direction. To be more specific, when viewed in the left-right direction, the upstream bended portion changes the flow direction of the exhaust gas from downward to rearward and downward. When viewed in the left-right direction, the downstream bended portion changes the flow direction of the exhaust gas from rearward and downward to rearward. A part of the exhaust pipe 149, which is downstream of the downstream bended portion, is positioned below the crankshaft axis Cr4. The main catalyst 154 is provided between the two bended portions.

The exhaust gas exhausted from the downstream end of the exhaust pipe 149 flows into the silencer 150. The silencer 150 is connected with the exhaust pipe 149. The silencer 150 is configured to restrain pulsation in the exhaust gas. With this, the silencer 150 restrains the volume of the sound (exhaust sound) generated by the exhaust gas. Multiple expansion chambers and multiple pipes connecting the expansion chambers with one another are provided inside the silencer 150. The downstream end portion of the exhaust pipe exhaust pipe 149 is provided inside an expansion chamber of the silencer 150. The discharge port 150e facing the atmosphere is provided at the downstream end of the silencer 150. As shown in FIG. 22, the path length of the exhaust path from the downstream end of the exhaust pipe 149 to the discharge port 150e is referred to as e4. The exhaust gas having passed the silencer 150 is discharged to the atmosphere via the discharge port 150e. As shown in FIG. 20, the discharge port 150e is rearward of the crankshaft axis Cr4.

The main catalyst 154 is provided inside the exhaust pipe 149 (exhaust passage member 151). The catalyst unit 153 includes a hollow cylindrical casing 155 and the catalyst unit 153. The upstream end of the casing 155 is connected with the upstream exhaust pipe 149a. The downstream end of the casing 155 is connected with the downstream exhaust pipe 149b. The casing 155 forms a part of the exhaust pipe 149 (exhaust passage member 151). The main catalyst 154 is fixed to the inside of the casing 155. The exhaust gas is purified while passing through the main catalyst 154. All exhaust gas exhausted from the exhaust port 146a of the combustion chamber 144 passes through the main catalyst 154. The main catalyst 154 purifies the exhaust gas exhausted from the combustion chamber 144 most in the exhaust path 156.

The materials of the main catalyst 154 are identical with those of the main catalyst 39 of Embodiment 1. The main catalyst 154 has a porous structure. In the main catalyst 154, pores which are sufficiently narrower than the width of the path in the upstream exhaust pipe 149a are formed. As shown in FIG. 22, the length of the main catalyst 154 in the path direction is referred to as c4. Furthermore, the maximum width of the main catalyst 154 in the direction orthogonal to the path direction is referred to as w4. The length c4 of the main catalyst 154 is longer than the maximum width w4 of the main catalyst 154.

As shown in FIG. 22, the casing 155 includes a catalyst-provided passage member 155b, an upstream passage member 155a, and a downstream passage member 155c. The main catalyst 154 is provided in the catalyst-provided passage member 155b. In the path direction, the upstream end and the downstream end of the catalyst-provided passage member 155b are respectively at the same positions as the upstream end and the downstream end of the main catalyst 154. The cross-sectional area of the catalyst-provided passage member 155b cut along the direction orthogonal to the path direction is substantially constant. The upstream passage member 155a is connected with the upstream end of the catalyst-provided passage member 155b. The downstream passage member 155c is connected with the upstream end of the catalyst-provided passage member 155b.

The upstream passage member 155a is at least partially tapered. The tapered part increases its inner diameter toward the downstream side. The downstream passage member 155c is at least partially tapered. The tapered part decreases its inner diameter toward the downstream side. The cross-sectional area of the catalyst-provided passage member 155b cut along the direction orthogonal to the path direction is referred to as S4. In at least a part of the upstream passage member 155a, the cross-sectional area of the upstream passage member 155a cut along the direction orthogonal to the path direction is smaller than the area S4. The at least part of the upstream passage member 155a encompasses the upstream end of the upstream passage member 155a. In at least a part of the downstream passage member 155c, the cross-sectional area of the downstream passage member 155c cut along the direction orthogonal to the path direction is smaller than the area S4. The at least part of the downstream passage member 155c encompasses the downstream end of the downstream passage member 155c.

As shown in FIG. 20, the main catalyst 154 is provided frontward of the crankshaft axis Cr4. In other words, when viewed in the left-right direction, the main catalyst 154 is provided in front of the linear line L7. As described above, the linear line L7 is a linear line which passes the crankshaft axis Cr4 and is in parallel to the up-down direction. As a matter of course, the upstream end of the main catalyst 154 is provided frontward of the crankshaft axis Cr4. When viewed in the left-right direction, the main catalyst 154 is positioned in front of (below) the cylinder axis Cy4.

As shown in FIG. 20, assume that a linear line which is orthogonal to the cylinder axis Cy4 and orthogonal to the crankshaft axis Cr4 is L8. When viewed in the left-right direction, the main catalyst 154 is positioned in front of the linear line L8.

As shown in FIG. 22, the path length from the upstream end of the exhaust passage member 151 (exhaust pipe 149) to the upstream end of the main catalyst 154 is referred to as b5. The path length b5 is a path length of a passage member formed of the upstream exhaust pipe 149a and the upstream passage member 155a of the catalyst unit 153. In other words, the path length b5 is a path length from the downstream end of the cylinder exhaust passage member 146 to the upstream end of the main catalyst 154. Furthermore, the path length from the downstream end of the main catalyst 154 to the downstream end of the exhaust pipe 149 is referred to as d5. The path length d5 is the path length of a passage member formed of the downstream passage member 155c of the catalyst unit 153 and the downstream exhaust pipe 149b. The path length from the combustion chamber 144 to the upstream end of the main catalyst 154 is a4+b5. The path length from the downstream end of the main catalyst 154 to the discharge port 150e is d5+e4.

The main catalyst 154 is provided so that the path length a4+b5 is shorter than the path length d5+e4. The main catalyst 154 is provided so that the path length a4+b5 is shorter than the path length d5. Furthermore, the main catalyst 154 is provided so that the path length b5 is shorter than the path length d5.

The upstream oxygen detector 152 is provided on the exhaust pipe 149 (exhaust passage member 151). The upstream oxygen detector 152 is provided upstream of the main catalyst 154. The upstream oxygen detector 152 is a sensor configured to detect the oxygen density in the exhaust gas. The structure of the upstream oxygen detector 152 is identical with that of the upstream oxygen detector of Embodiment 1.

As shown in FIG. 22, the path length from the combustion chamber 144 to the upstream oxygen detector 152 is referred to as h9. Furthermore, the path length from the upstream oxygen detector 152 to the upstream end of the main catalyst 154 is referred to as h10. The upstream oxygen detector 152 is provided so that the path length h9 is longer than the path length h10.

As described above, the motorcycle 120 of Embodiment 4 is structured such that the main catalyst 154 is provided frontward of the crankshaft axis Cr4. Apart from the above, the arrangements of the components are similar to those in the motorcycle 1 of Embodiment 1. The arrangements similar to those in Embodiment 1 exert effects similar to the effects described in Embodiment 1.

The structure of the exhaust system of Modification 1 described above may be employed in the motorcycle 120 of Embodiment 4, and the effects identical with those of Modification 1 are exerted.

Preferred embodiments of the present teaching have been described above. However, the present teaching is not limited to the above-described embodiments, and various changes can be made within the scope of the claims. Further, modifications described below may be used in combination as needed.

In Embodiment 1 to Embodiment 4 above, the casing 40, 181, 117, 155 of the catalyst unit 38, 79, 115, 153 and the upstream exhaust pipe 34a, 75a, 111a, 149a are joined with each other after they are independently formed. Alternatively, the casing 40, 181, 117, 155 of the catalyst unit 38, 79, 115, 153 and the upstream exhaust pipe 34a, 75a, 111a, 149a may be integrally formed.

In Embodiment 1 to Embodiment 4 above, the casing 40, 181, 117, 155 of the catalyst unit 38, 79, 115, 153 and the downstream exhaust pipe 34b, 75b, 111b, 149b are joined with each other after they are independently formed. Alternatively, the casing 40, 181, 117, 155 of the catalyst unit 38, 79, 115, 153 and the downstream exhaust pipe 34b, 75b, 111b, 149b may be integrally formed.

The shape of the exhaust pipe 34 in Embodiment 1 above is not limited to the shape shown in FIG. 1 to FIG. 3. Furthermore, the internal structure of the silencer 35 is not limited to the structure indicated by the schematic diagram of FIG. 5. The same holds true for the exhaust pipes 75, 111, and 149 and the silencers 76, 112, and 150 in Embodiment 2 to 4 above.

In Embodiments 1 to 4 above, the main catalyst 39, 116, 180, 154 and the silencer 35, 76, 112, 150 are provided rightward of the center in the left-right direction of the motorcycle 1, 50, 80, 120. Alternatively, the main catalyst and the silencer may be provided leftward of the center in the left-right direction of the motorcycle. The center in the left-right direction of the motorcycle indicates the position of a linear line which passes the center in the left-right direction of the front wheel and the center in the left-right direction of the rear wheel, when viewed in the up-down direction.

In Embodiments 1 to 4 above, a part of the exhaust pipe 34, 75, 111, 149 is provided below the crankshaft axis Cr1 to Cr4. Alternatively, the exhaust pipe (the single-combustion-chamber exhaust passage member) may be positioned partially above the crankshaft axis.

In Embodiments 1 to 4 above, the main catalyst 39, 180, 116, 154 is a three-way catalyst. The single-combustion-chamber main catalyst of the present teaching, however, may not be a three-way catalyst. The single-combustion-chamber main catalyst may be a catalyst which removes one or two of hydrocarbon, carbon monoxide, and nitrogen oxide. The single-combustion-chamber main catalyst may not be an oxidation - reduction catalyst. The main catalyst may be an oxidation catalyst or a reduction catalyst which removes harmful substances by only oxidation or reduction. An example of the reduction catalyst is a catalyst which removes nitrogen oxide by reduction. This modification may be employed in the upstream sub-catalyst 200.

In Embodiment 1 above, the length c1 in the path direction of the main catalyst 39 is longer than the maximum width w1 of the main catalyst 39. The same holds true for the main catalysts 180, 116, and 154 of Embodiments 2 to 4 above. The single-combustion-chamber main catalyst of the present teaching may be arranged such that the length in the path direction is shorter than the maximum width in the direction vertical to the path direction. However, the single-combustion-chamber main catalyst of the present teaching is arranged so that the exhaust gas is purified the most in the exhaust path. The exhaust path is a path from the combustion chamber to the discharge port exposed to the atmosphere.

The single-combustion-chamber main catalyst of the present teaching may include multiple catalysts provided to be close to one another. Each catalyst includes a base and a catalyst material. The catalysts are close to one another in the sense that the distance between neighboring catalysts is short, rather than the length of each catalyst is short in the path direction. The bases of the catalysts may be made of one type or multiple types of materials. The noble metal of the catalytic materials of the catalysts may be one type or multiple types of noble metals. The carriers of the catalytic materials may be made of one type or multiple types of materials. This modification may be used in the upstream sub-catalyst 200.

In Modification 1 of Embodiment 1 above, the upstream sub-catalyst 200 does not have a porous structure. In the present embodiment, the upstream sub-catalyst 200 may have a porous structure. The following effects are obtained when the upstream sub-catalyst 200 has a porous structure. The upstream sub-catalyst 200 having a porous structure functions as a resistance against the flow of the exhaust gas. It is therefore possible to reduce the flow speed of the exhaust gas upstream of the upstream sub-catalyst 200. Furthermore, the upstream sub-catalyst 200 having a porous structure generates deflection of pressure pulsation. Due to this, the exhaust gas exhausted from the combustion chamber 29 collides with this deflected wave, upstream of the upstream sub-catalyst 200. This facilitates mixing of unburned fuel with oxygen in the exhaust gas, upstream of the upstream sub-catalyst 200. Furthermore, the collision further reduces the flow speed of the exhaust gas, upstream of the upstream sub-catalyst 200.

Therefore mixing of unburned fuel with oxygen in the exhaust gas is facilitated upstream of the main catalyst 39. Furthermore, the flow speed of the exhaust gas is further reduced upstream of the main catalyst 39.

A detection target by the upstream oxygen detector 37 is therefore the exhaust gas in which the oxidation has further advanced. In other words, a detection target by the upstream oxygen detector 37 is the exhaust gas with more stable oxygen density. The oxygen density in the exhaust gas can therefore be more stably detected.

The position of the main catalyst 39, 180, 116, 154 is not limited to the position shown in each figure. However, at least a part of the main catalyst 39, 180, 116, 154 is provided frontward of the crankshaft axis Cr1 to Cr4. This "at least a part" encompasses the upstream end of the main catalyst 39, 180, 116, 154. The following will describe specific modifications of the position of the main catalyst.

In Embodiments 1 to 4 above, the main catalyst 39, 180, 116, 154 is provided on the exhaust pipe 34, 75, 111, 149. Alternatively, the main catalyst may be provided on the cylinder exhaust passage member 31, 72, 108, 146 of the cylinder member 22, 63, 99, 137.

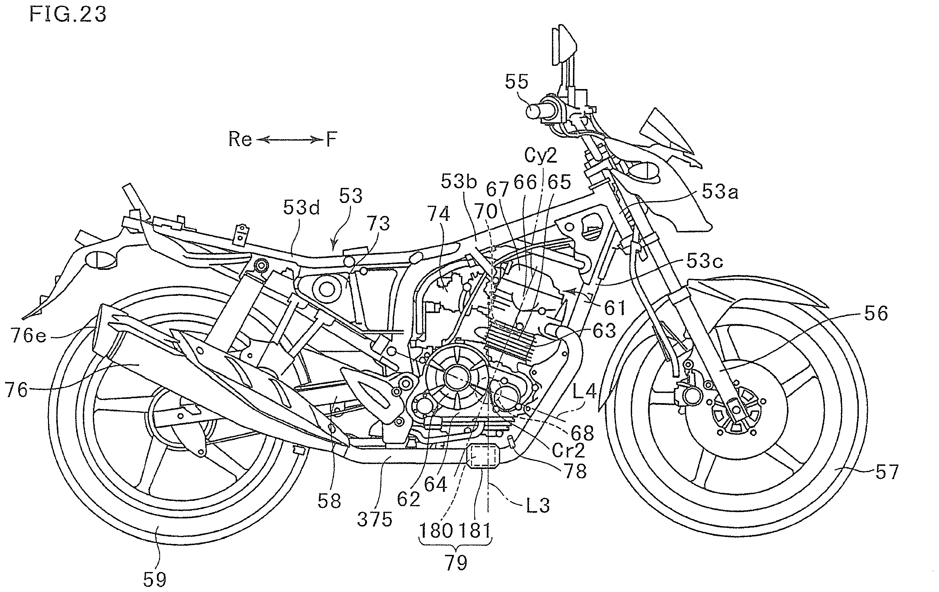

In Embodiments 1 to 4 above, the whole of the main catalyst 39, 180, 116, 154 is provided frontward of the crankshaft axis Cr1 to Cr4. The main catalyst, however, may be differently positioned on condition that at least a part thereof is positioned frontward of the crankshaft axis Cr1 to Cr4. For example, as shown in FIG. 23, only a part of the main catalyst 180 is provided frontward of the crankshaft axis Cr2. The main catalyst 180 shown in FIG. 23 is provided on an exhaust pipe 375.

The whole of the main catalyst 39, 180, 116, 154 of Embodiments 1 to 4 above is, when viewed in the left-right direction, provided in front of the linear line L2, L4, L6, L8. Alternatively, at least a part of the main catalyst may be provided in front of the linear line L2, L4, L6, L8 when viewed in the left-right direction. Alternatively, at least a part of the main catalyst may be provided behind the linear line L2, L4, L6, L8 when viewed in the left-right direction.

When viewed in the left-right direction, the whole of the main catalyst 180 of Embodiment 2 above is positioned in front of the cylinder axis Cy2. Alternatively, at least a part of the main catalyst 180 may be provided behind the cylinder axis Cy2 when viewed in the left-right direction. The cylinder axis Cy2 of Embodiment 2 above extends in the up-down direction.

The main catalyst 39 of Embodiment 1 above is provided so that the path length a1+b1 is shorter than the path length d1+e1. Alternatively, the main catalyst 39 may be provided so that the path length a1+b1 is longer than the path length d1+e1. The path length a1+b1 is the path length from the combustion chamber 29 to the upstream end of the main catalyst 39. The path length d1+e1 is the path length from the downstream end of the main catalyst 39 to the discharge port 35e. This modification may be used in the main catalysts 180, 116, and 154 of Embodiments 2 to 4.

The main catalyst 39 of Embodiment 1 above is provided so that the path length a1+b1 is shorter than the path length d1. Alternatively, the main catalyst 39 may be provided so that the path length a1+b1 is longer than the path length d1. The path length a1+b1 is the path length from the combustion chamber 29 to the upstream end of the main catalyst 39. The path length d1 is the path length from the downstream end of the main catalyst 39 to the downstream end of the exhaust pipe 34. This modification may be used in the main catalysts 180, 116, and 154 of Embodiments 2 to 4.

The main catalyst 39 of Embodiment 1 above is provided so that the path length b1 is shorter than the path length d1. Alternatively, the main catalyst 39 may be provided so that the path length b1 is longer than the path length d1. The path length b1 is the path length from the upstream end of the exhaust pipe 34 to the upstream end of the main catalyst 39. The path length d1 is the path length from the downstream end of the main catalyst 39 to the downstream end of the exhaust pipe 34. This modification may be used in the main catalysts 180, 116, and 154 of Embodiments 2 to 4.

The upstream sub-catalyst 200 in Modification 1 of the embodiment above is provided upstream of the main catalyst 39. To be more specific, the upstream sub-catalyst 200 is provided in the upstream exhaust pipe 34a. The upstream sub-catalyst (a single-combustion-chamber upstream sub-catalyst) provided upstream of the main catalyst 39, however, may not be upstream exhaust pipe 34a. The upstream sub-catalyst may be provided on the cylinder exhaust passage member 31. Alternatively, the upstream sub-catalyst may be provided upstream passage member 40a of the catalyst unit 38. This modification may be used in Embodiments 2 to 4 above.

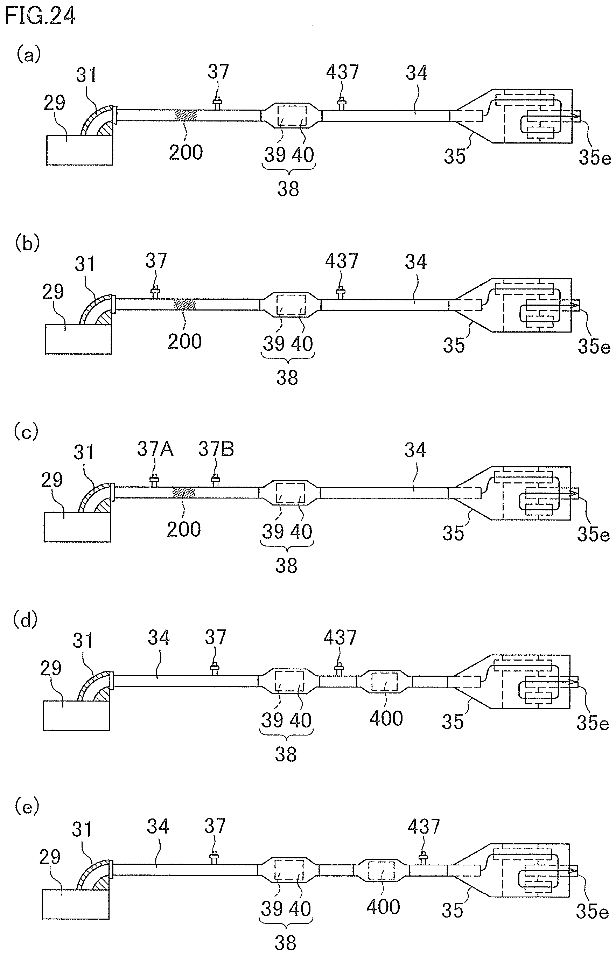

A downstream sub-catalyst (a single-combustion-chamber downstream sub-catalyst) may be provided downstream of the main catalyst. The downstream sub-catalyst may be identical in structure to the upstream sub-catalyst 200 of Modification 1 of the embodiment above. The downstream sub-catalyst may have a porous structure. For example, as shown in FIG. 24(d) and FIG. 24(e), a downstream sub-catalyst 400 is provided on the exhaust pipe 34. The downstream sub-catalyst may be provided inside the silencer 35. The downstream sub-catalyst may be provided downstream of the downstream end of the exhaust pipe 34. When the main catalyst is provided on the cylinder exhaust passage member, the downstream sub-catalyst may be provided on the cylinder exhaust passage member. These modifications may be used in Embodiments 2 to 4 above. When the downstream sub-catalyst is provided, the upstream sub-catalyst 200 may be provided upstream of the main catalyst.

The following effects are obtained when the downstream sub-catalyst does not have a porous structure. The downstream sub-catalyst does not greatly resist the flow of the exhaust gas as compared to the main catalyst. Furthermore, deflection of pressure pulsation of the exhaust gas is not effectively generated by the downstream sub-catalyst as compared to the main catalyst. Therefore the downstream sub-catalyst does not greatly influence the flow of the exhaust gas. The outcome achieved by the positions of the main catalyst and the upstream oxygen detector is therefore not effected.

The following effects are obtained when the downstream sub-catalyst has a porous structure. The downstream sub-catalyst having a porous structure functions as a resistance against the flow of the exhaust gas. It is therefore possible to reduce the flow speed of the exhaust gas upstream of the downstream sub-catalyst. Furthermore, the downstream sub-catalyst having a porous structure generates deflection of pressure pulsation. Due to this, the exhaust gas exhausted from the combustion chamber collides with this deflected wave, upstream of the downstream sub-catalyst. This facilitates mixture of unburned fuel with oxygen in the exhaust gas, upstream of the downstream sub-catalyst. Furthermore, the collision further reduces the flow speed of the exhaust gas, upstream of the downstream sub-catalyst.

The upstream oxygen detector is provided upstream of the downstream sub-catalyst. A detection target by the upstream oxygen detector is therefore the exhaust gas in which the oxidation has further advanced. In other words, a detection target by the upstream oxygen detector is the exhaust gas with more stable oxygen density. The oxygen density in the exhaust gas can therefore be more stably detected.

When the downstream sub-catalyst is provided downstream of the main catalyst, the main catalyst purifies the exhaust gas exhausted from the combustion chamber most in the exhaust path. The degree of contribution to the purification by the main catalyst and the downstream sub-catalyst can be measured by the measuring method recited in Modification 1. The front catalyst in the method mentioned in Modification 1 is deemed as a main catalyst, whereas the rear catalyst is deemed as a downstream sub-catalyst.

When the downstream sub-catalyst is provided downstream of the main catalyst, the purification capability of the downstream sub-catalyst may be higher than or lower than the purification capability of the main catalyst. In other words, the purification rate of the exhaust gas when only the downstream sub-catalyst is provided may be higher than or lower than the purification rate of the exhaust gas when only the main catalyst is provided.

When the downstream sub-catalyst is provided downstream of the main catalyst, the main catalyst rapidly deteriorates as compared to the downstream sub-catalyst. For this reason, even if the degree of contribution to the purification of the main catalyst is at first higher than that of the downstream sub-catalyst, the degree of contribution to the purification of the downstream sub-catalyst may become higher than that of the main catalyst when the accumulative mileage becomes great. The single-combustion-chamber main catalyst of the present teaching purifies the exhaust gas exhausted from the combustion chamber most in the exhaust path. This holds true before the occurrence of the reversal above. In other words, the arrangement holds true before the accumulative mileage reaches a predetermined distance (e.g., 1000km).

In the present teaching, the number of catalysts provided in the single-cylinder four-stroke engine unit may be one or many. When multiple catalysts are provided, a catalyst which purifies the exhaust gas exhausted from the combustion chamber most in the exhaust path is equivalent to the single-combustion-chamber main catalyst of the present teaching. When the number of catalysts is one, that catalyst is the single-combustion-chamber main catalyst of the present teaching. An upstream sub-catalyst and a downstream sub-catalyst may be provided upstream and downstream of the main catalyst. Two or more upstream sub-catalysts may be provided upstream of the main catalyst. Two or more downstream sub-catalysts may be provided downstream of the main catalyst.

The position of the upstream oxygen detector 37, 78, 114, 152 (the single-combustion-chamber upstream oxygen detector) is not limited to the position shown in each figure. However, the upstream oxygen detector 37, 78, 114, 152 must be provided upstream of the main catalyst 39, 180, 116, 154. Furthermore, the upstream oxygen detector 37, 78, 114, 152 must be provided so that the path length h1, h3, h5, h7, h9 is longer than the path length h2, h4, h6, h8, h10. Subsequently, modifications of the position of the upstream oxygen detector will be specifically described.

In Embodiments 1 to 4 above, the upstream oxygen detector 37, 78, 114, 152 is provided on the exhaust pipe 34, 75, 111, 149, 234. Alternatively, the upstream oxygen detector may be provided on the cylinder exhaust passage member 31, 72, 108, 146 of the cylinder member 22, 63, 99, 137.

The upstream oxygen detector 37 of Modification 1 is provided upstream of the upstream sub-catalyst 200 in the same manner as in FIG. 24(b). However, when the upstream sub-catalyst 200 is provided upstream of the main catalyst 39, the position of the upstream oxygen detector 37 may be arranged as below. For example, as shown in FIG. 24(a), the upstream oxygen detector 37 may be provided downstream of the upstream sub-catalyst 200. Furthermore, for example, as shown in FIG. 24(c), upstream oxygen detectors 37A and 37B may be provided upstream and downstream of the upstream sub-catalyst 200, respectively. The upstream oxygen detector 37A is provided upstream of the upstream sub-catalyst 200. The upstream oxygen detector 37B is provided downstream of the main catalyst upstream sub-catalyst 200 and upstream of the main catalyst 39.

For example, as shown in FIG. 24(b), the following effects are achieved when the upstream oxygen detector 37 is provided upstream of the upstream sub-catalyst 200. When the upstream sub-catalyst has a porous structure, mixing of unburned fuel with oxygen in the exhaust gas is facilitated upstream of the upstream sub-catalyst 200. Furthermore, the flow speed of the exhaust gas is reduced upstream of the upstream sub-catalyst 200. A detection target by the upstream oxygen detector 37 is therefore the exhaust gas in which the oxidation has advanced. In other words, a detection target by the upstream oxygen detector 37 is the exhaust gas with more stable oxygen density. The oxygen density in the exhaust gas can therefore be more stably detected.

In Embodiments 1 to 4 above, the number of upstream oxygen detector 37, 78, 114, 152 provided upstream of the main catalyst 39, 180, 116, 154 is one. In this regard, the number of the single-combustion-chamber upstream oxygen detectors provided in a vehicle of the present teaching may be two or more.

Downstream of the main catalyst, at least one downstream oxygen detector (a single-combustion-chamber downstream oxygen detector) may be provided. The specific structure of the downstream oxygen detector is identical with that of the upstream oxygen detector 37 of Embodiment 1 above. For example, as shown in FIG. 24(a), FIG. 24(b), FIG. 24(d), and FIG. 24(e), a downstream oxygen detector 437 may be provided on the exhaust pipe 34. Alternatively, the downstream oxygen detector may be provided on the silencer 35. The downstream oxygen detector may be provided so that the detection target is exhaust gas downstream of the downstream end of the exhaust pipe 34. When the main catalyst is provided on the cylinder exhaust passage member, the downstream oxygen detector may be provided on the cylinder exhaust passage member. These modifications may be used in Embodiments 2 to 4 and Modification 1 above.

When a downstream sub-catalyst 400 is provided downstream of the main catalyst 39, the position of the downstream oxygen detector 437 may be one of the following two positions. For example, as shown in FIG. 24(d), the downstream oxygen detector 437 is provided downstream of the main catalyst 39 and upstream of the downstream sub-catalyst 400. Alternatively, for example, as shown in FIG. 24(e), the downstream oxygen detector 437 is provided downstream of the downstream sub-catalyst 400. Alternatively, the downstream oxygen detectors may be provided upstream and downstream of the downstream sub-catalyst 400, respectively.

When the downstream oxygen detector is provided downstream of the main catalyst, the electronic control unit (controller) processes a signal from the downstream oxygen detector. The electronic control unit (controller) may determine the purification capability of the main catalyst based on a signal from the downstream oxygen detector. Alternatively, the electronic control unit (controller) may determine the purification capability of the main catalyst based on a signal from the upstream oxygen detector and a signal from the downstream oxygen detector. The electronic control unit (controller) may perform combustion control based on a signal from the upstream oxygen detector and a signal from the downstream oxygen detector.

The following describes an example of how the purification capability of the main catalyst is specifically determined based on a signal from the downstream oxygen detector. To begin with, a fuel injection amount is controlled so that mixture gas repeatedly alternates between rich and lean. Then the delay of a change in a signal from the downstream oxygen detector due to a change in the fuel injection amount is detected. When the change in the signal from the downstream oxygen detector is significantly delayed, it is determined that the purification capability of the main catalyst is lower than a predetermined level. In this case, a signal is sent from the electronic control unit to the display. A warning lamp (not illustrated) of the display is turned on. This prompts the rider to replace the main catalyst.

As such, the deterioration of the main catalyst is detectable by means of a signal from the downstream oxygen detector provided downstream of the main catalyst. This makes it possible to suggest the replacement of the main catalyst by providing information before the deterioration of the main catalyst reaches a predetermined level. The initial performance of the vehicle in connection with the exhaust gas purification is therefore maintained for a long time.

The following describes an example of how the purification capability of the main catalyst is specifically determined based on a signal from the upstream oxygen detector and a signal from the downstream oxygen detector. For example, the purification capability of the main catalyst may be determined by comparing a change in a signal from the upstream oxygen detector with a change in a signal from the downstream oxygen detector. The degree of deterioration of the main catalyst is more precisely detectable when signals from two oxygen detectors upstream and downstream of the main catalyst, respectively, are used. It is therefore possible to suggest the replacement of the single-combustion-chamber main catalyst at a more suitable time as compared to cases where the deterioration of the main catalyst is determined based solely on a signal from the downstream oxygen detector. One main catalyst can therefore be used for a longer time while the initial performance of the vehicle in connection with the exhaust gas purification is maintained.

The following describes an example of how combustion control is specifically carried out based on a signal from the upstream oxygen detector and a signal from the downstream oxygen detector. To begin with, in a manner similar to Embodiment 1 above, a basic fuel injection amount is corrected based on a signal from the upstream oxygen detector 37 and fuel is injected from the injector 48. The exhaust gas generated due to the combustion of the fuel is detected by the downstream oxygen detector. The fuel injection amount is then corrected based on a signal from the downstream oxygen detector. In this way, a deviation of the air-fuel ratio of the mixture gas from a target air-fuel ratio is further controlled.

The actual state of purification by the main catalyst is understood by using signals from two oxygen detectors provided upstream and downstream of the main catalyst. Due to this, the precision of the fuel control is improved when the fuel control is carried out based on signals from two oxygen detectors. Furthermore, the upstream oxygen detector stably detects the oxygen density in the exhaust gas. The precision of the fuel control is therefore further improved. For this reason, the progress of the deterioration of the main catalyst can be controlled. The initial performance of the vehicle in connection with the exhaust gas purification can therefore be maintained for a longer time.

In Embodiment 1 above, the ignition timing and the fuel injection amount are controlled based on a signal from the upstream oxygen detector 37. This applies to Embodiments 2 to 4 above. However, the control process based on a signal from the upstream oxygen detector 37 is not particularly limited, and may be carried out once for the ignition timing and the fuel injection amount. Furthermore, the control process based on a signal from the upstream oxygen detector 37 may include a control process other than that mentioned above.

The upstream oxygen detector 37, 78, 114, 152 may include a heater. The detecting portion of the upstream oxygen detector 37, 78, 114, 152 is able to detect the oxygen density when it is heated to a high temperature and activated. Due to this, when the upstream oxygen detector 37, 78, 114, 152 includes the heater, the detection portion is able to detect oxygen more rapidly as the heater heats the detecting portion at the same time as the start of the engine running. When the downstream oxygen detector is provided downstream of the main catalyst, the modification may be used in the downstream oxygen detector.

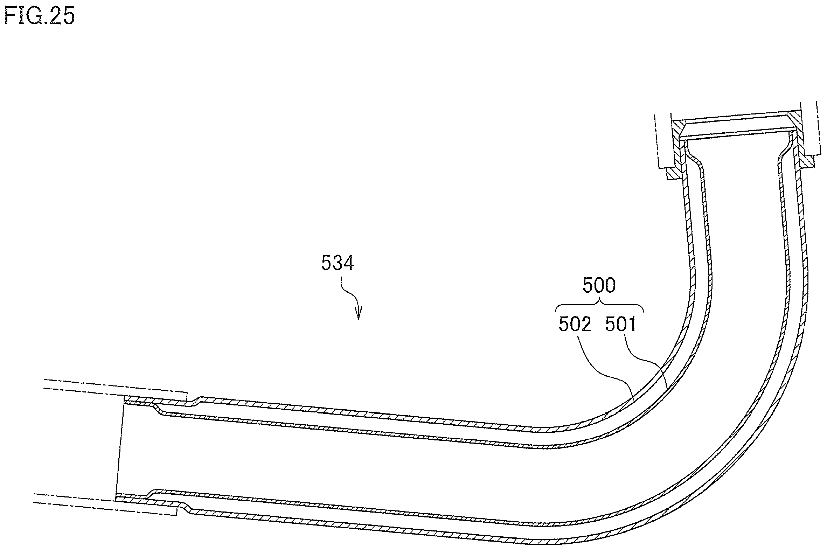

At least a part of the exhaust pipe, which is upstream of the main catalyst, may be formed of a multi-walled pipe. The multi-walled pipe includes an inner pipe and at least one outer pipe which covers the inner pipe. FIG. 25 shows an example in which at least a part of an exhaust pipe 534, which is upstream of the main catalyst, is formed of a double-walled pipe 500. As shown in FIG. 25 for example, at least a part of an exhaust pipe 534, which is upstream of the main catalyst, may be formed of a double-walled pipe. The double-walled pipe 500 includes an inner pipe 501 and an outer pipe 502 covering the inner pipe 501. In FIG. 25, the inner pipe 501 and the outer pipe 502 are in contact with each other only at end portions. The inner pipe and the outer pipe of the multi-walled pipe may be in contact with each other at a portion other than the end portions. For example, the inner pipe and the outer pipe may be in contact with each other at a bended portion. The contact area is preferably smaller than the non-contact area. The inner pipe and the outer pipe may be entirely in contact with each other. When an exhaust pipe includes a multi-walled pipe, an upstream oxygen detector is preferably provided in the middle of, or downstream of, the multi-walled pipe. The multi-walled pipe controls the decrease in the temperature of the exhaust gas. The temperature of the upstream oxygen detector is therefore rapidly increased to the activation temperature when starting the engine. The oxygen density in the exhaust gas can therefore be stably detected.

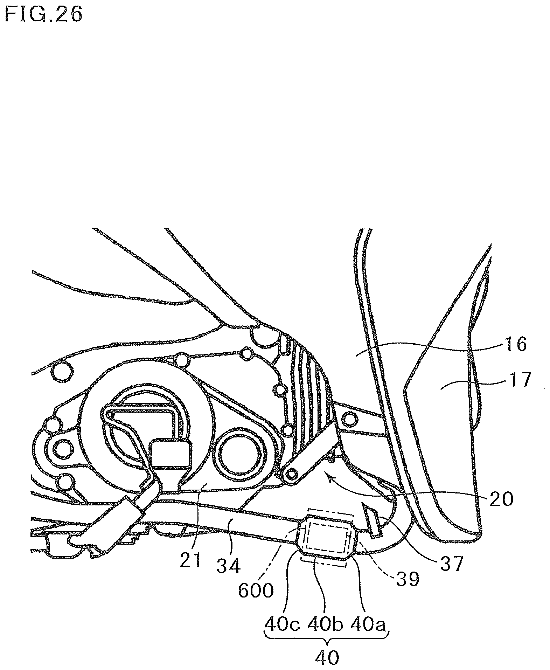

For example, as shown in FIG. 26, at least a part of the outer surface of the catalyst-provided passage member 40b may be covered with a catalyst protector 600. The catalyst protector 600 is formed to be substantially cylindrical in shape. The catalyst protector 600 protects the catalyst-provided passage member 40b and the main catalyst 39. Furthermore, the catalyst protector 600 improves the appearance. This modification may be used in Embodiments 2 to 4 above.

In Embodiments 1 to 4 above, gas flowing in the exhaust path 41, 182, 118, 156 during the engine running is only the exhaust gas exhausted from the combustion chamber 29, 70, 106, 144. In this regard, the single-cylinder four-stroke engine unit of the present teaching may include a secondary air supply mechanism which is configured to supply air to the exhaust path. A known arrangement is used for the specific arrangement of the secondary air supply mechanism. The secondary air supply mechanism may forcibly supply air to the exhaust path by means of an air pump. Furthermore, the secondary air supply mechanism may take air into the exhaust path by means of negative pressure in the exhaust path. In this case, the secondary air supply mechanism includes a reed valve which opens and closes in accordance with the pressure pulsation of the exhaust gas. When the secondary air supply mechanism is included, the upstream oxygen detector may be provided upstream or downstream the air inflow position.

In Embodiments 1 to 4 above, the injector is provided to supply fuel to the combustion chamber 29, 70, 106, 144. A fuel supplier for supplying fuel to the combustion chamber is not limited to the injector. For example, a fuel supplier configured to supply fuel to the combustion chamber by negative pressure may be provided.

In Embodiments 1 to 4 above, only one exhaust port 31a, 72a, 108a, 146a is provided for one combustion chamber 29, 70, 106, 144. Alternatively, multiple exhaust ports may be provided for one combustion chamber. For example, this modification applies to cases where a variable valve mechanism is included. The exhaust paths extending from the respective exhaust ports are gathered at a location upstream of the main catalyst. The exhaust paths extending from the respective exhaust ports are preferably gathered at the cylinder member.

The combustion chamber of the present teaching may include a main combustion chamber and an auxiliary combustion chamber connected with the main combustion chamber. In this case, one combustion chamber is formed of the main combustion chamber and the auxiliary combustion chamber.

In Embodiments 1 to 4 above, the entirety of the combustion chamber 29, 70, 106, 144 is positioned frontward of the crankshaft axis Cr1, Cr2, Cr3, Cr4. The combustion chamber of the present teaching, however, may be differently positioned on condition that at least a part thereof is positioned frontward of the crankshaft axis. In other words, a part of the combustion chamber may be provided rearward of the crankshaft axis. This modification is applicable when the cylinder axis extends in the up-down direction.

In Embodiments 1 to 4 above, the crankcase main body 23, 64, 100, 138 and the cylinder body 24, 65, 101, 139 are different members. Alternatively, the crankcase main body and the cylinder body may be integrally formed. In Embodiments 1 to 4 above, the cylinder body 24, 65, 101, 139, the cylinder head 25, 66, 102, 140, and the head cover 26, 67, 103, 141 are different members. Alternatively, two or three of the cylinder body, the cylinder head, and the head cover may be integrally formed.

In Embodiments 1 to 4 above, the motorcycles are exemplified as a vehicle including the single-cylinder four-stroke engine unit. The vehicle of the present teaching, however, may be any type of vehicle on condition that the vehicle is powered by a single-cylinder four-stroke engine unit. The vehicle of the present teaching may be a straddled vehicle which is not a motorcycle. A straddled vehicle indicates all types of vehicles on which a rider rides in a manner of straddling a saddle. A straddled vehicle includes motorcycles, tricycles, four-wheeled buggies (ATVs: All Terrain Vehicles), personal water crafts, snowmobiles, and the like. The vehicle of the present teaching may not be a straddled vehicle. Furthermore, no rider may ride the vehicle of the present teaching. Furthermore, the vehicle of the present teaching may run without any rider or passenger. In these cases, the frontward direction of the vehicle indicates the direction in which the vehicle advances.

The single-cylinder four-stroke engine units 93 and 132 of Embodiments 3 and 4 above are of a unit-swing type. The engine main body 94, 133 is arranged to be swingable with respect to the vehicle body frame 81, 121. Due to this, the position of the crankshaft axis Cr3, Cr4 with respect to the main catalyst 116, 154 changes in accordance with the engine running state. In this specification and the present teaching, the expression "the main catalyst is positioned in front of the crankshaft axis" indicates that the main catalyst is positioned in front of the crankshaft axis when the engine main body is at a position within a movable range. Positional relations other than this positional relation between the main catalyst and the crankshaft axis in the front-rear direction are also realized within the movable range of the engine main body.

In this specification and the present teaching, the upstream end of the main catalyst is an end of the main catalyst, at which the path length from the combustion chamber is the shortest. The downstream end of the main catalyst indicates an end of the main catalyst, at which the path length from the combustion chamber is the longest. The upstream ends and the downstream ends of elements other than the main catalyst are similarly defined, too.

In this specification and the present teaching, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification and the present teaching, the path length of the exhaust path indicates the path length of the center of the exhaust path. The path length of the expansion chamber in the silencer indicates the length of the path which connects the center of the inflow port of the expansion chamber with the center of the outflow port of the expansion chamber in the shortest distance.

In this specification, the path direction indicates the direction of the path which passes the center of the exhaust path and the direction in which the exhaust gas flows.

This specification uses an expression "the cross-sectional area of the passage member cut along the direction orthogonal to the path direction". Furthermore, the specification and the present teaching use an expression "the cross-sectional area of the passage member cut along the direction orthogonal to the flow direction of the exhaust gas". The cross-sectional area of the passage member may be the area of the inner circumferential surface of the passage member or the area of the outer circumferential surface of the passage member.

In this specification and the present teaching, expressions stating that a member or a linear line extends in a direction A and a direction along the direction A are not limited to cases where the member or the linear line is in parallel to the direction A. The expression that a member or a linear line extends in a direction A encompasses cases where the member or the linear line intersects with the direction A at an angle which falls within the range from -45 degrees to 45 degrees, and the expression that a direction is along a direction A includes cases where the direction intersects with the direction A at an angle which falls within the range from -45 degrees to 45 degrees. The direction A does not indicate any specific direction. The direction A may be the horizontal direction or the front-rear direction.

The crankcase main bodies 23, 64, 100, and 138 of this specification are equivalent to the crankcase members 18, 61, 95, and 135 of the specification of the basic application of the subject application, respectively. The cylinder bodies 24, 65, 101, and 139 of this specification are equivalent to the cylinder members 24, 62, 96, and 136 of the specification of the basic application above, respectively. The engine main bodies 20, 61, 94, and 133 of this specification are equivalent to the engines 20, 60, 93, and 131 of the specification of the basic application above, respectively. The cylinder exhaust passage member 31 of this specification is equivalent to the passage member forming the passage P2 for exhaust gas in the specification of the basic application above.

The present teaching includes any and all embodiments including equivalent elements, modifications, omissions, combinations (e.g., of features across various embodiments), adaptations and/or alterations which can be understood by those skilled in the art on the basis of the present disclosure. The limitations in the claims are to be interpreted broadly on the basis of the language used in the claims. The limitations in the claims are not limited to the embodiments described herein or during the prosecution of the application. Such embodiments are to be construed as non-exclusive. For example, the term "preferably" or "preferable" herein is non-exclusive and means "preferably/preferable, but not limited to."

### [Reference Signs List]

1, 50, 80, 120 motorcycle (vehicle)
2, 53, 81, 121 vehicle body frame
19, 60, 93, 132 single-cylinder four-stroke engine unit
20, 61, 94, 133 engine main body
21, 62, 98, 136 crankcase member
22, 63, 99, 137 cylinder member
24a, 65a, 101a, 139a cylinder hole
27, 68, 104, 142 crankshaft
28, 69, 105, 143 piston
29, 70, 106, 144 combustion chamber
31, 72, 108, 146 cylinder exhaust passage member (single-combustion-chamber cylinder exhaust passage member)
34, 75, 111, 149, 234, 375, 534 exhaust pipe
35, 76, 112, 150 silencer
35e, 76e, 112e, 150e discharge port
36, 77, 113, 151 exhaust passage member (single-combustion-chamber exhaust passage member)
37, 78, 114, 152 upstream oxygen detector (single-combustion-chamber upstream oxygen detector)
38, 79, 115, 153 catalyst unit
39, 116, 154, 180 main catalyst (single-combustion-chamber main catalyst)
40a, 117a, 155a, 181a upstream passage member
40b, 117b, 155b, 181b catalyst-provided passage member
40c, 117c, 155c, 181c downstream passage member
41, 118, 156, 182 exhaust path
200 upstream sub-catalyst (single-combustion-chamber upstream sub-catalyst)
400 downstream sub-catalyst (single-combustion-chamber downstream sub-catalyst)
437 downstream oxygen detector (single-combustion-chamber downstream oxygen detector)
500 double-walled pipe
501 inner pipe
502 outer pipe
600 catalyst protector
Cr1, Cr2, Cr3, Cr4 crankshaft axis (central axis of crankshaft)
Cy1, Cy2, Cy3, Cy4 cylinder axis (central axis of cylinder hole)
L2, L4, L6, L8 linear line orthogonal to crankshaft axis and cylinder axis

## Claims

1. A vehicle (1, 50, 80, 120) on which a single-cylinder four-stroke engine unit (19, 60, 93, 132) is mounted,
the single-cylinder four-stroke engine unit (19, 60, 93, 132) including:
an engine main body (20, 61, 94, 133) including a crankcase member (21, 62, 98, 136) and a cylinder member (22, 63, 99, 137), the crankcase member (21, 62, 98, 136) including a crankshaft (27, 68, 104, 142) extending in a left-right direction of the vehicle (1, 50, 80, 120), and the cylinder member (22, 63, 99, 137) including one combustion chamber (29, 70, 106, 144), which is provided at least partially frontward of a central axis (Cr1, Cr2, Cr3, Cr4) of the crankshaft (27, 68, 104, 142) in a front-rear direction of the vehicle (1, 50, 80, 120), and a single-combustion-chamber cylinder exhaust passage member (31, 72, 108, 146), in which exhaust gas exhausted from the one combustion chamber (29, 70, 106, 144) flows;
a single-combustion-chamber exhaust passage member (36, 77, 113, 151), the single-combustion-chamber exhaust passage member (36, 77, 113, 151) including a discharge port (35e, 76e, 112e, 150e) which is provided rearward of the central axis (Cr1, Cr2, Cr3, Cr4) of the crankshaft (27, 68, 104, 142) in the front-rear direction of the vehicle (1, 50, 80, 120) exposed to the atmosphere, the single-combustion-chamber exhaust passage member (36, 77, 113, 151) allowing the exhaust gas to flow from a downstream end of the single-combustion-chamber cylinder exhaust passage member (31, 72, 108, 146) to the discharge port (35e, 76e, 112e, 150e), and the single-combustion-chamber exhaust passage member (36, 77, 113, 151) being partially provided above or below the central axis (Cr1, Cr2, Cr3, Cr4) of the crankshaft (27, 68, 104, 142);
a single-combustion-chamber main catalyst (39, 116, 154, 180), the single-combustion-chamber main catalyst (39, 116, 154, 180) being provided inside the single-combustion-chamber cylinder exhaust passage member (31, 72, 108, 146) or inside the single-combustion-chamber exhaust passage member (36, 77, 113, 151), the single-combustion-chamber main catalyst (39, 116, 154, 180) being provided at least partially frontward of the central axis (Cr1, Cr2, Cr3, Cr4) of the crankshaft (27, 68, 104, 142) in the front-rear direction of the vehicle (1, 50, 80, 120), and the single-combustion-chamber main catalyst (39, 116, 154, 180) being configured to purify the exhaust gas exhausted from the one combustion chamber (29, 70, 106, 144) most into an exhaust path extending from the one combustion chamber (29, 70, 106, 144) to the discharge port (35e, 76e, 112e, 150e);
a single-combustion-chamber upstream oxygen detector (37, 78, 114, 152), the single-combustion-chamber upstream oxygen detector (37, 78, 114, 152) being provided upstream of the single-combustion-chamber main catalyst (39, 116, 154, 180) in a flow direction of the exhaust gas in the single-combustion-chamber cylinder exhaust passage member (31, 72, 108, 146) or the single-combustion-chamber exhaust passage member (36, 77, 113, 151), the single-combustion-chamber upstream oxygen detector (37, 78, 114, 152) being provided so that a path length from the one combustion chamber (29, 70, 106, 144) to the single-combustion-chamber upstream oxygen detector (37, 78, 114, 152) is longer than a path length from the single-combustion-chamber upstream oxygen detector (37, 78, 114, 152) to an upstream end of the single-combustion-chamber main catalyst (39, 116, 154, 180), the upstream end being positioned frontward in the front-rear direction of the central axis (Cr1, Cr2, Cr3, Cr4) of the crankshaft (27, 68, 104, 142), and the single-combustion-chamber upstream oxygen detector (37, 78, 114, 152) being configured to detect oxygen density in the exhaust gas; and
a controller (45) configured to process a signal from the single-combustion-chamber upstream oxygen detector (37, 78, 114, 152),
wherein the cylinder member (22, 63, 99, 137) has a cylinder hole (24a, 65a, 101a, 139a) in which a piston is provided, **characterized in that**
when the vehicle (1, 50, 80, 120) is viewed in the left-right direction, the single-combustion-chamber main catalyst (39, 116, 154, 180) is provided at least partially in front in the front-rear direction of a linear line which is orthogonal to the central axis (Cy1, Cy2, Cy3, Cy4) of the cylinder hole (24a, 65a, 101a, 139a) and orthogonal to the central axis (Cr1, Cr2, Cr3, Cr4) of the crankshaft (27, 68, 104, 142).

2. The vehicle (1, 50, 80, 120) according to claim 1, wherein
when the vehicle (1, 50, 80, 120) is viewed in the left-right direction, the whole of the single-combustion-chamber main catalyst (39, 116, 154, 180) is provided in front in the front-rear direction of a linear line which is orthogonal to the central axis (Cy1, Cy2, Cy3, Cy4) of the cylinder hole (24a, 65a, 101a, 139a) and orthogonal to the central axis (Cr1, Cr2, Cr3, Cr4) of the crankshaft (27, 68, 104, 142).

3. The vehicle (1, 50, 80, 120) according to claim 1 or 2, wherein the single-combustion-chamber main catalyst (39, 116, 154, 180) is provided so that a path length from the one combustion chamber (29, 70, 106, 144) to an upstream end of the single-combustion-chamber main catalyst (39, 116, 154, 180) is shorter than a path length from a downstream end of the single-combustion-chamber main catalyst (39, 116, 154, 180) to the discharge port (35e, 76e, 112e, 150e).

4. The vehicle (1, 50, 80, 120) according to any one of claims 1 to 3, wherein
the single-combustion-chamber exhaust passage member (36, 77, 113, 151) includes an exhaust pipe (34, 75, 111, 149, 234, 375, 534) which is connected with a downstream end of the single-combustion-chamber cylinder exhaust passage member (31, 72, 108, 146) of the engine main body (20, 61, 94, 133) and a silencer (35, 76, 112, 150) which is connected with the exhaust pipe (34, 75, 111, 149, 234, 375, 534), into which the exhaust gas discharged from a downstream end of the exhaust pipe (34, 75, 111, 149, 234, 375, 534) flows, the silencer (35, 76, 112, 150) being configured to reduce the volume of sound generated by the exhaust gas, and
the single-combustion-chamber main catalyst (39, 116, 154, 180) is provided so that a path length from the one combustion chamber (29, 70, 106, 144) to the upstream end of the single-combustion-chamber main catalyst (39, 116, 154, 180) is shorter than a path length from the downstream end of the single-combustion-chamber main catalyst (39, 116, 154, 180) to the downstream end of the exhaust pipe (34, 75, 111, 149, 234, 375, 534).

5. The vehicle (1, 50, 80, 120) according to any one of claims 1 to 4, wherein
the single-combustion-chamber exhaust passage member (36, 77, 113, 151) includes an exhaust pipe (34, 75, 111, 149, 234, 375, 534) which is connected with a downstream end of the single-combustion-chamber cylinder exhaust passage member (31, 72, 108, 146) of the engine main body (20, 61, 94, 133) and a silencer (35, 76, 112, 150) which is connected with the exhaust pipe (34, 75, 111, 149, 234, 375, 534), into which the exhaust gas discharged from a downstream end of the exhaust pipe (34, 75, 111, 149, 234, 375, 534) flows, the silencer (35, 76, 112, 150) being configured to reduce the volume of sound generated by the exhaust gas, and
the single-combustion-chamber main catalyst (39, 116, 154, 180) is provided in the exhaust pipe (34, 75, 111, 149, 234, 375, 534).

6. The vehicle (1, 50, 80, 120) according to any one of claims 1 to 5, wherein
the single-combustion-chamber exhaust passage member (36, 77, 113, 151) includes an exhaust pipe (34, 75, 111, 149, 234, 375, 534) which is connected with a downstream end of the single-combustion-chamber cylinder exhaust passage member (31, 72, 108, 146) of the engine main body (20, 61, 94, 133) and a silencer (35, 76, 112, 150) which is connected with the exhaust pipe (34, 75, 111, 149, 234, 375, 534), into which the exhaust gas discharged from a downstream end of the exhaust pipe (34, 75, 111, 149, 234, 375, 534) flows, the silencer (35, 76, 112, 150) being configured to reduce the volume of sound generated by the exhaust gas, and
the single-combustion-chamber upstream oxygen detector (37, 78, 114, 152) is provided in the exhaust pipe (34, 75, 111, 149, 234, 375, 534).

7. The vehicle (1, 50, 80, 120) according to any one of claims 1 to 6, wherein
a passage member including the single-combustion-chamber cylinder exhaust passage member (31, 72, 108, 146) of the cylinder member (22, 63, 99, 137) and the single-combustion-chamber exhaust passage member (36, 77, 113, 151) includes a catalyst-provided passage member (40b, 117b, 155b, 181b) in which the single-combustion-chamber main catalyst (39, 116, 154, 180) is provided and an upstream passage member (40a, 117a, 155a, 181a) connected with an upstream end of the catalyst-provided passage member (40b, 117b, 155b, 181b), and
in at least a part of the upstream passage member (40a, 117a, 155a, 181a), a cross-sectional area of the upstream passage member (40a, 117a, 155a, 181a) cut along a direction orthogonal to the flow direction of the exhaust gas is smaller than a cross-sectional area of the catalyst-provided passage member (40b, 117b, 155b, 181b) cut along the direction orthogonal to the flow direction of the exhaust gas.

8. The vehicle (1, 50, 80, 120) according to any one of claims 1 to 7, wherein
the single-combustion-chamber main catalyst (39, 116, 154, 180) is provided in the single-combustion-chamber exhaust passage member (36, 77, 113, 151), and
at least a part of the single-combustion-chamber exhaust passage member (36, 77, 113, 151), which is upstream in the flow direction of the single-combustion-chamber main catalyst (39, 116, 154, 180), is formed of a multi-walled pipe which includes an inner pipe and at least one outer pipe covering the inner pipe.

9. The vehicle (1, 50, 80, 120) according to any one of claims 1 to 8, wherein
the single-combustion-chamber exhaust passage member (36, 77, 113, 151) includes a catalyst-provided passage member (40b, 117b, 155b, 181b) in which the single-combustion-chamber main catalyst (39, 116, 154, 180) is provided, and
the single-cylinder four-stroke engine unit (19, 60, 93, 132) includes a catalyst protector which at least partially covers an outer surface of the catalyst-provided passage member (40b, 117b, 155b, 181b).

10. The vehicle (1, 50, 80, 120) according to any one of claims 1 to 9, wherein the single-cylinder four-stroke engine unit (19, 60, 93, 132) includes a single-combustion-chamber upstream sub-catalyst (200) which is provided upstream in the flow direction of the single-combustion-chamber main catalyst (39, 116, 154, 180) in the single-combustion-chamber cylinder exhaust passage member (31, 72, 108, 146) or the single-combustion-chamber exhaust passage member (36, 77, 113, 151), the single-combustion-chamber upstream sub-catalyst (200) being configured to purify the exhaust gas.

11. The vehicle (1, 50, 80, 120) according to claim 10, wherein the single-combustion-chamber upstream oxygen detector (37, 78, 114, 152) is provided upstream in the flow direction of the single-combustion-chamber upstream sub-catalyst (200) .

12. The vehicle (1, 50, 80, 120) according to any one of claims 1 to 11, wherein the single-cylinder four-stroke engine unit (19, 60, 93, 132) includes a single-combustion-chamber downstream sub-catalyst which is provided downstream in the flow direction of the single-combustion-chamber main catalyst (39, 116, 154, 180) in the single-combustion-chamber cylinder exhaust passage member (31, 72, 108, 146) or the single-combustion-chamber exhaust passage member (36, 77, 113, 151), the single-combustion-chamber upstream sub-catalyst (200) being configured to purify the exhaust gas.

13. The vehicle (1, 50, 80, 120) according to claim 12, wherein
the single-cylinder four-stroke engine unit (19, 60, 93, 132) includes a single-combustion-chamber downstream oxygen detector (437) which is provided downstream in the flow direction of the single-combustion-chamber main catalyst (39, 116, 154, 180) and upstream in the flow direction of the single-combustion-chamber downstream sub-catalyst, and
the controller (45) is configured to process a signal from the single-combustion-chamber downstream oxygen detector (437).

14. The vehicle (1, 50, 80, 120) according to claim 12, wherein
the single-cylinder four-stroke engine unit (19, 60, 93, 132) includes a single-combustion-chamber downstream oxygen detector (437) which is provided downstream in the flow direction of the single-combustion-chamber downstream sub-catalyst, and
the controller (45) is configured to process a signal from the single-combustion-chamber downstream oxygen detector (437).

15. The vehicle (1, 50, 80, 120) according to any one of claims 1 to 14, wherein
the single-cylinder four-stroke engine unit (19, 60, 93, 132) includes a single-combustion-chamber downstream oxygen detector (437) which is provided downstream in the flow direction of the single-combustion-chamber main catalyst (39, 116, 154, 180) in the single-combustion-chamber cylinder exhaust passage member (31, 72, 108, 146) or the single-combustion-chamber exhaust passage member (36, 77, 113, 151), and
the controller (45) is configured to process a signal from the single-combustion-chamber downstream oxygen detector (437).

16. The vehicle (1, 50, 80, 120) according to any one of claims 13 to 15, wherein
the controller (45) is configured to determine the purification capability of the single-combustion-chamber main catalyst (39, 116, 154, 180) based on the signal from the single-combustion-chamber downstream oxygen detector (437), and
a notification unit is configured to perform a notification when the controller (45) determines that the purification capability of the single-combustion-chamber main catalyst (39, 116, 154, 180) has been lowered to a predetermined level.

17. The vehicle (1, 50, 80, 120) according to any one of claims 13 to 16, wherein
the single-cylinder four-stroke engine unit (19, 60, 93, 132) includes a fuel supplier which is configured to supply fuel to the one combustion chamber (29, 70, 106, 144), and
the controller (45) is configured to control the amount of fuel supplied to the one combustion chamber (29, 70, 106, 144) by the fuel supplier based on a signal from the single-combustion-chamber upstream oxygen detector (37, 78, 114, 152) and a signal from the single-combustion-chamber downstream oxygen detector (437).

## Patentansprüche

1. Ein Fahrzeug (1, 50, 80, 120), auf dem eine Einzylinder-Viertakt-Motoreinheit (19, 60, 93, 132) befestigt ist,
wobei die Einzylinder-Viertakt-Motoreinheit (19, 60, 93, 132) Folgendes umfasst:
einen Motorhauptkörper (20, 61, 94, 133), der ein Kurbelgehäusebauglied (21, 62, 98, 136) und ein Zylinderbauglied (22, 63, 99, 137) umfasst, wobei das Kurbelgehäusebauglied (21, 62, 98, 136) eine Kurbelwelle (27, 68, 104, 142) umfasst, die sich in einer Links-Rechts-Richtung des Fahrzeugs (1, 50, 80, 120) erstreckt, und das Zylinderbauglied (22, 63, 99, 137) eine Verbrennungskammer (29, 70, 106, 144) umfasst, die zumindest teilweise weiter vorne als eine Mittelachse (Cr1, Cr2, Cr3, Cr4) der Kurbelwelle (27, 68, 104, 142) in einer Vorne-Hinten-Richtung des Fahrzeugs (1, 50, 80, 120) vorgesehen ist, sowie ein Einzelverbrennungskammer-Zylinder-Abgasdurchgangsbauglied (31, 72, 108, 146), in das Abgas strömt, das aus der einen Verbrennungskammer (29, 70, 106, 144) ausgestoßen wird;
ein Einzelverbrennungskammer-Abgasdurchgangsbauglied (36, 77, 113, 151), wobei das Einzelverbrennungskammer-Abgasdurchgangsbauglied (36, 77, 113, 151) ein Ausstoßtor (35e, 76e, 112e, 150e) umfasst, die weiter hinten als die Mittelachse (Cr1, Cr2, Cr3, Cr4) der Kurbelwelle (27, 68, 104, 142) in der Vorne-Hinten-Richtung des Fahrzeugs (1, 50, 80, 120) der Atmosphäre ausgesetzt vorgesehen ist, wobei das Einzelverbrennungskammer-Abgasdurchgangsbauglied (36, 77, 113, 151) es ermöglicht, dass das Abgas von einem stromabwärtigen Ende des Einzelverbrennungskammer-Zylinder-Abgasdurchgangsbauglieds (31, 72, 108, 146) zu dem Ausstoßtor (35e, 76e, 112e, 150e) strömt, und das Einzelverbrennungskammer-Abgasdurchgangsbauglied (36, 77, 113, 151) teilweise oberhalb oder unterhalb der Mittelachse (Cr1, Cr2, Cr3, Cr4) der Kurbelwelle (27, 68, 104, 142) vorgesehen ist;
einen Einzelverbrennungskammer-Hauptkatalysator (39, 116, 154, 180), wobei der Einzelverbrennungskammer-Hauptkatalysator (39, 116, 154, 180) innerhalb des Einzelverbrennungskammer-Zylinder-Abgasdurchgangsbauglieds (31, 72, 108, 146) oder innerhalb des Einzelverbrennungskammer-Abgasdurchgangsbauglieds (36, 77, 113, 151) vorgesehen ist, wobei der Einzelverbrennungskammer-Hauptkatalysator (39, 116, 154, 180) zumindest teilweise weiter vorne als die Mittelachse (Cr1, Cr2, Cr3, Cr4) der Kurbelwelle (27, 68, 104, 142) in der Vorne-Hinten-Richtung des Fahrzeugs (1, 50, 80, 120) vorgesehen ist und der Einzelverbrennungskammer-Hauptkatalysator (39, 116, 154, 180) dazu konfiguriert ist, das Abgas zu reinigen, das aus der einen Verbrennungskammer (29, 70, 106, 144) vor allem in einen Abgasweg ausgestoßen wird, der sich von der einen Verbrennungskammer (29, 70, 106, 144) zu dem Ausstoßtor (35e, 76e, 112e, 150e) erstreckt;
einen stromaufwärts der Einzelverbrennungskammer gelegenen Sauerstoffdetektor (37, 78, 114, 152), wobei der stromaufwärts der Einzelverbrennungskammer gelegene Sauerstoffdetektor (37, 78, 114, 152) stromaufwärts von dem Einzelverbrennungskammer-Hauptkatalysator (39, 116, 154, 180) in einer Strömungsrichtung des Abgases in dem Einzelverbrennungskammer-Zylinder-Abgasdurchgangsbauglied (31, 72, 108, 146) oder dem Einzelverbrennungskammer-Abgasdurchgangsbauglied (36, 77, 113, 151) vorgesehen ist, wobei der stromaufwärts der Einzelverbrennungskammer gelegene Sauerstoffdetektor (37, 78, 114, 152) so vorgesehen ist, dass eine Weglänge von der einen Verbrennungskammer (29, 70, 106, 144) zu dem stromaufwärts der Einzelverbrennungskammer gelegenen Sauerstoffdetektor (37, 78, 114, 152) länger ist als eine Weglänge von dem stromaufwärts der Einzelverbrennungskammer gelegenen Sauerstoffdetektor (37, 78, 114, 152) zu einem stromaufwärtigen Ende des Einzelverbrennungskammer-Hauptkatalysators (39, 116, 154, 180), wobei das stromaufwärtige Ende in der Vorne-Hinten-Richtung weiter vorne als die Mittelachse (Cr1, Cr2, Cr3, Cr4) der Kurbelwelle (27, 68, 104, 142) positioniert ist und wobei der stromaufwärts der Einzelverbrennungskammer gelegene Sauerstoffdetektor (37, 78, 114, 152) dazu konfiguriert ist, die Sauerstoffdichte in dem Abgas zu erfassen; und
eine Steuerung (45), die dazu konfiguriert ist, ein Signal von dem stromaufwärts der Einzelverbrennungskammer gelegenen Sauerstoffdetektor (37, 78, 114, 152) zu verarbeiten,
wobei das Zylinderbauglied (22, 63, 99, 137) ein Zylinderloch (24a, 65a, 101a, 139a) aufweist, in dem ein Kolben vorgesehen ist, **dadurch gekennzeichnet, dass**:
wenn das Fahrzeug (1, 50, 80, 120) in der Links-Rechts-Richtung betrachtet wird, der Einzelverbrennungskammer-Hauptkatalysator (39, 116, 154, 180) zumindest teilweise in der Vorne-Hinten-Richtung weiter vorne als eine gerade Linie vorgesehen ist, die orthogonal zu der Mittelachse (Cy1, Cy2, Cy3, Cy4) des Zylinderlochs (24a, 65a, 101a, 139a) ist und orthogonal zu der Mittelachse (Cr1, Cr2, Cr3, Cr4) der Kurbelwelle (27, 68, 104, 142) ist.

2. Das Fahrzeug (1, 50, 80, 120) gemäß Anspruch 1, wobei
wenn das Fahrzeug (1, 50, 80, 120) in der Links-Rechts-Richtung betrachtet wird, der gesamte Einzelverbrennungskammer-Hauptkatalysator (39, 116, 154, 180) in der Vorne-Hinten-Richtung weiter vorne als eine gerade Linie vorgesehen ist, die orthogonal zu der Mittelachse (Cy1, Cy2, Cy3, Cy4) des Zylinderlochs (24a, 65a, 101a, 139a) ist und orthogonal zu der Mittelachse (Cr1, Cr2, Cr3, Cr4) der Kurbelwelle (27, 68, 104, 142) ist.

3. Das Fahrzeug (1, 50, 80, 120) gemäß Anspruch 1 oder 2, wobei der Einzelverbrennungskammer-Hauptkatalysator (39, 116, 154, 180) so vorgesehen ist, dass eine Weglänge von der einen Verbrennungskammer (29, 70, 106, 144) zu einem stromaufwärtigen Ende des Einzelverbrennungskammer-Hauptkatalysators (39, 116, 154, 180) kürzer ist als eine Weglänge von einem stromabwärtigen Ende des Einzelverbrennungskammer-Hauptkatalysators (39, 116, 154, 180) zu dem Ausstoßtor (35e, 76e, 112e, 150e).

4. Das Fahrzeug (1, 50, 80, 120) gemäß einem der Ansprüche 1 bis 3, wobei das Einzeiverbrennungskammer-Abgasdurchgangsbauglied (36, 77, 113, 151) ein Abgasrohr (34, 75, 111, 149, 234, 375, 534), das mit einem stromabwärtigen Ende des Einzelverbrennungskammer-Zylinder-Abgasdurchgangsbauglieds (31, 72, 108, 146) des Motorhauptkörpers (20, 61, 94, 133) verbunden ist, und einen Schalldämpfer (35, 76, 112, 150) umfasst, der mit dem Abgasrohr (34, 75, 111, 149, 234, 375, 534) verbunden ist, in das das Abgas strömt, das von einem stromabwärtigen Ende des Abgasrohrs (34, 75, 111, 149, 234, 375, 534) ausgestoßen wird, wobei der Schalldämpfer (35, 76, 112, 150) dazu konfiguriert ist, die Lautstärke des Schalls zu reduzieren, der durch das Abgas erzeugt wird, und
der Einzelverbrennungskammer-Hauptkatalysator (39, 116, 154, 180) so vorgesehen ist, dass eine Weglänge von der einen Verbrennungskammer (29, 70, 106, 144) zu dem stromaufwärtigen Ende des Einzelverbrennungskammer-Hauptkatalysators (39, 116, 154, 180) kürzer ist als eine Weglänge von dem stromabwärtigen Ende des Einzelverbrennungskammer-Hauptkatalysators (39, 116, 154, 180) zu dem stromabwärtigen Ende des Abgasrohrs (34, 75, 111, 149, 234, 375, 534).

5. Das Fahrzeug (1, 50, 80, 120) gemäß einem der Ansprüche 1 bis 4, wobei
das Einzelverbrennungskammer-Abgasdurchgangsbauglied (36, 77, 113, 151) ein Abgasrohr (34, 75, 111, 149, 234, 375, 534), das mit einem stromabwärtigen Ende des Einzelverbrennungskammer-Zylinder-Abgasdurchgangsbauglieds (31, 72, 108, 146) des Motorhauptkörpers (20, 61, 94, 133) verbunden ist, und einen Schalldämpfer (35, 76, 112, 150) umfasst, der mit dem Abgasrohr (34, 75, 111, 149, 234, 375, 534) verbunden ist, in das das Abgas strömt, das von einem stromabwärtigen Ende des Abgasrohrs (34, 75, 111, 149, 234, 375, 534) ausgestoßen wird, wobei der Schalldämpfer (35, 76, 112, 150) dazu konfiguriert ist, die Lautstärke des Schalls zu reduzieren, der durch das Abgas erzeugt wird, und
der Einzelverbrennungskammer-Hauptkatalysator (39, 116, 154, 180) in dem Abgasrohr (34, 75, 111, 149, 234, 375, 534) vorgesehen ist.

6. Das Fahrzeug (1, 50, 80, 120) gemäß einem der Ansprüche 1 bis 5, wobei
das Einzelverbrennungskammer-Abgasdurchgangsbauglied (36, 77, 113, 151) ein Abgasrohr (34, 75, 111, 149, 234, 375, 534), das mit einem stromabwärtigen Ende des Einzelverbrennungskammer-Zylinder-Abgasdurchgangsbauglieds (31, 72, 108, 146) des Motorhauptkörpers (20, 61, 94, 133) verbunden ist, und einen Schalldämpfer (35, 76, 112, 150) umfasst, der mit dem Abgasrohr (34, 75, 111, 149, 234, 375, 534) verbunden ist, in das das Abgas strömt, das von einem stromabwärtigen Ende des Abgasrohrs (34, 75, 111, 149, 234, 375, 534) ausgestoßen wird, wobei der Schalldämpfer (35, 76, 112, 150) dazu konfiguriert ist, die Lautstärke des Schalls zu reduzieren, der durch das Abgas erzeugt wird, und der stromaufwärts der Einzelverbrennungskammer gelegene Sauerstoffdetektor (37, 78, 114, 152) in dem Abgasrohr (34, 75, 111, 149, 234, 375, 534) vorgesehen ist.

7. Das Fahrzeug (1, 50, 80, 120) gemäß einem der Ansprüche 1 bis 6, wobei
ein Durchgangsbauglied, das das Einzelverbrennungskammer-Zylinder-Abgasdurchgangsbauglieds (31, 72, 108, 146) des Zylinderbauglieds (22, 63, 99, 137) und das Einzelverbrennungskammer-Abgasdurchgangsbauglied (36, 77, 113, 151) umfasst, ein mit einem Katalysator versehenes Durchgangsbauglied (40b, 117b, 155b, 181b), in dem der Einzelverbrennungskammer-Hauptkatalysator (39, 116, 154, 180) vorgesehen ist, und ein stromaufwärtiges Durchgangsbauglied (40a, 117a, 155a, 181a) umfasst, das mit einem stromaufwärtigen Ende des mit einem Katalysator versehenen Durchgangsbauglieds (40b, 117b, 155b, 181b) verbunden ist, und
in zumindest einem Teil des stromaufwärtigen Durchgangsbauglieds (40a, 117a, 155a, 181a) eine Querschnittsfläche des stromaufwärtigen Durchgangsbauglieds (40a, 117a, 155a, 181a), die entlang einer Richtung orthogonal zu der Strömungsrichtung des Abgases geschnitten ist, kleiner ist als eine Querschnittsfläche des mit einem Katalysator versehenen Durchgangsbauglieds (40b, 117b, 155b, 181b), die entlang der Richtung orthogonal zu der Strömungsrichtung des Abgases geschnitten ist.

8. Das Fahrzeug (1, 50, 80, 120) gemäß einem der Ansprüche 1 bis 7, wobei
der Einzelverbrennungskammer-Hauptkatalysator (39, 116, 154, 180) in dem Einzelverbrennungskammer-Abgasdurchgangsbauglied (36, 77, 113, 151) vorgesehen ist, und
zumindest ein Teil des Einzelverbrennungskammer-Abgasdurchgangsbauglieds (36, 77, 113, 151), das in der Strömungsrichtung des Einzelverbrennungskammer-Hauptkatalysators (39, 116, 154, 180) stromaufwärts gelegen ist, aus einem mehrwandigen Rohr gebildet ist, das ein Innenrohr und zumindest ein Außenrohr aufweist, das das Innenrohr bedeckt.

9. Das Fahrzeug (1, 50, 80, 120) gemäß einem der Ansprüche 1 bis 8, wobei das Einzelverbrennungskammer-Abgasdurchgangsbauglied (36, 77, 113, 151) ein mit einem Katalysator versehenes Durchgangsbauglied (40b, 117b, 155b, 181b) aufweist, in dem der Einzelverbrennungskammer-Hauptkatalysator (39, 116, 154, 180) vorgesehen ist, und
die Einzylinder-Viertakt-Motoreinheit (19, 60, 93, 132) eine Katalysatorschutzvorrichtung umfasst, die zumindest teilweise eine Außenoberfläche des mit einem Katalysator versehenen Durchgangsbauglieds (40b, 117b, 155b, 181b) bedeckt.

10. Das Fahrzeug (1, 50, 80, 120) gemäß einem der Ansprüche 1 bis 9, wobei die Einzylinder-Viertakt-Motoreinheit (19, 60, 93, 132) einen stromaufwärts der Einzelverbrennungskammer gelegenen Subkatalysator (200) umfasst, der in der Strömungsrichtung des Einzelverbrennungskammer-Hauptkatalysators (39, 116, 154, 180) in dem Einzelverbrennungskammer-Zylinder-Abgasdurchgangsbauglied (31, 72, 108, 146) oder dem Einzelverbrennungskammer-Abgasdurchgangsbauglied (36, 77, 113, 151) stromaufwärts vorgesehen ist, wobei der stromaufwärts der Einzelverbrennungskammer gelegene Subkatalysator (200) dazu konfiguriert ist, das Abgas zu reinigen.

11. Das Fahrzeug (1, 50, 80, 120) gemäß Anspruch 10, wobei der stromaufwärts der Einzelverbrennungskammer gelegene Sauerstoffdetektor (37, 78, 114, 152) in der Strömungsrichtung des stromaufwärts der Einzelverbrennungskammer gelegenen Subkatalysators (200) stromaufwärts vorgesehen ist.

12. Das Fahrzeug (1, 50, 80, 120) gemäß einem der Ansprüche 1 bis 11, wobei die Einzylinder-Viertakt-Motoreinheit (19, 60, 93, 132) einen stromabwärts der Einzelverbrennungskammer gelegenen Subkatalysator umfasst, der in der Strömungsrichtung des Einzelverbrennungskammer-Hauptkatalysators (39, 116, 154, 180) in dem Einzelverbrennungskammer-Zylinder-Abgasdurchgangsbauglied (31, 72, 108, 146) oder dem Einzelverbrennungskammer-Abgasdurchgangsbauglied (36, 77, 113, 151) stromabwärts vorgesehen ist, wobei der stromaufwärts der Einzelverbrennungskammer gelegene Subkatalysator (200) dazu konfiguriert ist, das Abgas zu reinigen.

13. Das Fahrzeug (1, 50, 80, 120) gemäß einem der Ansprüche 1 bis 12, wobei die Einzylinder-Viertakt-Motoreinheit (19, 60, 93, 132) einen stromabwärts der Einzelverbrennungskammer gelegenen Sauerstoffdetektor (437) aufweist, der in der Strömungsrichtung des Einzelverbrennungskammer-Hauptkatalysators (39, 116, 154, 180) stromabwärts vorgesehen ist und in der Strömungsrichtung des stromabwärts der Einzelverbrennungskammer gelegenen Subkatalysators stromaufwärts vorgesehen ist, und
die Steuerung (45) dazu konfiguriert ist, ein Signal von dem stromabwärts der Einzelverbrennungskammer gelegenen Sauerstoffdetektor (437) zu verarbeiten.

14. Das Fahrzeug (1, 50, 80,120) gemäß Anspruch 12, wobei
die Einzylinder-Viertakt-Motoreinheit (19, 60, 93, 132) einen stromabwärts der Einzelverbrennungskammer gelegenen Sauerstoffdetektor (437) umfasst, der in der Strömungsrichtung des stromabwärts der Einzelverbrennungskammer gelegenen Subkatalysators stromabwärts vorgesehen ist, und
die Steuerung (45) dazu konfiguriert ist, ein Signal von dem stromabwärts der Einzelverbrennungskammer gelegenen Sauerstoffdetektor (437) zu verarbeiten.

15. Das Fahrzeug (1, 50, 80, 120) gemäß einem der Ansprüche 1 bis 14, wobei
die Einzylinder-Viertakt-Motoreinheit (19, 60, 93, 132) einen stromabwärts der Einzelverbrennungskammer gelegenen Sauerstoffdetektor (437) umfasst, der in der Strömungsrichtung des Einzelverbrennungskammer-Hauptkatalysators (39, 116, 154, 180) in dem Einzelverbrennungskammer-Zylinder-Abgasdurchgangsbauglied (31, 72, 108, 146) oder dem Einzelverbrennungskammer-Abgasdurchgangsbauglied (36, 77, 113, 151) stromabwärts vorgesehen ist, und
die Steuerung (45) dazu konfiguriert ist, ein Signal von dem stromabwärts der Einzelverbrennungskammer gelegenen Sauerstoffdetektor (437) zu verarbeiten.

16. Das Fahrzeug (1, 50, 80, 120) gemäß einem der Ansprüche 13 bis 15, wobei die Steuerung (45) dazu konfiguriert ist, die Reinigungsfähigkeit des Einzelverbrennungskammer-Hauptkatalysators (39, 116, 154, 180) auf Basis des Signals von dem stromabwärts der Einzelverbrennungskammer gelegenen Sauerstoffdetektor (437) zu bestimmen, und
eine Benachrichtigungseinheit dazu konfiguriert ist, eine Benachrichtigung durchzuführen, wenn die Steuerung (45) bestimmt, dass die Reinigungsfähigkeit des Einzelverbrennungskammer-Hauptkatalysators (39, 116, 154, 180) auf einen vorbestimmten Pegel gesenkt wurde.

17. Das Fahrzeug (1, 50, 80, 120) gemäß einem der Ansprüche 13 bis 16, wobei
die Einzylinder-Viertakt-Motoreinheit (19, 60, 93, 132) eine Kraftstoffzuführvorrichtung umfasst, die dazu konfiguriert ist, der einen Verbrennungskammer (29, 70, 106, 144) Kraftstoff zuzuführen, und
die Steuerung (45) dazu konfiguriert ist, die Kraftstoffmenge, die der einen Verbrennungskammer (29, 70, 106, 144) durch die Kraftstoffzuführvorrichtung zugeführt wird, auf Basis eines Signals von dem stromaufwärts der Einzelverbrennungskammer gelegenen Sauerstoffdetektor (37, 78, 114, 152) und eines Signals von dem stromabwärts der Einzelverbrennungskammer gelegenen Sauerstoffdetektor (437) zu steuern.

## Revendications

1. Véhicule (1, 50, 80, 120) sur lequel est montée une unité de moteur monocylindre à quatre temps (19, 60, 93, 132),
le groupe moteur monocylindre à quatre temps (19, 60, 93, 132) comportant:
un corps principal de moteur (20, 61, 94, 133) comportant un élément de carter (21, 62, 98, 136) et un élément de cylindre (22, 63, 99, 137), l'élément de carter (21, 62, 98, 136) comportant un vilebrequin (27, 68, 104, 142) s'étendant dans une direction gauche-droite du véhicule (1, 50, 80, 120), et l'élément de cylindre (22, 63, 99, 137) comportant une chambre de combustion (29, 70, 106, 144), qui est prévue au moins partiellement à l'avant d'un axe central (Cr1, Cr2, Cr3, Cr4) du vilebrequin (27, 68, 104, 142) dans une direction avant-arrière du véhicule (1, 50, 80, 120) et un élément de passage d'échappement de cylindre à chambre de combustion unique (31, 72, 108, 146) dans lequel circulent les gaz d'échappement évacués de la chambre de combustion (29, 70, 106, 144);
un élément de passage d'échappement de chambre de combustion unique (36, 77, 113, 151), l'élément de passage d'échappement de chambre de combustion unique (36, 77, 113, 151) comportant un orifice d'évacuation (35e, 76e, 112e, 150e) qui est prévu à l'arrière de l'axe central (Cr1, Cr2, Cr3, Cr4) du vilebrequin (27, 68, 104, 142) dans la direction avant-arrière du véhicule (1, 50, 80, 120) exposé à l'atmosphère, l'élément de passage d'échappement de chambre de combustion unique (36, 77, 113, 151) permettant aux gaz d'échappement de circuler d'une extrémité aval de l'élément de passage d'échappement de cylindre à chambre de combustion unique (31, 72, 108, 146) vers l'orifice d'évacuation (35e, 76e, 112e, 150e), et l'élément de passage d'échappement de chambre de combustion unique (36, 77, 113, 151) étant prévu partiellement au-dessus ou au-dessous de l'axe central (Cr1, Cr2, Cr3, Cr4) du vilebrequin (27, 68, 104, 142);
un catalyseur principal de chambre de combustion unique (39, 116, 154, 180), le catalyseur principal de chambre de combustion unique (39, 116, 154, 180) étant prévu à l'intérieur de l'élément de passage d'échappement de cylindre à chambre de combustion unique (31, 72, 108, 146) ou à l'intérieur de l'élément de passage d'échappement de chambre de combustion unique (36, 77, 113, 151), le catalyseur principal de chambre de combustion unique (39, 116, 154, 180) étant prévu au moins partiellement à l'avant de l'axe central (Cr1, Cr2, Cr3, Cr4) du vilebrequin (27, 68, 104, 142) dans la direction avant-arrière du véhicule (1, 50, 80, 120) et le catalyseur principal de chambre de combustion unique (39, 116, 154, 180) étant configuré pour purifier les gaz d'échappement évacués de l'une chambre de combustion (29, 70, 106, 144) pour la plus part vers un trajet d'échappement s'étendant de l'une chambre de combustion (29, 70, 106), 144) vers l'orifice d'évacuation (35e, 76e, 112e, 150e);
un détecteur d'oxygène amont de chambre de combustion unique (37, 78, 114, 152), le détecteur d'oxygène amont de chambre de combustion unique (37, 78, 114, 152) étant prévu en amont du catalyseur principal de chambre de combustion unique (39, 116, 154, 180) dans une direction de circulation des gaz d'échappement dans l'élément de passage d'échappement de cylindre à chambre de combustion unique (31, 72, 108, 146) ou dans l'élément de passage d'échappement de chambre de combustion unique (36, 77, 113, 151), le détecteur d'oxygène amont de chambre de combustion unique (37, 78, 114, 152) étant prévu de sorte qu'une longueur de trajet de l'une chambre de combustion (29, 70, 106, 144) au détecteur d'oxygène amont de chambre de combustion unique (37, 78, 114, 152) soit plus long qu'une longueur de trajet du détecteur d'oxygène amont de chambre de combustion unique (37, 78, 114, 152) à une extrémité amont du catalyseur principal de chambre de combustion unique (39, 116, 154, 180), l'extrémité amont étant positionnée à l'avant dans la direction avant-arrière de l'axe central (Cr1, Cr2, Cr3, Cr4) du vilebrequin (27, 68, 104, 142), et le détecteur d'oxygène amont de chambre de combustion unique (37, 78, 114, 152) étant configuré pour détecter la densité d'oxygène dans les gaz d'échappement; et
un moyen de commande (45) configuré pour traiter un signal du détecteur d'oxygène amont de chambre de combustion unique (37, 78, 114, 152),
dans lequel l'élément de cylindre (22, 63, 99, 137) présente un trou de cylindre (24a, 65a, 101a, 139a) dans lequel est prévu un piston,
**caractérisé par le fait que**
lorsque le véhicule (1, 50, 80, 120) est vu dans la direction gauche-droite, le catalyseur principal de chambre de combustion unique (39, 116, 154, 180) est prévu au moins partiellement à l'avant dans la direction avant-arrière d'une ligne linéaire orthogonale à l'axe central (Cy1, Cy2, Cy3, Cy4) du trou de cylindre (24a, 65a, 101a, 139a) et orthogonale à l'axe central (Cr1, Cr2, Cr3, Cr4) du vilebrequin (27, 68, 104, 142).

2. Véhicule (1, 50, 80, 120) selon la revendication 1, dans lequel
lorsque le véhicule (1, 50, 80, 120) est vu dans la direction gauche-droite, l'ensemble du catalyseur principal de chambre de combustion unique (39, 116, 154, 180) est prévu à l'avant dans la direction avant-arrière d'une ligne linéaire orthogonale à l'axe central (Cy1, Cy2, Cy3, Cy4) du trou de cylindre (24a, 65a, 101a, 139a) et orthogonale à l'axe central (Cr1, Cr2, Cr3, Cr4) du vilebrequin (27, 68, 104, 142).

3. Véhicule (1, 50, 80, 120) selon la revendication 1 ou 2, dans lequel le catalyseur principal de chambre de combustion unique (39, 116, 154, 180) est prévu de sorte qu'une longueur de trajet de l'une chambre de combustion (29, 70, 106, 144) à une extrémité amont du catalyseur principal de chambre de combustion unique (39, 116, 154, 180) soit plus courte qu'une longueur de trajet d'une extrémité aval du catalyseur principal de chambre de combustion unique (39, 116, 154, 180) à l'orifice d'évacuation (35e, 76e, 112e, 150e).

4. Véhicule (1, 50, 80, 120) selon l'une quelconque des revendications 1 à 3, dans lequel
l'élément de passage d'échappement de chambre de combustion unique (36, 77, 113, 151) comporte un tuyau d'échappement (34, 75, 111, 149, 234, 375, 534) qui est connecté à une extrémité aval de l'élément de passage d'échappement de cylindre à chambre combustion unique (31, 72, 108, 146) du corps principal de moteur (20, 61, 94, 133) et un silencieux (35, 76, 112, 150) qui est connecté au tuyau d'échappement (34, 75, 111, 149, 234, 375, 534) vers lequel circulent les gaz d'échappement évacués d'une extrémité aval du tuyau d'échappement (34, 75, 111, 149, 234, 375, 534), le silencieux (35, 76, 112, 150) étant configuré pour réduire le volume sonore généré par les gaz d'échappement, et
le catalyseur principal de chambre de combustion unique (39, 116, 154, 180) est prévu de sorte qu'une longueur de trajet de la chambre de combustion (29, 70, 106, 144) à l'extrémité amont du catalyseur principal de chambre de combustion unique (39, 116, 154, 180) soit plus courte qu'une longueur de trajet de l'extrémité aval du catalyseur principal de chambre de combustion unique (39, 116, 154, 180) à l'extrémité aval du tuyau d'échappement (34, 75, 111, 149, 234, 375, 534).

5. Véhicule (1, 50, 80, 120) selon l'une quelconque des revendications 1 à 4, dans lequel
l'élément de passage d'échappement de chambre de combustion unique (36, 77, 113, 151) comporte un tuyau d'échappement (34, 75, 111, 149, 234, 375, 534) qui est connecté à une extrémité aval de l'élément de passage d'échappement de cylindre à chambre de combustion unique (31, 72, 108, 146) du corps principal de moteur (20, 61, 94, 133) et un silencieux (35, 76, 112, 150) qui est connecté au tuyau d'échappement (34, 75, 111, 149, 234, 375, 534) vers lequel circulent les gaz d'échappement évacués d'une extrémité aval du tuyau d'échappement (34, 75, 111, 149, 234, 375, 534), le silencieux (35, 76, 112, 150) étant configuré pour réduire le volume sonore généré par les gaz d'échappement, et
le catalyseur principal de chambre de combustion unique (39, 116, 154, 180) est prévu dans le tuyau d'échappement (34, 75, 111, 149, 234, 375, 534).

6. Véhicule (1, 50, 80, 120) selon l'une quelconque des revendications 1 à 5, dans lequel
l'élément de passage d'échappement de chambre de combustion unique (36, 77, 113, 151) comporte un tuyau d'échappement (34, 75, 111, 149, 234, 375, 534) qui est connecté à une extrémité aval de l'élément de passage d'échappement de cylindre à chambre de combustion unique (31, 72, 108, 146) du corps principal de moteur (20, 61, 94, 133) et un silencieux (35, 76, 112, 150) qui est connecté au tuyau d'échappement (34, 75, 111, 149, 234, 375, 534) vers lequel circulent les gaz d'échappement évacués d'une extrémité aval du tuyau d'échappement (34, 75, 111, 149, 234, 375, 534), le silencieux (35, 76, 112, 150) étant configuré pour réduire le volume sonore généré par les gaz d'échappement, et
le détecteur d'oxygène amont de chambre de combustion unique (37, 78, 114, 152) est prévu dans le tuyau d'échappement (34, 75, 111, 149, 234, 375, 534).

7. Véhicule (1, 50, 80, 120) selon l'une quelconque des revendications 1 à 6, dans lequel
un élément de passage comportant l'élément de passage d'échappement de cylindre à chambre de combustion unique (31, 72, 108, 146) de l'élément de cylindre (22, 63, 99, 137) et l'élément de passage d'échappement de chambre de combustion unique (36, 77, 113, 151) comporte un élément de passage pourvu d'un catalyseur (40b, 117b, 155b, 181b) dans lequel est prévu le catalyseur principal de chambre de combustion unique (39, 116, 154, 180) et un élément de passage amont (40a, 117a, 155a, 181a) connecté à une extrémité amont de l'élément de passage pourvu du catalyseur (40b, 117b, 155b, 181b), et
dans au moins une partie de l'élément de passage amont (40a, 117a, 155a, 181a), une section transversale de l'élément de passage amont (40a, 117a, 155a, 181a) découpée dans une direction orthogonale à la direction de circulation des gaz d'échappement est plus petite qu'une section transversale de l'élément de passage pourvu du catalyseur (40b, 117b, 155b, 181b) découpée dans la direction orthogonale à la direction de circulation des gaz d'échappement.

8. Véhicule (1, 50, 80, 120) selon l'une quelconque des revendications 1 à 7, dans lequel
le catalyseur principal de chambre de combustion unique (39, 116, 154, 180) est prévu dans l'élément de passage d'échappement de chambre de combustion unique (36, 77, 113, 151), et
au moins une partie de l'élément de passage d'échappement de chambre de combustion unique (36, 77, 113, 151), qui se trouve en amont dans la direction de circulation du catalyseur principal de chambre de combustion unique (39, 116, 154, 180), est formée d'un tuyau à parois multiples qui comporte un tuyau intérieur et au moins un tuyau extérieur recouvrant le tuyau intérieur.

9. Véhicule (1, 50, 80, 120) selon l'une quelconque des revendications 1 à 8, dans lequel
l'élément de passage d'échappement de chambre de combustion unique (36, 77, 113, 151) comporte un élément de passage pourvu du catalyseur (40b, 117b, 155b, 181b) dans lequel est prévu le catalyseur principal de chambre de combustion unique (39, 116, 154), 180), et
l'unité de moteur monocylindre à quatre temps (19, 60, 93, 132) comporte un protecteur de catalyseur qui recouvre au moins partiellement une surface extérieure de l'élément de passage pourvu du catalyseur (40b, 117b, 155b, 181b).

10. Véhicule (1, 50, 80, 120) selon l'une quelconque des revendications 1 à 9, dans lequel l'unité de moteur monocylindre à quatre temps (19, 60, 93, 132) comporte un sous-catalyseur amont de chambre de combustion unique (200) qui est prévu en amont dans la direction de circulation du catalyseur principal de chambre de combustion unique (39, 116, 154, 180) dans l'élément de passage d'échappement de cylindre à chambre de combustion unique (31, 72, 108, 146) ou de l'élément de passage d'échappement de chambre de combustion unique (36, 77, 113, 151), le sous-catalyseur amont de chambre de combustion unique (200) étant configuré pour purifier les gaz d'échappement.

11. Véhicule (1, 50, 80, 120) selon la revendication 10, dans lequel le détecteur d'oxygène amont de chambre de combustion unique (37, 78, 114, 152) est prévu en amont dans la direction de circulation du sous-catalyseur amont de chambre de combustion unique (200).

12. Véhicule (1, 50, 80, 120) selon l'une quelconque des revendications 1 à 11, dans lequel l'unité de moteur monocylindre à quatre temps (19, 60, 93, 132) comporte un sous-catalyseur aval de chambre de combustion qui est prévu en aval dans la direction de circulation du catalyseur principal de chambre de combustion unique (39, 116, 154, 180) dans l'élément de passage d'échappement de cylindre à chambre de combustion unique (31, 72, 108, 146) ou de l'élément de passage d'échappement de chambre de combustion unique (36, 77, 113, 151), le sous-catalyseur amont de chambre de combustion unique (200) étant configuré pour purifier les gaz d'échappement.

13. Véhicule (1, 50, 80, 120) selon la revendication 12, dans lequel
l'unité de moteur monocylindre à quatre temps (19, 60, 93, 132) comporte un détecteur d'oxygène aval de chambre de combustion unique (437) qui est prévu en aval dans la direction de circulation du catalyseur principal de chambre de combustion unique (39, 116, 154, 180) et en amont dans la direction de circulation du sous-catalyseur aval de chambre de combustion unique, et
le moyen de commande (45) est configuré pour traiter un signal du détecteur d'oxygène aval de chambre de combustion unique (437).

14. Véhicule (1, 50, 80, 120) selon la revendication 12, dans lequel
l'unité de moteur monocylindre à quatre temps (19, 60, 93, 132) comporte un détecteur d'oxygène aval de chambre de combustion unique (437) qui est prévu en aval dans la direction de circulation du sous-catalyseur aval de chambre de combustion unique, et
le moyen de commande (45) est configuré pour traiter un signal du détecteur d'oxygène aval de chambre de combustion unique (437).

15. Véhicule (1, 50, 80, 120) selon l'une quelconque des revendications 1 à 14, dans lequel
l'unité de moteur monocylindre à quatre temps (19, 60, 93, 132) comporte un détecteur d'oxygène aval de chambre de combustion unique (437) qui est prévu en aval dans la direction de circulation du catalyseur principal de chambre de combustion unique (39, 116, 154, 180) dans l'élément de passage d'échappement de cylindre à chambre de combustion unique (31, 72, 108, 146) ou dans l'élément de passage d'échappement de chambre de combustion unique (36, 77, 113, 151), et
le moyen de commande (45) est configuré pour traiter un signal du détecteur d'oxygène aval de chambre de combustion unique (437).

16. Véhicule (1, 50, 80, 120) selon l'une quelconque des revendications 13 à 15, dans lequel
le moyen de commande (45) est configuré pour déterminer la capacité de purification du catalyseur principal de chambre de combustion unique (39, 116, 154, 180) sur base du signal du détecteur d'oxygène aval de chambre de combustion unique (437), et
une unité de notification est configurée pour effectuer une notification lorsque le moyen de commande (45) détermine que la capacité de purification du catalyseur principal de chambre de combustion unique (39, 116, 154, 180) a été abaissée à un niveau prédéterminé.

17. Véhicule (1, 50, 80, 120) selon l'une quelconque des revendications 13 à 16, dans lequel
l'unité de moteur monocylindre à quatre temps (19, 60, 93, 132) comporte un moyen d'alimentation de carburant qui est configuré pour alimenter du carburant vers la chambre de combustion (29, 70, 106, 144), et
le moyen de commande (45) est configuré pour commander la quantité de carburant alimentée vers la chambre de combustion (29, 70, 106, 144) par le moyen d'alimentation de carburant sur base d'un signal du détecteur d'oxygène amont de chambre de combustion unique (37, 78, 114, 152) et d'un signal du détecteur d'oxygène aval de chambre de combustion unique (437).
